# EUROPEAN PATENT SPECIFICATION

(11) **EP 1 497 338 B1**
(45) Date of publication and mention of the grant of the patent: **01.09.2010**
(21) Application number: 03725054.5
(22) Date of filing: 17.04.2003
(51) Int. Cl.: C08F 2/52, C08J 7/00

(54) **CURING OF COATINGS INDUCED BY PLASMA**
PLASMAINDUZIERTE HÄRTUNG VON BESCHICHTUNGEN
DURCISSEMENT DE REVETEMENTS INDUIT PAR PLASMA

(30) Priority: 19.04.2002 EP 02008254
(43) Date of publication of application: 19.01.2005
(73) Proprietor: BASF SE, 67056 Ludwigshafen (DE)
(72) Inventor: MISEV, Ljubomir, CH-4226 Breitenbach (CH); VALET, Andreas, 79589 Binzen (DE); SIMMENDINGER, Peter, 4052 Basel (CH); JUNG, Tunja, 79618 Rheinfelden-Herten (DE)
(86) International application number: PCT/EP2003/004036
(87) International publication number: WO 2003/089479

(56) References cited:
- EP-A- 0 095 974
- WO-A-93/25300
- DE-A- 19 953 433
- GB-A- 1 412 211
- GB-A- 1 564 541
- US-A- 3 939 126
- US-A- 3 943 103
- US-A- 4 288 479

## Description

The invention relates to a method of curing polymerisable compositions, especially surface coatings, by means of plasma.

JP 08253733-A describes coatings on conductive polymers, such as polypyrrole or polyaniline, which coatings promote the conduction of lithium ions. Such coatings in the form of thin films comprise compounds having ethoxy groups and free-radical-polymerisable double bonds, e.g. tris(2-methoxyethoxy)vinylsilane. The polymerisation of the films is effected in a plasma. US 5 211 993 discloses the preparation of a chromatographically active material by coating of a substrate with a monomer and polymerisation by means of the action of plasma, layer thicknesses of 10 A (1 nm) being applied. US 4 885 077 discloses the preparation of ion-permeable hydrophilic membranes, the polymerisation of a monomer (acrylic acid) applied to a porous membrane being effected by noble gas plasma treatment. JP 2045634-A describes a method of improving the adhesiveness of polyolefin moulds by the application of an unsaturated epoxy compound and treatment with plasma. US 2003/0003407 describes a process wherein a photoresist is treated with a neon-containing plasma. US 3 943 103 and US 3 939 126 disclose the curing of planar coatings by means of argon arc lamps. EP 095 974 describes the curing of coatings on planar substrates.
The polymerisation and copolymerisation of fluorinated acylates on glass plates is described in Polymer 41 (2000), 3159-3165.
JP 08188663-A describes the corona treatment of a substrate, subsequent application of a monomer in order to obtain water-repellent properties and subsequent plasma treatment with helium and a fluorine-containing gas, so that a fluorine-containing coating is created on the substrate. In none of the methods described above are photoinitiators used or coatings having high layer thicknesses produced.
WO 00/24527 describes the plasma treatment of a substrate to be coated, subsequent grafting-on of an ethylenically unsaturated photoinitiator, and subsequent coating with a conventional UV-curable composition and curing thereof by means of irradiation with UV light. A similar process is known from WO 01/58971, the ethylenically unsaturated photoinitiator to be grafted on being replaced in that case by an ethylenically unsaturated electron-donor or H-donor.

There is a need in the art, especially in the field of coatings and paints, for efficient curing methods for polymerisable compositions, especially coatings on complex, predominantly metallic substrates, the geometry of which has undercuts and overshadowed areas.
It has now been found that the curing of such formulations, especially of surface coatings, by plasma treatment brings advantages.

The invention therefore relates to a method of curing
a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
   a mixture of components (a) and (b), or
   a mixture of components (a) and (c); and
(d) at least one photolatent compound that is activatable by plasma discharge;
wherein
the composition is applied to a three-dimensional substrate and
the curing is carried out in a plasma discharge chamber.

The invention relates also to a method of curing
a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
   a mixture of components (a) and (b), or
   a mixture of components (a) and (c); and
(d) at least one photolatent compound that is activatable by plasma discharge; and
(e) at least one light stabiliser compound or UV absorber compound;
wherein
the curing is carried out in a plasma discharge chamber.

The unsaturated compounds may contain one or more olefinic double bonds. They may be low molecular weight (monomeric) or higher molecular weight (oligomeric). Examples of monomers having a double bond are alkyl and hydroxyalkyl acrylates and methacrylates, e.g. methyl, ethyl, butyl, 2-ethylhexyl and 2-hydroxyethyl acrylate, isobornyl acrylate and methyl and ethyl methacrylate. Also of interest are resins modified with silicon or fluorine, e.g. silicone acrylates. Further examples are acrylonitrile, acrylamide, methacrylamide, N-substituted (meth)acrylamides, vinyl esters, such as vinyl acetate, vinyl ethers, such as isobutyl vinyl ether, styrene, alkyl- and halo-styrenes, N-vinylpyrrolidone, vinyl chloride and vinylidene chloride.

Examples of monomers having a plurality of double bonds are ethylene glycol diacrylate, propylene glycol diacrylate, neopentyl glycol diacrylate, hexamethylene glycol diacrylate and bisphenol A diacrylate, 4,4'-bis(2-acryloyloxyethoxy)diphenylpropane, trimethylolpropane triacrylate, pentaerythritol triacrylate and pentaerythritol tetraacrylate, vinyl acrylate, divinylbenzene, divinyl succinate, diallyl phthalate, triallyl phosphate, triallyl isocyanurate and tris(2-acryloylethyl)isocyanurate.

Examples of higher molecular weight (oligomeric) polyunsaturated compounds are acrylated epoxy resins, acrylated or vinyl-ether- or epoxy-group-containing polyesters, polyurethanes and polyethers. Further examples of unsaturated oligomers are unsaturated polyester resins, which are usually produced from maleic acid, phthalic acid and one or more diols and have molecular weights of about from 500 to 3000. In addition it is also possible to use vinyl ether monomers and oligomers, and also maleate-terminated oligomers having polyester, polyurethane, polyether, polyvinyl ether and epoxide main chains. Combinations of vinyl-ether-group-carrying oligomers and polymers, as described in WO 90/01512, are especially suitable, but copolymers of monomers functionalised with maleic acid and vinyl ether also come into consideration. Such unsaturated oligomers can also be termed prepolymers.

Especially suitable are, for example, esters of ethylenically unsaturated carboxylic acids and polyols or polyepoxides, and polymers having ethylenically unsaturated groups in the chain or in side groups, e.g. unsaturated polyesters, polyamides and polyurethanes and copolymers thereof, alkyd resins, polybutadiene and butadiene copolymers, polyisoprene and isoprene copolymers, polymers and copolymers having (meth)acrylic groups in side chains, and also mixtures of one or more such polymers.

Examples of unsaturated carboxylic acids are acrylic acid, methacrylic acid, crotonic acid, itaconic acid, cinnamic acid and unsaturated fatty acids, such as linolenic acid and oleic acid. Acrylic and methacrylic acid are preferred.

Suitable polyols are aromatic and especially aliphatic and cycloaliphatic polyols. Examples of aromatic polyols are hydroquinone, 4,4'-dihydroxydiphenyl, 2,2-di(4-hydroxyphenyl)propane, and novolaks and resols. Examples of polyepoxides are those based on the said polyols, especially the aromatic polyols and epichlorohydrin. Also suitable as polyols are polymers and copolymers that contain hydroxyl groups in the polymer chain or in side groups, e.g. polyvinyl alcohol and copolymers thereof or polymethacrylic acid hydroxyalkyl esters or copolymers thereof. Further suitable polyols are oligoesters having hydroxyl terminal groups.

Examples of aliphatic and cycloaliphatic polyols include alkylenediols having preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols having molecular weights of preferably from 200 to 1500, 1,3-cyclopentanediol, 1,2-, 1,3- or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol and sorbitol.

The polyols may be partially or fully esterified by one or by different unsaturated carboxylic acid(s), it being possible for the free hydroxyl groups in partial esters to be modified, for example etherified, or esterified by other carboxylic acids.

Examples of esters are:
trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetramethacrylate, sorbitol pentaacrylate, sorbitol hexaacrylate, oligoester acrylates and methacrylates, glycerol di- and tri-acrylate, 1,4-cyclohexane diacrylate, bisacrylates and bismethacrylates of polyethylene glycol having a molecular weight of from 200 to 1500, and mixtures thereof.

Also suitable as component (a) are the amides of identical or different unsaturated carboxylic acids and aromatic, cycloaliphatic and aliphatic polyamines having preferably from 2 to 6, especially from 2 to 4, amino groups. Examples of such polyamines are ethylenediamine, 1,2- or 1,3-propylenediamine, 1,2-, 1,3- or 1,4-butylenediamine, 1,5-pentylenediamine, 1,6-hexylenediamine, octylenediamine, dodecylenediamine, 1,4-diaminocyclohexane, isophoronediamine, phenylenediamine, bisphenylenediamine, di-β-aminoethyl ether, diethylenetriamine, triethylenetetramine and di(β-aminoethoxy)- and di(β-aminopropoxy)-ethane. Further suitable polyamines are polymers and copolymers which may have additional amino groups in the side chain and oligoamides having amino terminal groups. Examples of such unsaturated amides are: methylene bisacrylamide, 1,6-hexamethylene bisacrylamide, diethylenetriamine trismethacrylamide, bis(methacrylamidopropoxy)ethane, β-methacrylamidoethyl methacrylate and N-[(β-hydroxyethoxy)ethyl]-acrylamide.

Suitable unsaturated polyesters and polyamides are derived, for example, from maleic acid and diols or diamines. The maleic acid may have been partially replaced by other dicarboxylic acids. They may be used together with ethylenically unsaturated comonomers, e.g. styrene. The polyesters and polyamides may also be derived from dicarboxylic acids and ethylenically unsaturated diols or diamines, especially from those having longer chains of e.g. from 6 to 20 carbon atoms. Examples of polyurethanes are those composed of saturated diisocyanates and unsaturated diols or unsaturated diisocyanates and saturated diols.

Polybutadiene and polyisoprene and copolymers thereof are known. Suitable comonomers include, for example, olefins, such as ethylene, propene, butene and hexene, (meth)acrylates, acrylonitrile, styrene and vinyl chloride. Polymers having (meth)acrylate groups in the side chain are likewise known. Examples are reaction products of novolak-based epoxy resins with (meth)acrylic acid; homo- or co-polymers of vinyl alcohol or hydroxyalkyl derivatives thereof that have been esterified with (meth)acrylic acid; and homo- and co-polymers of (meth)acrylates that have been esterified with hydroxyalkyl (meth)acrylates. (The term "(meth)acrylate" in the context of this Application denotes both "acrylate" and "methacrylate").

Suitable components (a) are also acrylates that have been modified by reaction with primary or secondary amines, as described e.g. in US 3 844 916, in EP 280 222, in US 5 482 649 or in US 5 734 002. Such amine-modified acrylates are also known as aminoacrylates. Aminoacrylates are obtainable e.g. from UCB Chemicals under the name ^{RTM}EBECRYL 80, ^{RTM}EBECRYL 81, ^{RTM}EBECRYL 83, ^{RTM}EBECRYL 7100, from BASF under the name ^{RTM}Laromer PO 83F, ^{RTM}Laromer PO 84F, ^{RTM}Laromer PO 94F, from Cognis under the name ^{RTM}PHOTOMER 4775 F, ^{RTM}PHOTOMER 4967 F or from Cray Valley under the name ^{RTM}CN5O1, ^{RTM}CN5O3, ^{RTM}CN550.

The photopolymerisable compounds can be used on their own or in any desired mixtures. Preferably mixtures of polyol (meth)acrylates are used.

Binders may also be added to the compositions according to the invention, this being particularly advantageous when the photopolymerisable compounds are liquid or viscous substances. The amount of binder may be, for example, from 5 to 95 % by weight, preferably from 10 to 90 % by weight and especially from 40 to 90 % by weight, based on total solids. The choice of binder is made in accordance with the field of use and the properties required therefor, such as developability in aqueous and organic solvent systems, adhesion to substrates and sensitivity to oxygen.

Suitable binders are, for example, polymers having a molecular weight of approximately from 5000 to 2 000 000, preferably from 10 000 to 1 000 000. Examples are: homo- and copolymers of acrylates and methacrylates, e.g. copolymers of methyl methacrylate/ethyl acrylate/methacrylic acid, poly(methacrylic acid alkyl esters), poly(acrylic acid alkyl esters); cellulose esters and ethers, such as cellulose acetate, cellulose acetate butyrate, methylcellulose, ethylcellulose; polyvinylbutyral, polyvinylformal, cyclised rubber, polyethers such as polyethylene oxide, polypropylene oxide, polytetrahydrofuran; polystyrene, polycarbonate, polyurethane, chlorinated polyolefins, polyvinyl chloride, copolymers of vinyl chloride/- vinylidene chloride, copolymers of vinylidene chloride with acrylonitrile, methyl methacrylate and vinyl acetate, polyvinyl acetate, copoly(ethylene/vinyl acetate), polymers such as polycaprolactam and poly(hexamethylene adipamide), polyesters such as poly(ethylene glycol terephthalate) and poly(hexamethylene glycol succinate).

The unsaturated compounds can also be used in admixture with non-photopolymerisable film-forming components. These may be, for example, physically drying polymers or solutions thereof in organic solvents, for example nitrocellulose or cellulose acetobutyrate, but they may also be chemically or thermally curable resins, for example polyisocyanates, polyepoxides or melamine resins, for example two-component systems of a (poly)alcohol and/or (poly)thiol and a (poly)isocyanate. The concomitant use of thermally curable resins is important for use in so-called hybrid systems, which are photopolymerised in a first step and crosslinked by thermal after-treatment in a second step. In said systems curing can also be effected by a first thermal step and subsquent UV-irradiation, as well as simultaneous thermal treatment and irradiation.

As component (a) there also come into consideration, for example, ethylenically unsaturated photopolymerisable compounds emulsified or dissolved in water. Examples of such systems can be found in EP 12 339, EP 41 125 and DE 2 936 039.

The compositions according to the invention comprise as component (b) e.g. resins and compounds that can be polymerised cationically by alkyl- or aryl-containing cations or by protons. Examples thereof are cyclic ethers, especially epoxides and oxetanes, and also vinyl ethers and hydroxyl-containing compounds. Lactone compounds and cyclic thioethers and also vinyl thioethers can also be used. Further examples are aminoplasts or phenolic resol resins. They are especially melamine, urea, epoxy, phenol, acrylic, polyester and alkyd resins, but more especially mixtures of acrylic, polyester or alkyd resins with a melamine resin. Also included are modified surface-coating resins, e.g. acrylic-modified polyester and alkyd resins. Examples of individual types of resins that are included under the terms acrylic, polyester and alkyd resins are described, for example, in Wagner, Sarx/Lackkunstharze (Munich, 1971), pages 86 to 123 and 229 to 238, or in Ullmann/Encyclopddie der techn. Chemie, 4th edition, Vol. 15 (1978), pages 613 to 628, or Ullmann's Encyclopedia of Industrial Chemistry, Verlag Chemie, 1991, Vol. 18, 360 ff., Vol. A19, 371 ff.. The component preferably contains an amino resin (especially when the composition is used as a surface coating). Examples thereof are etherified or non-etherified melamine, urea, guanidine or biuret resins. Acid catalysis is especially important for the curing of surface coatings that contain etherified amino resins, e.g. methylated or butylated melamine resins (N-methoxymethyl- or N-butoxymethyl-melamine) or methylated/butylated glycol urils.

It is also possible, for example, to use all customary epoxides, such as aromatic, aliphatic or cycloaliphatic epoxy resins. They are compounds having at least one epoxy group, preferably at least two epoxy groups, in the molecule. Examples thereof are the glycidyl ethers and β-methylglycidyl ethers of aliphatic or cycloaliphatic diols or polyols, e.g. those of ethylene glycol, propane-1,2-diol, propane-1,3-diol, butane-1,4-diol, diethylene glycol, polyethylene glycol, polypropylene glycol, glycerol, trimethylolpropane or 1,4-dimethylolcyclohexane or of 2,2-bis(4-hydroxycyclohexyl)propane and N,N-bis(2-hydroxyethyl)aniline; the glycidyl ethers of di- and poly-phenols, for example of resorcinol, of 4,4'-dihydroxyphenyl-2,2-propane, of novolaks or of 1,1,2,2-tetrakis(4-hydroxyphenyl)ethane. Examples are phenyl glycidyl ether, p-tert-butyl glycidyl ether, o-cresyl glycidyl ether, polytetrahydrofuran glycidyl ethers, n-butyl glycidyl ether, 2-ethylhexyl glycidyl ether, C_{12/15}alkyl glycidyl ethers, cyclohexanedimethanol diglycidyl ethers. Further examples are N-glycidyl compounds, e.g. the glycidyl compounds of ethyleneurea, 1,3-propyleneurea or 5-dimethylhydantoin or of 4,4'-methylene-5,5'-tetramethyldihydantoin, or compounds such as triglycidyl isocyanurate.

Further examples of glycidyl ether components (b) used in the method according to the invention are glycidyl ethers of monovalent phenols obtained by reaction of polyvalent phenols with an excess of chlorohydrin, for example epichlorohydrin (e.g. glycidyl ethers of 2,2-bis(2,3-epoxypropoxyphenol)propane. Further examples of glycidyl ether epoxides that can be used in the context of the present invention are described e.g. in US 3 018 262 and in "Handbook of Epoxy Resins" by Lee and Neville, McGraw-Hill Book Co., New York (1967).

A large number of commercially available glycidyl ether epoxides are suitable as component (b), for example glycidyl methacrylate, diglycidyl ethers of bisphenol A, e.g. those available under the trade names EPON 828, EPON 825, EPON 1004 and EPON 1010 from Shell; DER-331, DER-332 and DER-334 from Dow Chemical; 1,4-butanediol diglycidyl ether of phenolformaldehyde novolak, e.g. DEN-431, DEN-438 from Dow Chemical; and resorcinol diglycidyl ether; alkyl glycidyl ethers, for example C₈-C₁₀glycidyl ethers, e.g. HELOXY Modifier 7, C₁₂-C₁₄glycidyl ethers, e.g. HELOXY Modifier 8, butyl glycidyl ether, e.g. HELOXY Modifier 61, cresyl glycidyl ether, e.g. HELOXY Modifier 62, p-tert-butylphenyl glycidyl ether, e.g. HELOXY Modifier 65, polyfunctional glycidyl ethers, for example diglycidyl ether of 1,4-butanediol, e.g. HELOXY Modifier 67, diglycidyl ether of neopentyl glycol, e.g. HELOXY Modifier 68, diglycidyl ether of cyclohexanedimethanol, e.g. HELOXY Modifier 107, trimethylolethane triglycidyl ether, e.g. HELOXY Modifier 44, trimethylolpropanetriglycidyl ether, e.g. HELOXY Modifer 48, polyglycidyl ethers of aliphatic polyols, e.g. HELOXY Modifier 84 (all HELOXY glycidyl ethers are available from Shell).
Also suitable are glycidyl ethers that contain copolymers of acrylic esters, e.g. styrene/glycidyl methacrylate or methyl methacrylate/glycidyl acrylate. Examples are 1:1 styrene/glycidyl methacrylate, 1:1 methyl methacrylate/glycidyl acrylate, 62.5:24:13.5 methyl methacrylate/ethyl acrylate/glycidyl methacrylate.
The polymers of the glycidyl ether compounds may, for example, also contain other functionalities, provided that they do not impair the cationic curing.
Other glycidyl ether compounds suitable as component (b) and commercially available from Vantico are polyfunctional liquid and solid novolak glycidyl ether resins, e.g. PY 307, EPN 1179, EPN 1180, EPN 1182 and ECN 9699.
It will be understood that it is also possible to use as component (b) mixtures of different glycidyl ether compounds.

Glycidyl ethers suitable for component (b) are, for example, compounds of formula XX 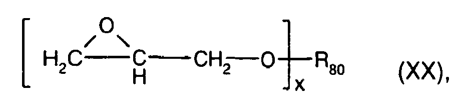 wherein
x is a number from 1 to 6; and
R₈₀ is a monovalent to hexavalent alkyl or aryl radical.

Preference is given, for example, to glycidyl ether compounds of formula XX wherein
x is a number 1, 2 or 3; and
R₈₀, when x = 1, is unsubstituted or C₁-C₁₂alkyl-substituted phenyl, naphthyl, anthracyl, biphenylyl, C₁-C₂₀alkyl, or C₂-C₂₀alkyl interrupted by one or more oxygen atoms, or
R₈₀, when x = 2, is 1,3-phenylene, 1,4-phenylene, C₆-C₁₀cycloalkylene, unsubstituted or halo-substituted C₁-C₄₀alkylene, C₂-C₄₀alkylene interrupted by one or more oxygen atoms, or a group 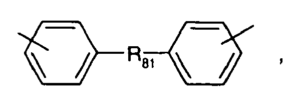 or
R₈₀, when x = 3, is a radical 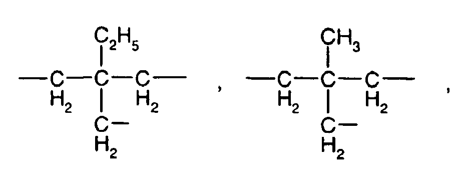 or 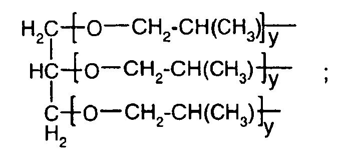
y is a number from 1 to 10; and
R₈₁ is C₁-C₂₀alkylene, oxygen or

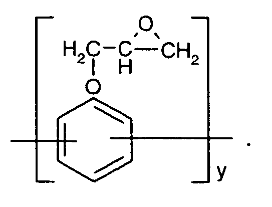

The glycidyl ethers are e.g. compounds of formula XXa 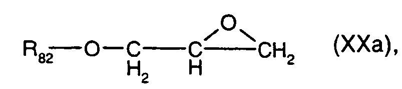 wherein
R₈₂ is unsubstituted or C₁-C₁₂alkyl-substituted phenyl; naphthyl; anthracyl; biphenylyl; C₁-C₂₀alkyl, C₂-C₂₀alkyl interrupted by one or more oxygen atoms; or a group of the formula 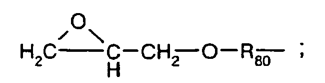
R₈₀ is phenylene, C₁-C₂₀alkylene, C₂-C₂₀alkylene interrupted by one or more oxygen atoms, or a group 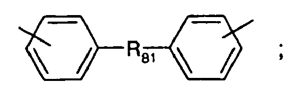 and
R₈₁ is C₁-C₂₀alkylene or oxygen.

Preference is given to the glycidyl ether compounds of formula XXb 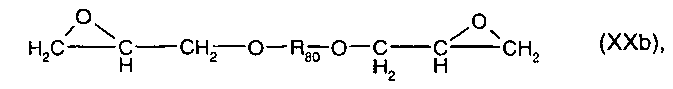 wherein
R₈₀ is phenylene, C₁-C₂₀alkylene, C₂-C₂₀alkylene interrupted by one or more oxygen atoms, or a group 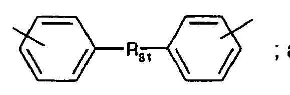 and
R₈₁ is C₁-C₂₀alkylene or oxygen.

Further examples of component (b) are polyglycidyl ethers and poly(P-methylglycidyl) ethers obtainable by reaction of a compound containing at least two free alcoholic and/or phenolic hydroxyl groups per molecule with the corresponding epichlorohydrin under alkaline conditions, or alternatively in the presence of an acid catalyst with subsequent alkali treatment, it also being possible to use mixtures of different polyols.
Such ethers can be prepared with poly(epichlorohydrin) from acyclic alcohols, such as ethylene glycol, diethylene glycol and higher poly(oxyethylene) glycols, propane-1,2-diol and poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylolpropane, pentaerythritol and sorbitol, from cycloaliphatic alcohols, such as resorcitol, quinitol, bis(4-hydroxycyclohexyl)methane, 2,2-bis(4-hydroxycyclohexyl)propane and 1,1-bis-(hydroxymethyl)cyclohex-3-ene, and from alcohols having aromatic nuclei, such as N,N-bis(2-hydroxyethyl)aniline and p,p'-bis(2-hydroxyethylamino)diphenylmethane. They can also be prepared from mononuclear phenols, such as resorcinol and hydroquinone, and from polynuclear phenols, such as bis(4-hydroxyphenyl)methane, 4,4-dihydroxydiphenyl, bis(4-hydroxyphenyl)sulfone, 1,1,2,2-tetrakis(4-hydroxyphenyl)ethane, 2,2-bis(4-hydroxyphenyl)-propane (bisphenol A) and 2,2-bis(3,5-dibromo-4-hydroxyphenyl)propane.
Further hydroxy compounds suitable for the preparation of polyglycidyl ethers and poly-(β-methylglycidyl) ethers are the novolaks obtainable by condensation of aldehydes, such as formaldehyde, acetaldehyde, chloral and furfural, and phenols, for example phenol, o-cresol, m-cresol, p-cresol, 3,5-dimethylphenol, 4-chlorophenol and 4-tert-butylphenol.

Poly(N-glycidyl) compounds can be obtained, for example, by dehydrochlorination of the reaction products of epichlorohydrin with amines containing at least two amine hydrogen atoms, such as aniline, n-butylamine, bis(4-aminophenyl)methane, bis(4-aminophenyl)-propane, bis(4-methylaminophenyl)methane and bis(4-aminophenyl) ether, sulfone and sulfoxide. Further suitable poly(N-glycidyl) compounds are triglycidyl isocyanurate and N,N'-diglycidyl derivatives of cyclic alkyleneureas, such as ethyleneurea and 1,3-propyleneurea, and hydantoins, such as 5,5-dimethylhydantoin.

Poly(S-glycidyl) compounds are also suitable. Examples thereof are the di-S-glycidyl derivatives of dithiols, such as ethane-1,2-dithiol and bis(4-mercaptomethylphenyl) ether.

Also coming into consideration as component (b) are epoxy resins wherein the glycidyl groups or β-methylglycidyl groups are bonded to different kinds of hetero atoms, for example the N,N,O-triglycidyl derivative of 4-aminophenol, the glycidyl ether glycidyl ester of salicylic acid or p-hydroxybenzoic acid, N-glycidyl-N'-(2-glycidyloxypropyl)-5,5-dimethylhydantoin and 2-glycidyloxy-1,3-bis(5,5-dimethyl-1-glycidylhydantoin-3-yl)propane.

Diglycidyl ethers of bisphenols are preferred. Examples thereof are bisphenol A diglycidyl ether, e.g. ARALDIT GY 250 from Vantico, bisphenol F diglycidyl ether and bisphenol S diglycidyl ether. Special preference is given to bisphenol A diglycidyl ether.

Further glycidyl compounds of technical importance and suitable for use in component (b) are the glycidyl esters of carboxylic acids, especially di- and poly-carboxylic acids. Examples thereof are the glycidyl esters of succinic acid, adipic acid, azelaic acid, sebacic acid, phthalic acid, terephthalic acid, tetra- and hexa-hydrophthalic acid, isophthalic acid or trimellitic acid, or of dimerised fatty acids.

Examples of polyepoxides that are not glycidyl compounds are the epoxides of vinylcyclohexane and dicyclopentadiene, 3-(3',4'-epoxycyclohexyl)-8,9-epoxy-2,4-dioxaspiro[5.5]-undecane, the 3',4'-epoxycyclohexylmethyl ester of 3,4-epoxycyclohexanecarboxylic acid, (3,4-epoxycyclohexyl-methyl-3,4-epoxycyclohexanecarboxylate), butadiene diepoxide or isoprene diepoxide, epoxidised linoleic acid derivatives and epoxidised polybutadiene.

Further suitable epoxy compounds are e.g. limonene monoxide, epoxidised soybean oil, bisphenol A and bisphenol F epoxy resins, e.g. Araldit® GY 250 (A), Araldit® GY 282 (F), Araldit® GY 285 (F) (Vantico), and also photocrosslinkable siloxanes that contain epoxy groups.

Further suitable cationically polymerisable or crosslinkable components (b) can be found e.g. in US Patents 3 117 099, 4 299 938 and 4 339 567.

From the group of aliphatic epoxides there are suitable e.g. especially the monofunctional α-olefin epoxides having an unbranched chain consisting of 10, 12, 14 or 16 carbon atoms.

Because a large number of different epoxy compounds are commercially available nowadays, the properties of the binder can vary widely. One possible variation, for example depending upon the intended use of the composition, is the use of mixtures of different epoxy compounds and the addition of flexibilisers and reactive diluents.

The epoxy resins can be diluted with a solvent to facilitate application, for example when application is effected by spraying, but it is preferable to use the epoxy compound in the solventless state. Resins that are viscous to solid at room temperature can be applied, for example, in the hot state.

Also suitable as component (b) are all customary vinyl ethers, such as aromatic, aliphatic or cycloaliphatic vinyl ethers and also silicon-containing vinyl ethers. They are compounds having at least one vinyl ether group, preferably at least two vinyl ether groups, in the molecule. Examples of vinyl ethers that are suitable for use in the method according to the invention are triethylene glycol divinyl ether, 1,4-cyclohexanedimethanol divinyl ether, 4-hydroxybutyl vinyl ether, the propenyl ether of propylene carbonate, dodecylvinyl ether, tert-butyl vinyl ether, tert-amyl vinyl ether, cyclohexyl vinyl ether, 2-ethylhexyl vinyl ether, ethylene glycol monovinyl ether, butanediol monovinyl ether, hexanediol monovinyl ether, 1,4-cyclohexanedimethanol monovinyl ether, diethylene glycol monovinyl ether, ethylene glycol divinyl ether, ethylene glycol butylvinyl ether, butanediol-1,4-divinyl ether, hexanediol divinyl ether, diethylene glycol divinyl ether, triethylene glycol divinyl ether, triethylene glycol methylvinyl ether, tetraethylene glycol divinyl ether, Pluriol-E-200 divinyl ether, polytetrahydrofuran divinyl ether 290, trimethylolpropane trivinyl ether, dipropylene glycol divinyl ether, octadecylvinyl ether, (4-cyclohexyl-methyleneoxyethene)glutaric acid methyl ester and (4-butyloxyethene)isophthalic acid ester.

Examples of hydroxyl-containing compounds are polyester polyols, e.g. polycaprolactones or polyester adipate polyols, glycols and polyether polyols, castor oil, hydroxy-functional vinyl and acrylic resins, cellulose esters, e.g. cellulose acetate butyrate, and phenoxy resins.

Further suitable cationically curable formulations can be found e.g. in EP 119 425.

Preferred as component (b) are cycloaliphatic epoxides, or epoxides based on bisphenol A.

The base-catalysed polymerisation, addition, condensation or substituion reaction can be carried out with low molecular weight compounds (monomers), with oligomers, with polymeric compounds or with a mixture of such compounds. Examples of reactions that can be carried out either with monomers or with oligomers/polymers using the method according to the invention are the Knoevenagel reaction or Michael addition. The presence of further components may be advantageous or necessary for the reaction. This is disclosed, for example, in EP 1 092 757.

Of special importance are compositions wherein component (c) is an anionically polymerisable or crosslinkable organic material.
The anionically polymerisable or crosslinkable organic material [component (c)] can be in the form of mono- or poly-functional monomers, oligomers or polymers.
Especially preferred oligomeric/polymeric systems (c) are binders customary in the coating industry.

Two-component systems of an α,β-ethylenically unsaturated carbonyl compound and a polymer containing activated CH₂ groups, the activated CH₂ groups being present either in the main chain or in the side chain or in both, as described, for example, in EP 161 697 for (poly)malonate groups. The malonate group can in a polyurethane, polyester, polyacrylate, epoxy resin, polyamide or polyvinyl polymer be bonded either in the main chain or in a side chain. The α,β-ethylenically unsaturated carbonyl compound used may be any double bond activated by a carbonyl group. Examples are esters or amides of acrylic acid or methacrylic acid. Additional hydroxyl groups may also be present in the ester groups. Di- and tri-esters are also possible. Typical examples are hexanediol diacrylate and trimethylolpropane triacrylate. Instead of acrylic acid it is also possible to use other acids and esters or amides thereof, for example crotonic acid or cinnamic acid.
Other compounds having activated CH₂ groups are (poly)acetoacetates and (poly)cyanoacetates.
Further examples are two-component systems of a polymer containing activated CH₂ groups, the activated CH₂ groups being present either in the main chain or in the side chain or in both, or a polymer containing activated CH₂ groups, such as (poly)acetoacetates and (poly)cyanoacetates, and a polyaldehyde crosslinking agent, for example terephthalic aldehyde. Such systems are described, for example, in Urankar et al., Polym. Prepr. (1994), 35, 933.

The components of the system react with one another, with base catalysis, at room temperature and form a crosslinked coating system suitable for many applications. By virtue of its already good resistance to weathering, the system is also suitable, for example, for outdoor applications and can, if necessary, be additionally stabilised by UV absorbers and other light stabilisers.

Also coming into consideration as component (c) in the compositions according to the invention are epoxy systems. Epoxy resins suitable for the preparation of curable mixtures according to the invention having epoxy resins as component (c) are those customary in epoxy resin technology. Examples of such epoxy resins are described above under component (b).
Suitable examples are especially polyglycidyl and poly(β-methylglycidyl) esters, obtainable by reaction of a compound having at least two carboxyl groups in the molecule and epichlorohydrin and β-methylepichlorohydrin, respectively. The reaction is advantageously carried out in the presence of bases.
An aliphatic polycarboxylic acid may be used as the compound having at least two carboxyl groups in the molecule. Examples of such polycarboxylic acids are oxalic acid, succinic acid, glutaric acid, adipic acid, pimelic acid, suberic acid, azelaic acid and dimerised or trimerised linoleic acid. It is also possible, however, to use cycloaliphatic polycarboxylic acids, for example tetrahydrophthalic acid, 4-methyltetrahydrophthalic acid, hexahydrophthalic acid or 4-methylhexahydrophthalic acid. Aromatic polycarboxylic acids, for example phthalic acid, isophthalic acid or terephthalic acid, may also be used.

Polyglycidyl or poly(P-methylglycidyl) ethers, obtainable by reaction of a compound having at least two free alcoholic hydroxy groups and/or phenolic hydroxy groups with epichlorohydrin or β-methylepichlorohydrin under alkaline conditions or in the presence of an acid catalyst with subsequent alkali treatment.
The glycidyl ethers of this kind are derived, for example, from acyclic alcohols, such as ethylene glycol, diethylene glycol or higher poly(oxyethylene) glycols, propane-1,2-diol or poly(oxypropylene) glycols, propane-1,3-diol, butane-1,4-diol, 1, poly(oxytetramethylene) glycols, pentane-1,5-diol, hexane-1,6-diol, hexane-2,4,6-triol, glycerol, 1,1,1-trimethylolpropane, pentaerythritol, sorbitol, and also from polyepichlorohydrins. They may also, however, be derived e.g. from cycloaliphatic alcohols, such as 1,4-cyclohexanedimethanol, bis(4-hydroxycyclohexyl)methane or 2,2-bis(4-hydroxycyclohexyl)propane, or they have aromatic nuclei, such as N,N-bis(2-hydroxyethyl)aniline or p,p'-bis(2-hydroxyethylamino)-diphenylmethane. The glycidyl ethers can also be derived from mononuclear phenols, for example resorcinol or hydroquinone, or they are based on polynuclear phenols, for example bis(4-hydroxyphenyl)methane, 4,4'-dihydroxybiphenyl, bis(4-hydroxyphenyl)sulfone, 1,1,2,2-tetrakis(4-hydroxyphenyl)ethane, 2,2-bis(4-hydroxyphenyl)propane, 2,2-bis(3,5-dibromo-4-hydroxyphenyl)propane, and on novolaks, obtainable by condensation of aldehydes, such as formaldehyde, acetaldehyde, chloral or furfuraldehyde, with phenols, such as phenol, or with phenols that are substituted in the nucleus by chlorine atoms or by C₁-C₉alkyl groups, e.g. 4-chlorophenol, 2-methylphenol or 4-tert-butylphenol, or by condensation with bisphenols, such as those of the above-mentioned kind.
Poly(N-glycidyl) compounds, obtainable by dehydrochlorination of the reaction products of epichlorohydrin with amines containing at least two amine hydrogen atoms. Such amines are, for example, aniline, n-butylamine, bis(4-aminophenyl)methane, m-xylylenediamine or bis(4-methylaminophenyl)methane.
The poly(N-glycidyl) compounds also include, however, triglycidyl isocyanurate, N,N'-diglycidyl derivatives of cycloalkyleneureas, such as ethyleneurea or 1,3-propyleneurea, and diglycidyl derivatives of hydantoins, such as of 5,5-dimethylhydantoin.
Poly(S-glycidyl) compounds, for example di-S-glycidyl derivatives, derived from dithiols, e.g. ethane-1,2-dithiol or bis(4-mercaptomethylphenyl) ether.
Cycloaliphatic epoxy resins, for example bis(2,3-epoxycyclopentyl) ether, 2,3-epoxycyclopentylglycidyl ether, 1,2-bis(2,3-epoxycyclopentyloxy)ethane or 3,4-epoxycyclohexylmethyl-3',4'-epoxycyclohexanecarboxylate.

It is also possible, however, to use epoxy resins wherein the 1,2-epoxy groups are bonded to different hetero atoms or functional groups; such compounds include, for example, the N,N,O-triglycidyl derivative of 4-aminophenol, the glycidyl ether glycidyl ester of salicylic acid, N-glycidyl-N'-(2-glycidyloxypropyl)-5,5-dimethy[hydantoin and 2-glycidyloxy-1,3-bis(5,5-dimethyl-1-glycidylhydantoin-3-yl)propane.

It is also possible to use mixtures of epoxy resins as component (c). The invention therefore also relates to compositions comprising an epoxy resin or a mixture of different epoxy resins as component (c).

Component (c) may also comprise compounds that are converted into a different form by the action of bases. They are, for example, compounds that, when base-catalysed, e.g. by removal of protecting groups, change their solubility in suitable solvents As will be seen from the above description, some monomers, oligomers and polymers are suitable as component (a), (b) or (c), because they are both free-radical-crosslinkable and acid- or base-crosslinkable. For example, the two-component systems (2K systems) described above as base-catalysed curable components can also be crosslinked by the addition of a free-radical-forming photoinitiator.

The invention relates to a method as described above wherein the composition comprises as polymerisable component solely free-radical-polymerisable compounds (a).

In addition, the invention relates to a method wherein the free-radical-polymerisable compound comprises at least one mono-, di-, tri- or tetra-functional acrylate monomer and/or at least one mono-, di-, tri- or tetra-functional acrylate-functional oligomer.

Another method according to the invention is a method wherein the composition comprises as polymerisable component solely cationically polymerisable or crosslinkable compounds (b).

The invention relates also to a method wherein the composition comprises as polymerisable component a mixture of at least one free-radical-polymerisable compound (a) and at least one cationically polymerisable compound (b).

The two components (a) and (b) may be discrete compounds, but the reactive groups necessary for the free-radical or cationic polymerisation can also be located in the same molecule. The invention therefore relates also to a method wherein there are used, as components (a) and (b) combined, compounds that contain both a free-radical-polymerisable group and a cationically polymerisable group in one molecule. Examples of such compounds are acrylated epoxides or, for example, combinations of hydroxy-functionalised acrylates and isocyanate-functionalised acrylates.

Examples of photolatent compounds (d) that are activatable by plasma discharge are photoinitiators such as free-radical photoinitiators, photolatent acids and photolatent bases.

Examples of free-radical-forming photolatent compounds are camphorquinone, benzophenone and derivatives thereof, acetophenone, and also acetophenone derivatives, for example α-hydroxyacetophenones, e.g. α-hydroxycycloalkylphenyl ketones, especially (1-hydroxycyclohexyl)-phenyl ketone, or 2-hydroxy-2-methyl-1-phenyl-propanone; dialkoxyacetophenones, e.g. 2,2-dimethoxy-1,2-diphenylethan-1-one; or α-aminoacetophenones, e.g. (4-methylthiobenzoyl)-1-methyl-1-morpholino-ethane, (4-morpholino-benzoyl)-1-benzyl-1-dimethylamino-propane; 4-aroyl-1,3-dioxolanes; benzoin alkyl ethers and benzil ketals, e.g. benzil dimethyl ketal; phenyl glyoxalates and derivatives thereof, e.g. dimeric phenyl-glyoxalates, siloxane-modified phenyl glyoxalates; peresters, e.g. benzophenonetetracarboxylic acid peresters, as described, for example, in EP 126 541; monoacylphosphine oxides, e.g. (2,4,6-trimethylbenzoyl)-phenyl-phosphine oxide; bisacylphosphine oxides, e.g. bis(2,6-dimethoxybenzoyl)-(2,4,4-trimethyl-pent-1-yl)phosphine oxide, bis(2,4,6-trimethylbenzoyl)-phenyl-phosphine oxide or bis(2,4,6-trimethylbenzoyl)-(2,4-dipentyloxyphenyl)-phosphine oxide; trisacylphosphine oxides; halomethyltriazines, e.g. 2-[2-(4-methoxyphenyl)-vinyl]-4,6-bis-trichloromethyl-[1,3,5]triazine, 2-(4-methoxy-phenyl)-4,6-bis-trichloromethyl-[1,3,5]triazine, 2-(3,4-dimethoxy-phenyl)-4,6-bis-trichloromethyl-[1,3,5]triazine, 2-methyl-4,6-bis-trichloromethyl-[1,3,5]triazine, hexaarylbisimidazole / coinitiator systems, e.g. ortho-chlorohexaphenyl-bisimidazole in combination with 2-mercaptobenzothiazole; ferrocenium compounds or titanocenes, for example dicyclopentadienyl-bis(2,6-difluoro-3-pyrrolophenyl)-titanium; O-acyloxime ester compounds, as described e.g. in GB 2 339 571, borate compounds, as described, for example, in US 4 772 530, GB 2 307 473, GB 2 333 777. The above-mentioned compounds are used alone or optionally in combination with suitable coinitiators, e.g. amines, thiols, phosphines, maleimides.

Especially suitable as component (d) are compounds selected from the group of benzophenones, benzophenone derivatives, acetophenone, acetophenone derivatives, halomethylbenzophenones, halomethylarylsulfones, dialkoxyacetophenones, anthracene, anthracene derivatives, thioxanthone, thioxanthone derivatives, 3-ketocoumarin, 3-ketocoumarin derivatives, anthraquinone, anthraquinone derivatives, α-hydroxy- or α-amino-acetophenone derivatives, α-sutfonytacetophenone derivatives, 4-aroyl-1,3-dioxolanes, benzoin alkyl ethers and benzilketals, phenyl glyoxalates and derivatives thereof, dimeric phenyl glyoxalates, peresters, monoacylphosphine oxides, bisacylphosphine oxides, trisacylphosphine oxides, halomethyltriazines, titanocenes, borate compounds, O-acyloxime compounds, camphorquinone derivatives, iodonium salts, sulfonium salts, iron aryl complexes, oximesulfonic acid esters and photolatent amines.

Of interest as free-radical photoinitiators in the curing method according to the invention are especially compounds of formula I, II, III or/and IV 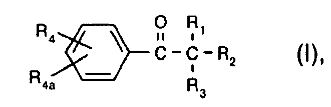 wherein
R₁ is C₁-C₁₂alkyl or C₁-C₁₂alkoxy;
R₂ is phenyl, OR₅ or NR₇R₈;
R₃ has one of the definitions given for R₁ or is C₃-C₁₂alkenyl, phenyl-C₁-C₆alkyl or C₁-C₆alkylphenyl-C₁-C₆alkyl;
or R₁ and R₃, together with the carbon atom to which they are bonded, form a cyclohexyl ring;
R₂ being phenyl when R₁ and R₃ are both alkoxy;
R₄ and R₄ₐ are each independently of the other hydrogen, C₁-C₁₂alkyl, C₁-C₁₂hydroxyalkyl, OR₅, SR₆, NR₇R_{8,} halogen, 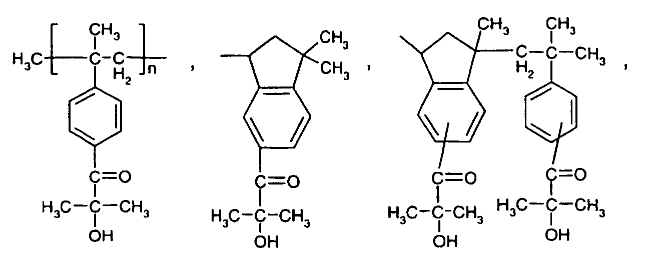 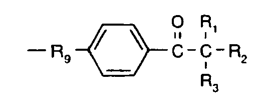 or a monovalent linear or branched siloxane radical;
n is a number from 1 to 10;
R₅ and R₆ are each independently of the other hydrogen, C₁-C₁₂alkyl, C₁-C₁₂alkenyl, phenyl, benzyl, Si(CH₃)₃ or -[CₐH₂ₐX]_{b-}R₁₀;
R₇ and R₈ are each independently of the other hydrogen, C₁-C₁₂alkyl or C₂-C₅hydroxyalkyl, or R₇ and R₈, together with the N atom to which they are bonded, form a 5- or 6-membered ring, which may also contain O atoms or a NR₁₁ group;
R₉ is a single bond, O, S, NR₁₁, -CH₂CH₂- or 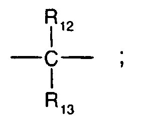
a and b are each independently of the other a number from 1 to 12;
X is S, O or NR₁₁;
R₁₀ is hydrogen, C₁-C₁₂alkyl or 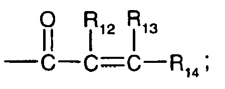
R₁₁ is hydrogen, phenyl, phenyl-C₁-C₄alkyl, C₁-C₁₂alkyl or C₂-C₅hydroxyalkyl; and
R₁₂, R₁₃ and R₁₄ are each independently of the others hydrogen or methyl; 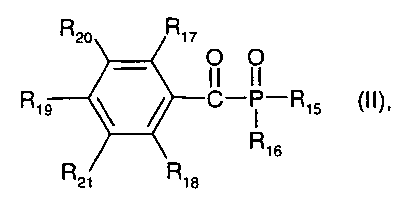 wherein
R₁₅ and R₁₆ are each independently of the other C₁-C₁₂alkyl, C₁-C₁₂alkoxy; phenyl which is unsubstituted or substituted by one or more OR₂₂, SR₂₃, NR₂₄R₂₅, C₁-C₁₂alkyl or halogen substituents; or R₁₅ and R₁₆ are biphenylyl, naphthyl, phenyl-C₁-C₄alkyl or 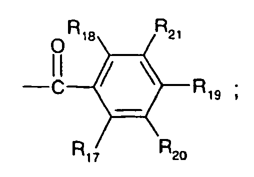
R₁₇ and R₁₈ are each independently of the other C₁-C₁₂alkyl, C₁-C₁₂alkoxy, CF₃ or halogen; R₁₉, R₂₀ and R₂₁ are each independently of the others hydrogen, C₁-C₁₂alkyl, C₁-C₁₂alkoxy, CF₃ or halogen;
R₂₂, R₂₃, R₂₄ and R₂₅ are each independently of the others hydrogen, C₁-C₁₂alkyl, C₂-C₁₂-alkenyl, C₃-C₈cycloalkyl, phenyl, benzyl, or C₂-C₂₀alkyl which is interrupted by O atoms and is unsubstituted or substituted by OH or/and SH; or R₂₄ and R₂₅, together with the N atom to which they are bonded, form a 5- or 6-membered ring, which may also contain O or S atoms or an NR₂₆ group; and
R₂₆ is hydrogen, phenyl, phenyl-C₁-C₄alkyl, C₁-C₁₂alkoxy, C₁-C₁₂alkyl or C₁-C₁₂hydroxyalkyl; 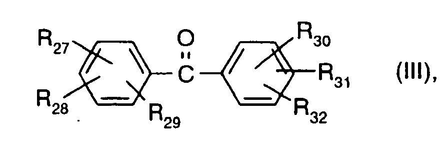 wherein
R_{27,} R₂₈, R₂₉, R₃₀, R₃₁ and R₃₂ are each independently of the others hydrogen, C₁-C₄alkyl, phenyl, naphthyl, -OR₃₅, -SR₃₅, -(CO)O(C₁-C₄alkyl), halogen, NR₃₃R₃₄ or a monovalent linear or branched siloxane radical, or R₂₉ and R₃₀, each in the o-position to the carbonyl group, together form a S atom; and
R₃₃ and R₃₄ are each independently of the other hydrogen, C₁-C₄alkyl, C₂-C₆hydroxyalkyl, or R₃₃ and R₃₄ together with the N atom to which they are bonded, form a 5- or 6-membered ring, which may also contain O atoms or a NR₁₁ group; and
R₃₅ is C₁-C₁₂alkyl, C₂-C₆hydroxyalkyl or phenyl; 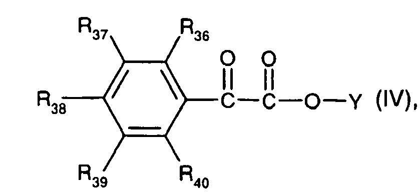 wherein
R₃₆, R₃₇, R₃₈, R₃₉ and R₄₀ are each independently of the others hydrogen, C₁-C₁₂alkyl unsubstituted or substituted by OH, C₁-C₄alkoxy, phenyl, naphthyl, halogen, CN and/or by -OCOR₄₁, or C₂-C₁₂alkyl which is interrupted by one or more O atoms, or R₃₆, R₃₇, R₃₈. R₃₉ and R₄₀ are OR₄₂, SR₄₃, NR₄₄R₄₅, halogen, a monovalent linear or branched siloxane radical, or phenyl unsubstituted or substituted by one or two C₁-C₄alkyl or/and one or two C₁-C₄-alkoxy substituents, it being possible for the substituents OR₄₂, SR₄₃, NR₄₄R₄₅ to form 5- or 6-membered rings by way of the radicals R₄₂, R₄₃, R₄₄ and/or R₄₅ with further substituents on the phenyl ring or with one of the carbon atoms of the phenyl ring;
R₄₁ is C₁-C₈alkyl, or phenyl unsubstituted or substituted by from one to three C₁-C₄alkyl and/or one to three C₁-C₄alkoxy substituents;
R₄₂ and R₄₃ are each independently of the other hydrogen, C₁-C₁₂alkyl unsubstituted or substituted by OH, C₁-C₄alkoxy, phenyl, phenoxy or/and by -OCOR₄₁, or C₂-C₁₂alkyl which is interrupted by one or more O atoms, or R₄₂ and R₄₃ are phenyl unsubstituted or substituted by C₁-C₄alkoxy, phenyl or/and by C₁-C₄alkyl, or R₄₂ and R₄₃ are C₃-C₆alkenyl, cyclopentyl, cyclohexyl or naphthyl;
R₄₄ and R₄₅ are each independently of the other hydrogen, C₁-C₁₂alkyl unsubstituted or substituted by OH, C₁-C₄alkoxy or/and by phenyl, or C₂-C₁₂alkyl which is interrupted by one or more O atoms, or R₄₄ and R₄₅ are phenyl, -COR₄₁ or SO₂R₄₆, or R₄₄ and R₄₅, together with the nitrogen atom to which they are bonded, form a 5-, 6- or 7-membered ring, which may also be interrupted by -O- or -NR₄₇-;
R₄₆ is C₁-C₁₂alkyl, phenyl or 4-methylphenyl;
R₄₇ is hydrogen, C₁-C₈alkyl unsubstituted or substituted by OH or by C₁-C₄alkoxy, or is phenyl unsubstituted or substituted by OH, C₁-C₄alkyl or by C₁-C₄alkoxy;
Y is 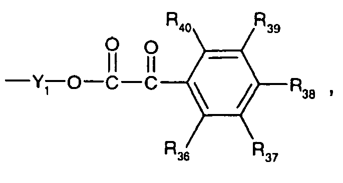 C₁-C₂₀alkyl, phenyl, naphthyl, phenyl-C₁-C₄alkyl or
a monovalent linear or branched siloxane radical;
Y₁ is C₁-C₁₂alkylene, C₄-C₈alkenylene, C₄-C₈alkynylene, cyclohexylene, C₄-C₄₀alkylene interrupted by one or more -O-, -S- or -NR₄₈-, or is phenylene or Y₁ is a group 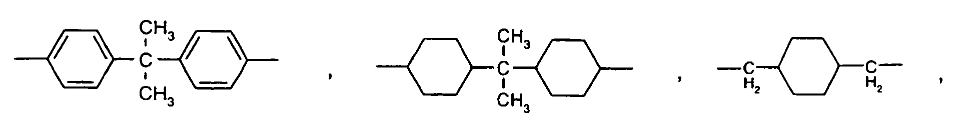 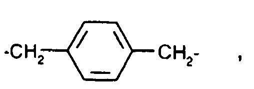 -CH₂CH(OH)CH₂O-Y₂-OCH₂CH(OH)CH₂- , -CH₂CH(OH)CH₂- , 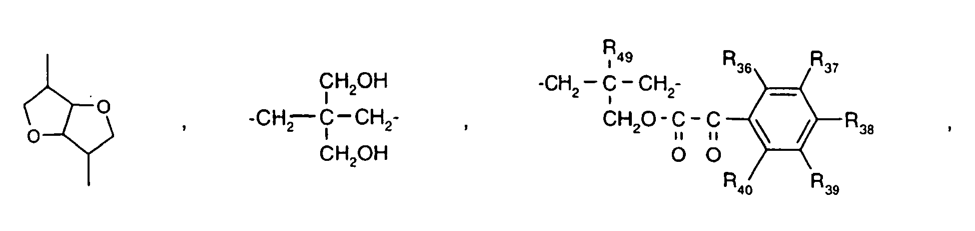 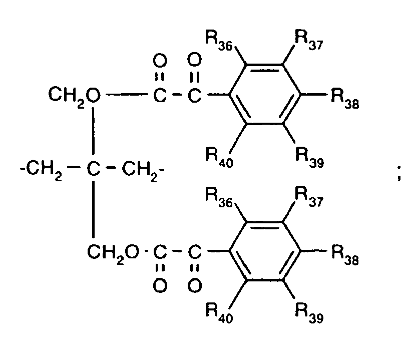 or a divalent linear or branched siloxane radical;
Y₂ has the same definitions as Y₁ with the exception of the formula

   -CH₂CH(OH)CH₂O-Y₂-OCH₂CH(OH)CH₂- ;
R₄₈ is hydrogen, C₁-C₁₂alkyl or phenyl; and
R₄₉ is hydrogen, CH₂OH or C₁-C₄alkyl.

Of interest is a method as described above wherein component (d) in the composition is at least one compound of formula I or/and II, especially a mixture of a compound of formula I and a compound of formula II.

Preferred compositions comprise compounds of formula I wherein R₂ is NR₇R₈, or/and compounds of formula II, or/and compounds of formula IV wherein Y is 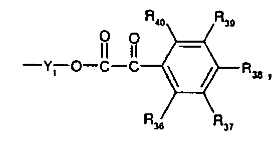 as component (d).

C₁-C₁₂Alkyl is linear or branched and is, for example, C₁-C₈-, C₁-C₆- or C₁-C₄-alkyl. Examples are methyl, ethyl, propyl, isopropyl, n-butyl, sec-butyl, isobutyl, tert-butyl, pentyl, hexyl, heptyl, 2,4,4-trimethyl-pentyl, 2-ethylhexyl, octyl, nonyl, decyl, undecyl or dodecyl.

C₁-C₁₂Hydroxyalkyl and C₂-C₅hydroxyalkyl are e.g. C₁-C₁₀-, C₂-C₁₀-, C₁-C₈-, C₂-C₈-, C₂-C₄-and C₁-C₄-alkyl as described above, but mono- or poly-substituted by OH. For example, from 1 to 6, e.g. from 1 to 4, or one or two OH substituents are positioned on the alkyl radical. Examples are hydroxymethyl, hydroxyethyl, dihydroxypropyl, hydroxypropyl, dihydroxyethyl, especially hydroxyethyl.

C₃-C₈Cycloalkyl is linear or branched alkyl that contains at least one ring, e.g. cyclopropyl, cyclopentyl, methyl-cyclopentyl, cyclohexyl, methyl- or dimethyl-cyclohexyl, or cyclooctyl, especially cyclopentyl or cyclohexyl, preferably cyclohexyl.

C₂-C₂₀Alkyl that is interrupted one or more times by O atoms is, for example, interrupted by O from 1 to 9 times, e.g. from 1 to 7 times or once or twice. When the radicals are interrupted by a plurality of O atoms, the O atoms are separated from one another by at least one methylene group. There are thus obtained e.g. structural units such as -CH₂-O-CH₃, -CH₂CH₂-O-CH₂CH₃, -[CH₂CH₂O]_{y}-CH₃, wherein y = 1 to 9, -(CH₂CH₂O)₇CH₂CH₃, -CH₂-CH(CH₃)-O-CH₂-CH₂CH₃ or -CH₂-CH(CH₃)-O-CH₂-CH₃.

C₁-C₁₂Alkoxy denotes linear or branched radicals and is, for example, C₁-C₈-, C₁-C₆- or C₁-C₄-alkoxy. Examples are methoxy, ethoxy, propoxy, isopropoxy, n-butyloxy, sec-butyloxy, isobutyloxy, tert-butyloxy, pentyloxy, hexyloxy, heptyloxy, 2,4,4-trimethylpentyloxy, 2-ethylhexyloxy, octyloxy, nonyloxy, decyloxy or dodecyloxy, especially methoxy, ethoxy, propoxy, isopropoxy, n-butyloxy, sec-butyloxy, isobutyloxy, tert-butyloxy, more especially methoxy.

C₂-C₁₂Alkenyl radicals can be mono- or poly-unsaturated and linear or branched and are, for example, C₂-C₈-, C₂-C₆-, C₄-C_{B}-, C₄-C₆-, C₆-C₈- or C₂-C₄-alkenyl. Examples are vinyl, allyl, methallyl, 1,1-dimethylallyl, 1-butenyl, 2-butenyl, 1,3-pentadienyl, 1-hexenyl, 1-octenyl, decenyl or dodecenyl, especially allyl. R₄ as C₂-C₈alkenyl is e.g. C₂-C₆-, especially C₂-C₄-alkenyl.

Phenyl-C₁₋C₆alkyl is e.g. benzyl, phenylethyl, α-methylbenzyl, phenylpentyl, phenylhexyl or α,α-dimethylbenzyl, especially benzyl. Phenyl-C₁-C₄alkyl, especially phenyl-C₁-C₂alkyl, is preferred.

C₁-C₆Alkylphenyl-C₁-C₆alkyl is, for example, 2,4,6-trimethylbenzyl, 2,6-dimethylbenzyl, 2,4,6-trimethylphenylethyl, 4-methylbenzyl or 4-methylphenylethyl, especially 2,4,6-trimethylbenzyl.

Substituted phenyl is mono- to penta-substituted, e.g. mono-, di- or tri-substituted, especially mono- or di-substituted on the phenyl ring.

Halogen is fluorine, chlorine, bromine or iodine, especially chlorine or bromine, preferably chlorine.

When R₇ and R₈ or R₂₄ and R₂₅ or R₃₃ and R₃₄, in each case together with the N atom to which they are bonded, form a 5- or 6-membered ring which may also contain O or S atoms or a group NR₁₁ or NR₂₆, such a ring is, for example, a saturated or unsaturated ring, for example aziridine, pyrrole, pyrrolidine, oxazole, thiazole, pyridine, 1,3-diazine, 1,2-diazine, piperidine or morpholine.

When in formula III R₂₉ and R₃₀, each in the o-position to the carbonyl group, together form a S atom, a thioxanthone structure 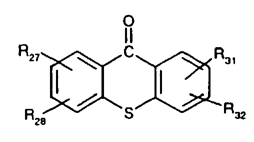 is obtained.

Monovalent or divalent linear or branched siloxane radicals in the context of the present Application may also contain, for example, linear or branched alkylene units or oxaalkylene units.
A monovalent linear or branched siloxane radical is to be understood as being, for example, the following radical 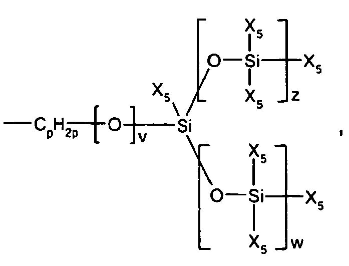 wherein v is 0 or 1; w is a number from 0 to 100 and z is a number from 1 to 100; and X₅ is C₁-C₄alkyl. The radical CₚH₂ₚ is linear or branched.

Examples of divalent linear or branched siloxane radicals may, for example, likewise contain linear or branched alkylene units or oxaalkylene units, for example the following radical

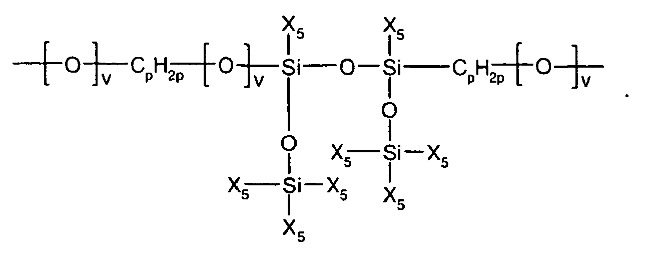

Examples of suitable photoinitiators having siloxane radicals are to be found in EP 1 072 326, WO 02/14439, WO 02/14326, International Application Nos. EP03/00820 and EP03/00819.

Photoinitiator compounds as described above are known in the art. Some of them are commercially available and their preparation is published in the literature and known to the person skilled in the art. The preparation of α-hydroxyketones is disclosed, for example, in EP 3002, EP 161 463, EP 487 993, EP 368 850, and that of α-aminoacetophenones is disclosed in EP 3002, EP 284 561, EP 805 152. The preparation of mono-, bis- and trisacylphosphine oxides is known, for example, from EP 7508, EP 184 095, WO 96/07662.

Preferred free-radical photoinitiators in the method according to the invention are, for example, 1-benzoylcyclohexanol (^{®}Irgacure 184, Ciba Spezialitdtenchemie), 1-[4-(2-hydroxyethoxy)phenyl]-2-hydroxy-2-methyl-1-propan-1-one (^{®}Irgacure 2959, Ciba Spezialitätenchemie), [4-(2-acryloyloxyethoxy)-phenyl]-2-hydroxy-2-propyl ketone, 2,2-dimethoxy-1,2-diphenylethan-1-one (^{®}Irgacure 651, Ciba SpezialitAtenchemie), (4-morpholino-benzoyl)-1-benzyl-l-dimethylamino-propane (^{®}irgacure 369, Ciba Spezialitatenchemie), (4-methylthiobenzoyl)-1-methyl-1-morpholino-ethane (^{®}Irgacure 907, Ciba Spezialitätenchemie), 2-hydroxy-2-m ethyl-1 -[4-(4-(2-hydroxy-2-methylpropano-1 -yl)benzyl)phenyl]-propanone; bis(2,4,6-trimethylbenzoyl)-phenyl-phosphine oxide (^{®}Irgacure 819, Ciba Spezialitätenchemie), bis(2,6-dimethoxybenzoyl)-2,4,4-trimethylpentylphosphine oxide, bis(2,4,6-trimethylbenzoyl)-(2,4-dipentyloxyphenyl)-phosphine oxide, 2-hydroxy-2-methyl-1-phenyl-propanone (^{®}Darocur 1173, Ciba Spezialitatenchemie), 2-hydroxy-2-methyl-1-(4-isopropylphenyl)-propanone, 2-hydroxy-2-methyl-1-(4-dodecyl-phenyl)-propanone, 2,4,6-trimethylbenzoyl-diphenyl-phosphine oxide, 2,4,6-trimethylbenzoyl-phenyl-phosphinic acid ethyl ester, poly{2-hydroxy-2-methyl-1-[4-(1-methylvinyl)phenyl]propan-1-one}, bis(η⁵-2,4-cyclopentadien-1-yl)-bis[2,6-difluoro-3-(1H-pyrrol-1-yl)phenyl]titanium (^{®}Irgacure 784, Ciba Spezialitätenchemie), a mixture of 2,4,6-trimethylbenzophenone and 4-methylbenzophenone; 2,4,6-trimethyl-4'-phenylbenzophenone, 3-methyl-4'-phenylbenzophenone, phenylglyoxylic acid methyl ester, 5,5'-oxodi(ethyleneoxydicarbonylphenyl), 4-dimethylamino-phenylglyoxylic acid methyl ester, thioxanthone, chlorothioxanthone, isopropylthioxanthone, benzophenone, 4,4'-bis(dimethylamino)-benzophenone, 4,4'-bis(diethylamino)-benzophenone, 3,3'-dimethyl-4-methoxybenzophenone, 4-phenylbenzophenone, 1-chloro-4-propoxy-thioxanthone, 2,4-dimethyl- or 2,4-diethyl-thioxanthone. It is of course also possible to use any mixtures of the above-mentioned compounds.

Also suitable, for example, are photoinitiator compounds that contain siloxane-containing radicals. Such compounds are especially suitable for use in surface coatings, especially automotive finishes, that are cured by the method according to the invention. In such a case the photoinitiators are not distributed as homogeneously as possible in the formulation to be cured but become selectively concentrated at the surface of the coating to be cured, that is to say the initiator becomes specifically oriented relative to the surface of the formulation. When the formulations to be cured contain siloxane it is especially advantageous to use such siloxane-containing photoinitiators, because they ensure homogeneous distribution of the initiator in the formulation.

Further suitable examples of photoinitiators are J.V. Crivello, K. Dietliker, Photoinitiators for Free Radical, Cationic & Anionic Photopolymerisation, Vol. III, 2nd edition, insbesondere pages 276-298.
In the context of the present invention, the above list is to be understood as being merely by way of example and on no account as a limitation.

Suitable photoinitiators for crosslinking component (b) are e.g. cationic photoinitiators, for example aromatic sulfonium, phosphonium or iodonium salts, such as are described e.g. in US 4 950 581, column 18, line 60 to column 19, line 10, or cyclopentadienylarene-iron(II) complex salts, e.g. (η⁶-isopropylbenzene)(η⁵-cyclopentadienyl)iron (II) hexafluorophosphate, or oxime-based photolatent acids, as described, for example, in GB 2 348 644, US 4 450 598, US 4 136 055, WO 00/10972, WO 00/26219.

Preferred photolatent acids are, for example, compounds of formula V, VI, VII or/and VIIa 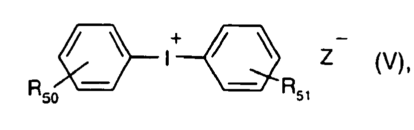 wherein
R₅₀ and R₅₁ are each independently of the other hydrogen, C₁-C₂₀alkyl, C₁-C₂₀alkoxy, OH-substituted C₁-C₂₀alkoxy, halogen, C₂-C₁₂alkenyl, cycloalkyl, especially methyl, isopropyl or isobutyl; and
Z is an anion, especially PF₆, SbF₆, AsF₆, BF₄, (C₆F₅)₄B, CI, Br, HSO_{4,} CF₃-SO₃, F-SO₃, 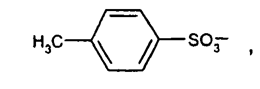 CH₃-SO₃, CIO₄, PO₄, NO₃, SO₄, CH₃-SO₄, 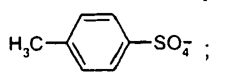 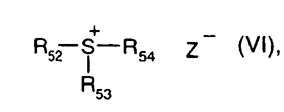 wherein
R₅₂, R₅₃ and R₅₄ are each independently of the others unsubstituted phenyl, or phenyl substituted by -S-phenyl or by 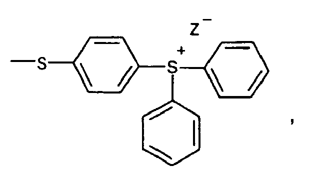
Z is as defined above; 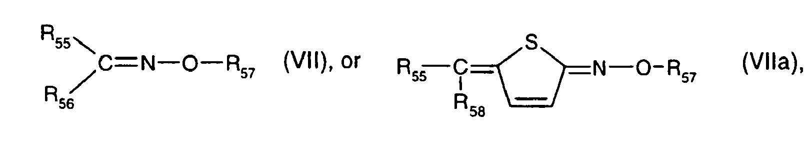 wherein
R₅₅ is 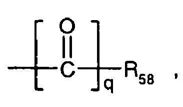 (CO)O-C₁-C₄alkyl, CN or C₁-C₁₂haloalkyl;
R₅₆ has one of the definitions given for R₅₅ or is 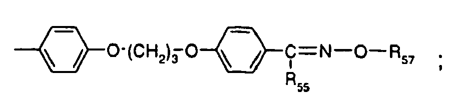
R₅₇ is C₁-C₁₈alkylsulfonyl, C₁-C₁₀haloalkylsulfonyl, camphorylsulfonyl, phenyl-C₁-C₃alkylsulfonyl, C₃-C₃₀cycloalkylsulfonyl, phenylsulfonyl, naphthylsulfonyl, anthracylsulfonyl or phenanthrylsulfonyl, the groups cycloalkyl, phenyl, naphthyl, anthracyl and phenanthryl of the radicals C₃-C₃₀cycloalkylsulfonyl, phenyl-C₁-C₃alkylsulfonyl, phenylsulfonyl, naphthylsulfonyl, anthracylsulfonyl and phenanthrylsulfonyl being unsubstituted or substituted by one or more halogen, C₁-C₄haloalkyl, CN, NO₂, C₁-C₁₆alkyl, phenyl, C₁-C₄-alkylthio, C₁-C₄alkoxy, phenoxy, C₁-C₄alkyl-O(CO)-, C₁-C₄alkyl-(CO)O-, R₆₇OSO₂- and/or
-NR₆₀R₆₁ substituents; or R₅₇ is C₂-C₆haloalkanoyl, halobenzoyl, 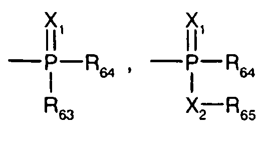 or 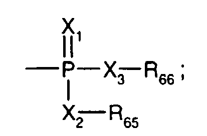
X₁, X₂ and X₃ are each independently of the others O or S;
q is 0 or 2; and
R₅₈ is C₁-C₁₂alkyl, cyclohexyl, camphoryl, unsubstituted phenyl, or phenyl substituted by one or more halogen, C₁-C₁₂alkyl, OR₅₉, SR₅₉ or NR₆₀R₆₁ substituents;
R₅₉ is C₁-C₁₂alkyl, phenyl, phenyl-C₁-C₄alkyl or C₁-C₁₂hydroxyalkyl;
R₆₀ and R₆₁ are each independently of the other hydrogen, C₁-C₄alkyl, C₂-C₆hydroxyalkyl, or R₆₀ and R₆₁, together with the N atom to which they are bonded, form a 5- or 6-membered ring, which may also contain O atoms or an NR₆₂ group;
R₆₂ is hydrogen, phenyl, phenyl-C₁-C₄alkyl, C₁-C₁₂alkyl or C₂-C₅hydroxyalkyl;
R₆₃, R₆₄, R₆₅ and R₆₆ are each independently of the others C₁₋C₆atkyt, C₁-C₆haloalkyl; or phenyl unsubstituted or substituted by C₁-C₄alkyl or by halogen; and
R₆₇ is hydrogen, C₁-C₄alkyl, phenyl or tolyl.

The specific meanings of the radicals are as described above.
Compounds of formulae V, VI, VII and VIIa are generally known and are in some cases commercially available. Their preparation is known to the person skilled in the art and frequently described in the literature.
Suitable iodonium salts are e.g. tolylcumyliodonium tetrakis(pentafluorophenyl)borate, 4-[(2-hydroxy-tetradecyloxy)phenyl]phenyliodonium hexafluoroantimonate or hexafluorophosphate (SarCat^{®} CD 1012; Sartomer), tolylcumyliodonium hexafluorophosphate, 4-isobutylphenyl-4'-methylphenyliodonium hexafluorophosphate (^{RTM}Irgacure 250, Ciba Spezialitdtenchemie), 4-octyloxyphenyl-phenyliodonium hexafluorophosphate or hexafluoroantimonate, bis(dodecylphenyl)iodonium hexafluoroantimonate or hexafluorophosphate, bis(4-methylphenyl)-iodonium hexafluorophosphate, bis(4-methoxyphenyl)iodonium hexafluorophosphate, 4-methylphenyl-4'-ethoxyphenyliodonium hexafluorophosphate, 4-methylphenyl-4'-dodecylphenyliodonium hexafluorophosphate, 4-methylphenyl-4'-phenoxyphenyliodonium hexafluorophosphate. Of all the iodonium salts mentioned, compounds with other anions are, of course, also suitable. The preparation of iodonium salts is known to the person skilled in the art and described in the literature, for example US 4 151 175, US 3 862 333, US 4 694 029, EP 562 897, US 4 399 071, US 6 306 555, WO 98/46647 J. V. Crivello, "Photoinitiated Cationic Polymerization" in: UV Curing: Science and Technology, Editor S. P. Pappas, pages 24-77, Technology Marketing Corporation, Norwalk, Conn. 1980, ISBN No. 0-686-23773-0; J. V. Crivello, J. H. W. Lam, Macromolecules, 10, 1307 (1977) and J. V. Crivello, Ann. Rev. Mater. Sci. 1983, 13, pages 173-190 and J. V. Crivello, Journal of Polymer Science, Part A: Polymer Chemistry, Vol. 37, 4241-4254 (1999). Suitable sulfonium salts are obtainable, for example, under the trade names ^{®}Cyracure UVI-6990, ^{®}Cyracure UVI-6974 (Union Carbide), ^{®}Degacure KI 85 (Degussa), SP-55, SP-150, SP-170 (Asahi Denka), GE UVE 1014 (General Electric), SarCat^{®} KI-85 (= triarylsulfonium hexafluorophosphate; Sartomer), SarCat^{®} CD 1010 (= mixed triarylsulfonium hexafluoroantimonate; Sartomer); SarCat^{®} CD 1011 (= mixed triarylsulfonium hexafluorophosphate; Sartomer).
Suitable oximesulfonates and their preparation can be found, for example, in WO 00/10972, WO 00/26219, GB 2 348 644, US 5 450 598, WO 98/10335, WO 99/01429, EP 780 729, EP 821 274, US 5 237 059, EP 571 330, EP 241 423, EP 139 609, EP 361 907, EP 199 672, EP 48615, EP 12158.

A summary of further photolatent acid donors is given in the form of a review by M. Shirai and M. Tsunooka in Prog. Polym. Sci., Vol. 21, 1-45 (1996).

Preferred photolatent acids in the method according to the invention are 4-octyloxyphenylphenyliodonium hexafluoroantimonate, 4-(2-hydroxy-tetradecyl-1-oxyphenyl)-phenyliodonium hexafluoroantimonate, 4-decyloxyphenyl-phenyliodonium hexafluorophosphate, 4-decylphenyl-phenyl-iodonium hexafluorophosphate, 4-isopropylphenyl-4'-methylphenyliodonium tetra(pentafluorophenyl)borate, 4-isopropylphenyl-4'-methylphenyliodonium hexafluorophosphate, 4-isobutylphenyl-4'-methylphenyliodonium tetra(pentafluorophenyl)borate, 4-isobutylphenyl-4'-methylphenyl-iodonium hexafluorophosphate, ^{®}Cyracure 6974 and ^{®}Cyracure UVI 6990 from Union Carbide, (η⁶-isopropylbenzene)(η⁵-cyclopentadienyl)iron(II) hexafluorophosphate.

Examples of suitable oximesulfonates are α-(methylsulfonyloxyimino)-4-methoxybenzylcyanide, α-(octylsulfonyloxyimino)-4-methoxybenzyicyanide, α-(methylsulfonyloxyimino)-3-methoxybenzylcyanide, α-(methylsulfonyloxyimino)-3,4-dimethylbenzylcyanide, α-(methylsulfonyloxyimino)-thiophene-3-acetonitrile, α-(isopropylsulfonyloxyimino)-thiophene-2-acetonitrile, cis/trans-α-(dodecylsulfonyloxyimino)-thiophene-2-acetonitrile, 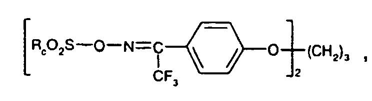 wherein R_{c} is haloalkyl, especially CF₃, and alkyl, especially propyl; 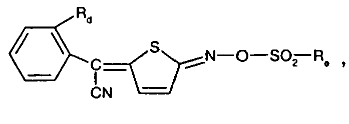 wherein R_{d} is alkyl, especially methyl, and Rₑ is alkyl, especially methyl, propyl, octyl, camphoryl, p-tolyl or 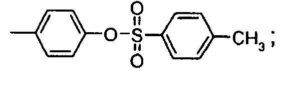 Oxime compounds that yield acids other than sulfonic acids are likewise suitable and are disclosed, for example, in WO 00/26219.
In the context of the present invention, the above list is to be understood as being merely by way of example and on no account as a limitation.

As photolatent bases there come into consideration, for example, capped amine compounds, for example generally the photolatent bases known in the art. Examples are compounds of the classes: o-nitrobenzyloxycarbonylamines, 3,5-dimethoxy-α,α-dimethylbenzyloxycarbonylamines, benzoin carbamates, derivatives of anilides, photolatent guanidines, generally photolatent tertiary amines, for example ammonium salts of α-ketocarboxylic acids, or other carboxylates, benzhydrylammonium salts, N-(benzophenonylmethyl)-tri-N-alkylammonium triphenylalkyl borates, photolatent bases based on metal complexes, e.g. cobalt amine complexes, tungsten and chromium pyridinium pentacarbonyl complexes, anion-generating photoinitators based on metals, such as chromium and cobalt complexes "Reinecke salts" or metalloporphyrins. Examples thereof are published in J.V. Crivello, K. Dietliker "Photoinitiators for Free Radical, Cationic & Anionic Photopolymerisation", Vol. III of "Chemistry & Technology of UV & EB Formulation for Coatings, Inks & Paints", 2nd Ed., J. Wiley and Sons/SITA Technology (London), 1998.
Also suitable as component (d) of the compositions according to the invention are bases as described in WO 97/31033. They are especially latent bases based on seconday amines, guanidines or amidines. Examples are compounds of formula (A) 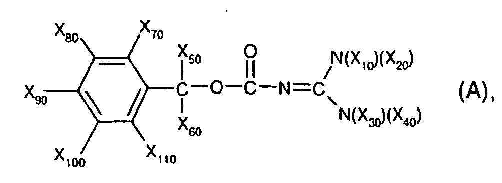 wherein
X₁₀, X₂₀, X₃₀, X₄₀, X₅₀, X₆₀, X₇₀, X₈₀, X₉₀, X₁₀₀ and X₁₁₀ are each independently of the others hydrogen, C₁-C₂₀alkyl, aryl, arylalkyl, halogen, alkoxy, aryloxy, arylalkyloxy, aryl-N-, alkyl-N-, arylalkyl-N-, alkylthio, arylthio, arylalkylthio, NO-, CN, a carboxylic acid ester radical, a carboxylic acid amide radical or a ketone or aldehyde radical, or X₁₀, X₂₀, X₃₀ and X₄₀ may form a ring structure and X₅₀, X_{60,} X₇₀, X₈₀, X₉₀, X₁₀₀ and X₁₁₀ independently of X₁₀, X₂₀, X₃₀ and X₄₀ may form one or more further ring structures.

Other suitable photolatent bases are disclosed in EP 764 698. They are capped amino compounds, for example of formula (B) 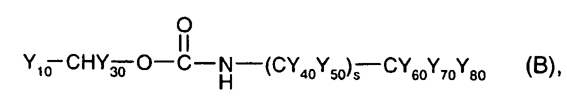 wherein
Y₁₀ is a radical 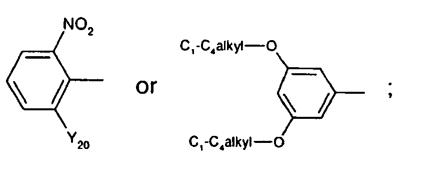
Y₂₀ is hydrogen or NO₂
Y₃₀ is hydrogen or C₁-C₈alkyl;
Y₄₀, Y₅₀, Y₆₀, Y₇₀ and Y₈₀ are each independently of the others hydrogen or F; and
s is a number from 15 to 29.

It is also possible, especially, to use compounds based on α-aminoketones, as described in EP 898 202 and WO 98/32756, based on α-ammonium, iminium or amidinium ketones and arylborates, as disclosed in WO 98/38195, and based on α-aminoalkenes according to WO 98/41524.

In the compositions according to the invention it is preferred to use compounds from which an amidine group is removed on irradiation with visible light or UV light. They contain a structural element of formula 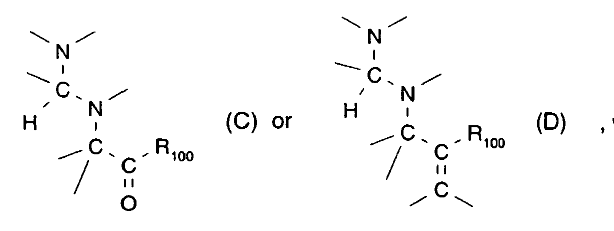 wherein
R₁₀₀ is an aromatic or heteroaromatic radical capable of absorbing light in a wavelength range of from 200 to 650 nm which, on absorption, effects cleavage of the adjacent carbon-nitrogen bond.

Of special interest are

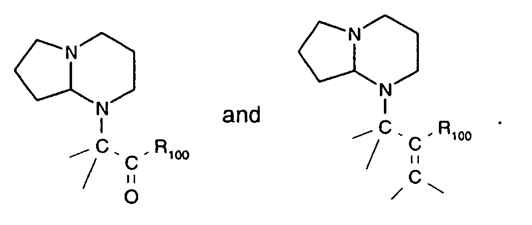

Examples of R₁₀₀ are phenyl, biphenylyl, naphthyl, phenanthryl, anthracyl, pyrenyl, 5,6,7,8-tetrahydro-2-naphthyl, 5,6,7,8-tetrahydro-1-naphthyl, thienyl, benzo[b]thienyl, naphtho-[2,3-[3]thienyl, thianthrenyl, dibenzofuryl, chromenyl, xanthenyl, thioxanthyl, phenoxathiinyl, pyrrolyl, imidazolyl, pyrazolyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, terphenyl, stilbenyl, fluorenyl and phenoxazinyl, those radicals being unsubstituted or mono- or poly-substituted, for example, by alkyl, alkenyl, alkynyl, haloalkyl, NO₂ amino groups, N₃, OH, CN, alkoxy, alkylthio, alkylcarbonyl, alkoxycarbonyl or by halogen, or R₁₀₀ is 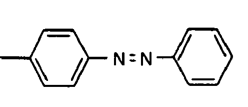 unsubstituted or mono- or poly-substituted e.g. by alkyl, alkenyl, alkynyl, haloalkyl, NO₂, amino groups, N₃, OH, CN, alkoxy, alkylthio, alkylcarbonyl, alkoxycarbonyl or by halogen.

Preferred photolatent bases are, for example, compounds of formula VIII 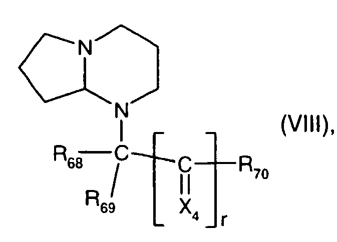 wherein
r is 0 or 1;
X₄ is CH₂ or O;
R₆₈ and R₆₉ are each independently of the other hydrogen or C₁-C₂₀alkyl; and
R₇₀ is unsubstituted or C₁-C₁₂alkyl- or C₁-C₁₂alkoxy-substituted phenyl, naphthyl or biphenylyl.

The preparation of the compounds of formulae (C), (D) and (VIII) is known and is described in WO 98/32756, WO 98/38195, WO 98/41524, WO 00/10964 and EP Application No. EP02/11238. Those specifications also provide specific examples of such compounds.
Also suitable as photolatent base donors are the α-aminoketone compounds described in EP 898 202, for example (4-morpholinobenzoyl)-1-benzyl-1-dimethylamino-propane or (4-methylthiobenzoyl)-1-methyl-1-morpholino-ethane.

Examples of preferred photolatent bases in the method according to the invention are

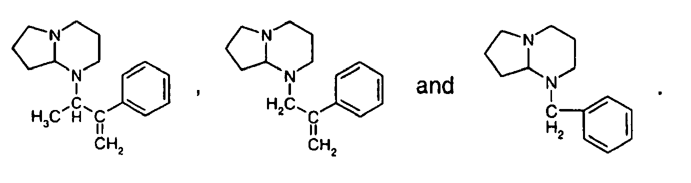

In some cases it may be advantageous to use mixtures of two or more photoinitiators. They may be mixtures of a plurality of free-radical photoinitiators, mixtures of a plurality of photolatent acids, mixtures of a plurality of photolatent bases, and also mixtures of free-radical photoinitiators with photolatent acids (e.g. for use in so-called hybrid systems) or mixtures of free-radical photoinitiators and photolatent bases or mixtures of free-radical photoinitiators with photolatent acids and photolatent bases.

The photopolymerisable compositions comprise the photoinitiator (d) advantageously in an amount of from 0.01 to 20 % by weight, e.g. from 0.05 to 15 % by weight, preferably from 0.1 to 20 % by weight, e.g. from 1 to 15 % by weight, preferably from 1 to 5 % by weight, based on the composition. The given amount of photoinitiator relates to the sum of all added photoinitiators when mixtures thereof are used.

Special mention should be made of a method wherein a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
   a mixture of components (a) and (b), or
   a mixture of components (a) and (c); and
(d) at least one photolatent compound that is activatable by plasma discharge;
   is applied to a substrate, preferably a three-dimensional substrate and especially a metal or plastic substrate, and then cured in a plasma discharge chamber.

Also to be regarded as plasma-curable systems are, for example, formulations as described in US 5 446 073. They are, for example, formulations comprising charge transfer complex compounds which are composed of at least one unsaturated compound containing an electron donor group and at least one compound containing an electron acceptor group. A photoinitiator is generally not required for curing such a formulation. Examples are formulations of maleic, fumaric or itaconic acid esters, amides and amide semiesters as electron acceptor group and vinyl ether and alkenyl ether compounds as electron donor groups. For a specific description, reference is made e.g. to the US patent mentioned above.
Those systems which are curable even without the addition of a photoinitiator or which themselves act as photoinitiator are based, for example, on maleimide compounds (MI) or, especially, on a combination of maleimide/vinyl ether compounds (MI/VE), it also being possible to use other vinyl or allyl derivatives as the "vinyl ether" component. It is also possible for combinations of maleimide with styryloxy compounds or e.g. vinyl amides to be used as photoinitiator-free systems.
Examples of suitable maleimide components are bismaleimide of versamine, N-n-butylmaleimide, N-ethylmaleimide, N-tert-butylmaleimide, N-methylmaleimide, N-cyclohexylmaleimide, N-phenylmaleimide, N-(2,6-dimethylphenyl)maleimide, N-benzylmaleimide, cyclohexyl ester maleimide, triethylene glycol bismaleimide, and also trismaleimide compounds. The maleimides can also be in oligomeric form.
Examples of "vinyl ether" components are CH₂=CH-O-(CH₂)₄-(CO)-(CH₂)_{z}-(CO)-(CH₂)₄-O-CH=CH₂, tris[(4-ethenyloxy)butyl]-1,2,4-phenyltricarboxylic acid ester, cyclohexanedimethanol divinyl ether, diethylene glycol divinyl ether, triethylene glycol divinyl ether, hexanediol divinyl ether, N-vinylpyrrolidone, aromatic polyesters of vinyl ether resins, polyfunctional polyesters of vinyl ether resins, and aliphatic urethane divinyl ether resins. Such systems are also described, for example, by Aylvin A. Diaz et al. in "Conference Proceedings Radtech Europe, 1999, Berlin", pp 473-482 and by Norbert Pietschmann in "Conference Proceedings Radtech Europe, 2001, Basel", pp 531-537.
Other suitable, vinyl-acrylate-based photoinitiator-free systems are described, for example, in EP 1 260 557, US 2003/0021565 and US 6 470 128.

The invention therefore relates also to a method of curing
a composition comprising
(1) a combination of at least one electron acceptor compound, especially a maleimide compound, and at least one electron donor compound, especially a vinyl ether compound; and
(2) optionally at least one free-radical-polymerisable compound (a),
wherein the curing is carried out in a plasma discharge chamber.

Using the method according to the invention it is also possible to cure compositions that comprise both thermally curable and UV curable components.
The invention therefore relates also to a method of curing
a composition comprising
(a) at least one free-radical-polymerisable component having at least one ethylenically unsaturated double bond, the free-radical-polymerisable component optionally additionally being functionalised with OH, NH₂, COOH, epoxy or NCO groups; and
(a1) at least one polyacrylate or/and polyester polyol in combination with melamine or with a melamine derivative, or in combination with a blocked or non-blocked polyisocyanate; or
(a2) at least one carboxyl-, anhydride- or amino-functional polyester or/and at least one carboxyl-, anhydride- or amino-functional polyacrylate in combination with an epoxy-functional polyester or polyacrylate; or
(a3) mixtures of (a1) and (a2);
(d) at least one photolatent compound that is activatable by plasma discharge;
wherein
the curing of the composition is carried out in a plasma discharge chamber and, optionally, thermal pre- or after-treatment is carried out.

Suitable free-radical-polymerisable components (a) are those described above. Especially suitable components (a) are those which contain, in addition to the ethylenically unsaturated double bond, further functional groups such as OH, NH₂, COOH, epoxy or NCO. Such compounds are known to the person skilled in the art and are used widely in the art.
As thermally crosslinkable component, the compositions comprise, for example, combinations of polyacrylates or/and polyester polyols in combination with melamine or, especially, with melamine derivatives (a1). Also suitable are combinations of carboxyl-, anhydride- or amino-functional polyesters or/and carboxyl-, anhydride- or amino-functional polyacrylates in combination with epoxy-functional polyesters or polyacrylates (a2). Such compounds are likewise familiar to the person skilled in the art. Of course it is also possible to use any desired mixture of the thermally curing components (a1) and (a2).
Examples of such systems are:
two-component systems of hydroxyl-group-containing polyacrylates, polyesters and/or polyethers and aliphatic or aromatic polyisocyanates; two-component systems of functional polyacrylates and a polyepoxide, the polyacrylate containing thiol, amino, carboxyl and/or anhydride groups, as described, for example, in EP 898 202; two-component systems of fluorine-modified or silicone-modified hydroxyl-group-containing polyacrylates, polyesters and/or polyethers and aliphatic or aromatic polyisocyanates; two-component systems of (poly)ketimines and aliphatic or aromatic polyisocyanates; two-component systems of (poly)ketimines and unsaturated acrylate resins or acetoacetate resins or methyl-a-acrylamido-methyl glycolate; two-component systems of (poly)oxazolidines and anhydride-group-containing polyacrylates or unsaturated acrylate resins or polyisocyanates; two-component systems of epoxy-group-containing polyacrylates and carboxyl-group-containing or amino-group-containing polyacrylates; polymers based on allyl glycidyl ethers; two-component systems of a (poly)alcohol and/or (poly)thiol and a (poly)isocyanate; two-component systems of an α,β-ethylenically unsaturated carbonyl compound and a polymer containing activated CH₂ groups, the activated CH₂ groups being present either in the main chain or in the side chain or in both, as described, for example, in EP 161 697 for (poly)malonate groups. Other compounds having activated CH₂ groups are (poly)acetoacetates and (poly)cyanoacetates; two-component systems of a polymer containing activated CH₂ groups, the activated CH₂ groups being present either in the main chain or in the side chain or in both, or a polymer having activated CH₂ groups, such as a (poly)acetoacetate or (poly)cyanoacetate, and a polyaldehyde crosslinking agent, for example terephthalic aldehyde. Such systems are described, for example, in Urankar et al., Polym. Prepr. (1994), 35, 933.
Within those combinations, special preference is given to the following:
two-component systems of hydroxyl-group-containing polyacrylates, polyesters and/or polyethers and aliphatic or aromatic polyisocyanates; two-component systems of functional polyacrylates and a polyepoxide, the polyacrylate containing thiol, amino, carboxyl and/or anhydride groups; two-component systems of epoxy-group-containing polyacrylates and carboxyl-group-containing or amino-group-containing polyacrylates; two-component systems of a (poly)alcohol and/or (poly)thiol and a (poly)isocyanate, and two-component systems of an α,β-ethylenically unsaturated carbonyl compound and a polymer containing activated CH₂ groups, the activated CH₂ groups being present either in the main chain or in the side chain or in both.

The invention relates also to the coated substrate coated on at least one surface by means of the method according to the invention.

The photopolymerisable mixtures may comprise, in addition to the photoinitiator, various additives (h). Examples thereof are thermal inhibitors, which are intended to prevent premature polymerisation, e.g. hydroquinone, hydroquinone derivatives, p-methoxyphenol, β-naphthol or sterically hindered phenols, e.g. 2,6-di(tert-butyl)-p-cresol, or 4-hydroxy-2,2,6,6-tetramethyl-piperidin-1-oxyl (p-hydroxy-tempo), bis(2,2,6,6-tetramethyl-1-oxyl-4-piperidinyl)-sebacate and 1-methyl-8-(2,2,6,6-tetramethyl-l-oxyl-4-piperidinyl)-sebacate. In order to increase dark storage stability it is possible to use, for example, copper compounds, such as copper naphthenate, stearate or octoate, phosphorus compounds, for example triphenylphosphine, tributylphosphine, triethyl phosphite, triphenyl phosphite or tribenzyl phosphite, quaternary ammonium compounds, e.g. tetramethylammonium chloride or trimethylbenzylammonium chloride, or hydroxylamine derivatives, e.g. N-diethylhydroxylamine.
As light stabilisers (e) it is possible to add UV absorbers, e.g. those of the hydroxyphenylbenzotriazole, hydroxyphenylbenzophenone, oxalic acid amide or hydroxyphenyl-s-triazine type. Such compounds can be used on their own or in the form of mixtures, with or without the use of sterically hindered amines (HALS).

Examples of such UV absorbers and light stabilisers (e) are
1. 2-(2'-Hydroxyphenyl)-benzotriazoles, e.g. 2-(2'-hydroxy-5'-methylphenyl)-benzotriazole, 2-(3',5'-di-tert-butyl-2'-hydroxyphenyl)-benzotriazole, 2-(5'-tert-butyl-2'-hydroxyphenyl)-benzotriazole, 2-(2'-hydroxy-5'-(1,1,3,3-tetramethylbutyl)-phenyl)-benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)-benzotriazole, 2-(2'-hydroxy-4'-octyloxyphenyl)-benzotriazole, 2-(3',5'-di-tert-amyl-2'-hydroxyphenyl)-benzotriazole, 2-(3',5'-bis(a,a-dimethylbenzyl)-2'-hydroxyphenyl)benzotriazole, a mixture of 2-(3'-tert-butyl-2'-hydroxy-5'-(2-octyloxycarbonylethyl)-phenyl)-5-chlorobenzotriazole, 2-(3'-tert-butyl-5'-[2-(2-ethylhexyloxy)-carbonylethyl]-2'-hydroxyphenyl)-5-chlorobenzotriazole, 2-(3'-tert-butyl-2'-hydroxy-5'-(2-methoxycarbonylethyl)-phenyl)-5-chlorobenzotriazole, 2-(3'-tert-butyl-2'-hydroxy-5'-(2-methoxycarbonylethyl)-phenyl)-benzotriazole, 2-(3'-tert-butyl-2'-hydroxy-5'-(2-octyloxycarbonylethyl)-phenyl)-benzotriazole, 2-(3'-tert-butyl-5'-[2-(2-ethylhexyloxy)-carbonylethyl]-2'-hydroxyphenyl)-benzotriazole, 2-(3'-dodecyl-2'-hydroxy-5'-methylphenyl)-benzotriazole and 2-(3'-tert-butyl-2'-hydroxy-5'-(2-isooctyloxycarbonylethyl)-phenyl-benzotriazole, 2,2'-methylene-bis[4-(1,1,3,3-tetramethylbutyl)-6-benzotriazol-2-yl-phenol]; the transesterification product of 2-[3'-tert-butyl-5'-(2-methoxycarbonylethyl)-2'-hydroxyphenyl]-benzotriazole with polyethylene glycol 300; [R-CH₂CH₂-COO(CH₂)₃]₂- wherein R = 3'-tert-butyl-4'-hydroxy-5'-2H-benzotriazol-2-yl-phenyl.
2. 2-Hydroxybenzophenones, e.g. a 4-hydroxy, 4-methoxy, 4-octyloxy, 4-decyloxy, 4-dodecyloxy, 4-benzyloxy, 4,2',4'-trihydroxy or 2'-hydroxy-4,4'-dimethoxy derivative.
3. Esters of unsubstituted or substituted benzoic acids e.g. 4-tert-butyl-phenyl salicylate, phenyl salicylate, octylphenyl salicylate, dibenzoylresorcinol, bis(4-tert-butylbenzoyl)resorcinol, benzoylresorcinol, 3,5-di-tert-butyl-4-hydroxybenzoic acid 2,4-di-tert-butylphenyl ester, 3,5-di-tert-butyl-4-hydroxybenzoic acid hexadecyl ester, 3,5-di-tert-butyl-4-hydroxybenzoic acid octadecyl ester and 3,5-di-tert-butyl-4-hydroxybenzoic acid 2-methyl-4,6-di-tert-butylphenyl ester.
4. Acrylates, e.g. α-cyano-β,β-diphenylacrylic acid ethyl ester or isooctyl ester, α-methoxycarbonylcinnamic acid methyl ester, α-cyano-β-methyl-p-methoxycinnamic acid methyl ester or butyl ester, α-methoxycarbonyl-p-methoxycinnamic acid methyl ester and N-(β-methoxycarbonyl-β-cyanovinyl)-2-methyl-indoline.
5. Sterically hindered amines, e.g. bis(2,2,6,6-tetramethylpiperidyl) sebacate, bis(2,2,6,6-tetramethylpiperidyl) succinate, bis(1,2,2,6,6-pentamethylpiperidyl) sebacate, n-butyl-3,5-di-tert-butyl-4-hydroxybenzyl-malonic acid bis(1,2,2,6,6-pentamethylpiperidyl) ester, the condensation product of 1-hydroxyethyl-2,2,6,6-tetramethyl-4-hydroxypiperidine and succinic acid, the condensation product of N,N'-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl) 1,2,3,4-butanetetraoate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl) 2-n-butyl-2-(2-hydroxy-3,5-di-tert-butylbenzyl)malonate, 3-n-octyl-7,7,9,9-tetramethyl-1,3,8-triazaspiro-[4.5]decane-2,4-dione, bis(1-octyloxy-2,2,6,6-tetramethylpiperidyl) sebacate, bis(1-octyloxy-2,2,6,6-tetramethylpiperidyl) succinate, the condensation product of N,N'-bis(2,2,6,6-tetramethyl-4-piperidyl)hexamethylenediamine and 4-morpholino-2,6-dichloro-1,3,5-triazine, the condensation product of 2-chloro-4,6-di(4-n-butylamino-2,2,6,6-tetramethylpiperidyl)-1,3,5-triazine and 1,2-bis(3-aminopropylamino)ethane, the condensation product of 2-chloro-4,6-di(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)-pyrrolidine-2,5-dione, 3-dodecyl-1-(1,2,2,6,6-pentamethyl-4-piperidyl)-pyrrolidine-2,5-dione, 2,4-bis[N-(1-cyclohexyloxy-2,2,6-6-tetramethylpiperidin-4-yl)-n-butyl-amino]-6-(2-hydroxyethyl)amino-1,3,5-triazine and the condensation product of 2,4-bis[1-cyclohexyloxy-2,2,6,6-tetramethylpiperidin-4-yl)butylamino]-6-chloro-s-triazine and N,N'-bis(3-aminopropyl)ethylenediamine.
6. Oxalic acid diamides, e.g. 4,4'-dioctyloxy-oxanilide, 2,2'-diethoxy-oxanilide, 2,2'-dioctyloxy-5,5'-di-tert-butyl oxanilide, 2,2'-didodecyloxy-5,5'-di-tert-butyl oxanilide, 2-ethoxy-2'-ethyl oxanilide, N,N'-bis(3-dimethylaminopropyl)oxalamide, 2-ethoxy-5-tert-butyl-2'-ethyl oxanilide and a mixture thereof with 2-ethoxy-2'-ethyl-5,4'-di-tert-butyl oxanilide, and mixtures of o- and p-methoxy- and of o- and p-ethoxy-disubstituted oxanilides.
7. 2-(2-Hydroxyphenyl)-1,3,5-triazines, e.g. 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxy-phenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxy-propyloxy)-phenyl]-4,6-bis(2,4-dimethylphenyl)-1,3,5-triazine, 2-[2-hydroxy-4-(2-hydroxy-3-octyloxy-propyloxy)-phenyl]-4,6-bis(2,4-dimethylphenyl)-1,3,5-triazine and 2-[4-dodecyloxy/tridecyloxy-(2-hydroxypropyl)oxy-2-hydroxy-phenyl]-4,6-bis(2,4-dimethylphenyl)-1,3,5-triazine.
8. Phosphites and phosphonites, e.g. triphenyl phosphite, diphenylalkyl phosphites, phenyldialkyl phosphites, tris(nonylphenyl) phosphite, trilauryl phosphite, trioctadecyl phosphite, distearyl-pentaerythritol diphosphite, tris(2,4-di-tert-butylphenyl) phosphite, diisodecylpentaerythritol diphosphite, bis(2,4-di-tert-butylphenyl)pentaerythritol diphosphite, bis(2,6-di-tert-butyl-4-methylphenyl)pentaerythritol diphosphite, bis-isodecyloxy-pentaerythritol diphosphite, bis(2,4-di-tert-butyl-6-methylphenyl)pentaerythritol diphosphite, bis(2,4,6-tri-tert-butylphenyl)-pentaerythritol diphosphite, tristearyl sorbitol triphosphite, tetrakis(2,4-di-tert-butylphenyl)-4,4'-biphenylene diphosphonite, 6-isooctyloxy-2,4,8,10-tetra-tert-butyl-12H-dibenzo[d,g]-1,3,2-dioxaphosphocine, 6-fluoro-2,4,8,10-tetra-tert-butyl-12-methyl-dibenzo[d,g]-1,3,2-dioxaphosphocine, bis(2,4-di-tert-butyl-6-methylphenyl)methyl phosphite and bis(2,4-di-tert-butyl-6-methylphenyl)ethyl phosphite.
9. Further inorganic compounds, e.g. nano-titanium dioxide
Examples of UV absorbers and light stabilisers suitable as components (e) also include "Krypto-UVA" as described e.g. in EP 180 548. It is also possible to use latent UV absorbers, as described e.g. by Hida et al in RadTech Asia 97, 1997, page 212.

The proportion of light stabilisers (e) in the formulations according to the invention is, for example, from 0.01 to 10 % by weight, for example from 0.05 to 5 % by weight, especially from 0.1 to 5 % by weight, based on the binder solid. The concentrations to be used vary according to the layer thickness of the coating. The thinner the layer, the higher must be the concentration of component (e) that is chosen. This will be known to the person skilled in the art and is widely described in the literature.

Additives customary in the art, e.g. antistatics, flow improvers and adhesion enhancers, can also be used.

A large number of amines can be used as further additives (h) to accelerate photopolymerisation, e.g. triethanolamine, N-methyl-diethanolamine, p-dimethylaminobenzoic acid ethyl ester or Michler's ketone and corresponding derivatives.
Amides and other amine derivatives are also known as accelerators. The amine-modified acrylates (aminoacrylates) already mentioned above (as component (a)) can also act as accelerators in this context, as can also acrylated polyethylene glycol derivatives as described above. Also of special interest are the amine synergist compounds known to the person skilled in the art, for example Michler's ketone and corresponding derivatives, 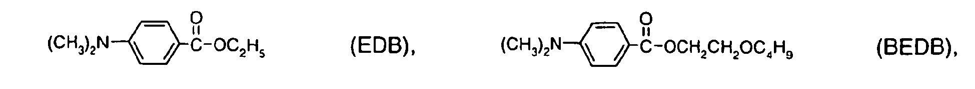 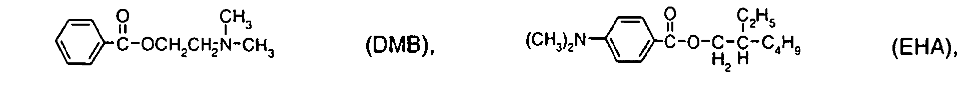 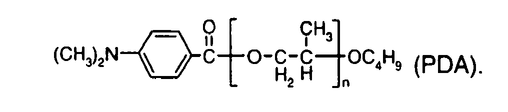 The action of the amines can be intensified by the addition of aromatic ketones, e.g. of the benzophenone type. Further accelerators, coinitiators and autooxidisers are thiols, thioethers, disulfides and phosphines, as described e.g. in EP 438 123 and GB 2 180 358.
It is also possible for chain-transfer reagents customary in the art to be added to the compositions. Examples are mercaptans, amines and benzothiazole.
The curing operation can be assisted especially by pigmented compositions (pigmented e.g. with titanium dioxide), and also by the addition as additional additive (h) of a component that forms free radicals under thermal conditions, e.g. an azo compound, such as 2,2'-azobis(4-methoxy-2,4-dimethylvaleronitrile), a triazene, a diazosulfide, pentazadiene or a peroxy compound, for example hydroperoxide or peroxycarbonate, e.g. tert-butyl hydroperoxide, as described e.g. in EP 245 639.

The compositions according to the invention may also comprise as further additives (h) a photo-reducible dye, e.g. a xanthene, benzoxanthene, benzothioxanthene, thiazine, pyronine, porphyrin or acridine dye, and/or a trihalomethyl compound cleavable by radiation. Similar compositions are described, for example, in EP 445 624.

It is also possible to add as additive (h) additives for increasing the mechanical stability, e.g. for increasing scratch-resistance, in the form of nanoparticles. Examples are dislcosed in EP114917.

Further customary additives (h) - according to the intended use - are fluorescent whitening agents, fillers, pigments, white and coloured pigments, dyes, antistatics, wetting agents and flow improvers.

For curing thick and pigmented coatings, the addition of glass microspheres or pulverised glass fibers, as described e.g. in US 5 013 768, is suitable.

The choice of additives is governed by the field of use in question and the properties desired for that field. The above-described additives (h) are customary in the art and are accordingly used in the amounts customary in the art.
The proportion of additional additives (h) in the formulations according to the invention is, for example, from 0.01 to 10 % by weight, for example from 0.05 to 5 % by weight, especially from 0.1 to 5 % by weight.

Crosslinking can be accelerated by the addition of photosensitisers (f) which shift or broaden the spectral sensitivity. Such photosensitisers are especially aromatic carbonyl compounds, for example benzophenone derivatives, thioxanthone derivatives, especially isopropylthioxanthone, anthraquinone derivatives and 3-acylcoumarin derivatives, terphenyls, styryl-ketones, as well as 3-(aroylmethylene)-thiazolines, camphorquinone, and also eosin, rhodamine and erythrosine dyes.
The amines mentioned above, for example, can also be considered as photosensitisers. Further examples of such photosensitisers are

### 1. Thioxanthones

Thioxanthone, 2-isopropylthioxanthone, 3-isopropylthioxanthone, 2-chlorothioxanthone, 2-dodecylthioxanthone, 1-chloro-4-propoxythioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)-thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl,-6-(1,1-dimethoxybenzyl)-thioxanthone, 2-morpholinomethylthioxanthone, 2-methyl-6-morpholinomethylthioxanthone, N-allylthioxanthone-3,4-dicarboximide, N-octylthioxanthone-3,4-dicarboximide, N-(1,1,3,3-tetramethylbutyl)-thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9*H*-thioxanthon-2-yloxy)-N,N,N-trimethyl-1-propanaminium chloride;

### 2. Benzophenones

Benzophenone, 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3'-dimethyl-4-methoxybenzophenone, methyl 2-benzoylbenzoate, 4-(2-hydroxyethylthio)-benzophenone, 4-(4-tolylthio)-benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethanaminium chloride, 2,4,6-trimethyl-4'-phenyl-benzophenone, 3-methyl-4'-phenyl-benzophenone;

### 3. 3-Acylcoumarins

3-Benzoylcoumarin, 3-benzoyl-7-methoxycoumarin, 3-benzoyl-5,7-di(propoxy)coumarin, 3-benzoyl-6,8-dichlorocoumarin, 3-benzoyl-6-chlorocoumarin, 3,3'-carbonyl-bis[5,7-di(propoxy)coumarin], 3,3'-carbonyl-bis(7-methoxycoumarin), 3,3'-carbonyl-bis(7-diethylaminocoumarin), 3-isobutyroylcoumarin, 3-benzoyl-5,7-dimethoxycoumarin, 3-benzoyl-5,7-diethoxycoumarin, 3-benzoyl-5,7-dibutoxycoumarin, 3-benzoyl-5,7-di(methoxyethoxy)-coumarin, 3-benzoyl-5,7-di(allyloxy)coumarin, 3-benzoyl-7-dimethylaminocoumarin, 3-benzoyl-7-diethylaminocoumarin, 3-isobutyroyl-7-dimethylaminocoumarin, 5,7-dimethoxy-3-(1-naphthoyl)-coumarin, 5,7-dimethoxy-3-(1-naphthoyl)-coumarin, 3-benzoylbenzo[f]coumarin, 7-diethylamino-3-thienoylcoumarin, 3-(4-cyanobenzoyl)-5,7-dimethoxycoumarin;

### 4. 3-(Aroylmethylene)-thiazolines

3-Methyl-2-benzoylmethylene-β-naphthothiazoline, 3-methyl-2-benzoylmethylene-benzothiazoline, 3-ethyl-2-propionylmethylene-β-naphthothiazoline;

### 5. Other carbonyl compounds

Acetophenone, 3-methoxyacetophenone, 4-phenylacetophenone, benzil, 2-acetylnaphthalene, 2-naphthaldehyde, 9,10-anthraquinone, 9-fluorenone, dibenzosuberone, xanthone, 2,5-bis(4-diethylaminobenzylidene)cyclopentanone, α-(para-dimethylaminobenzylidene)-ketones, such as 2-(4-dimethylamino-benzylidene)-indan-1-one or 3-(4-dimethylaminophenyl)-1-indan-5-yl-propenone, 3-phenylthiophthalimide, N-methyl-3,5-di(ethylthio)phthalimide.
The proportion of sensitisers (f) in the formulations according to the invention is, for example, from 0.01 to 10 % by weight, for example from 0.05 to 5 % by weight, especially from 0.1 to 5 % by weight.

The formulations may also comprise dyes and/or white or coloured pigments (g). Inorganic or organic pigments may be used, according to the intended use. Such additives are known to the person skilled in the art, some examples being titanium dioxide pigments, e.g. of the rutile or anatase type, carbon black, zinc oxide, such as zinc white, iron oxides, such as iron oxide yellow, iron oxide red, chromium yellow, chromium green, nickel titanium yellow, ultramarine blue, cobalt blue, bismuth vanadate, cadmium yellow and cadmium red. Examples of organic pigments are mono- or bis-azo pigments, and also metal complexes thereof, phthalocyanine pigments, polycyclic pigments, for example perylene, anthraquinone, thioindigo, quinacridone or triphenylmethane pigments, and also diketo-pyrrolopyrrole, isoindolinone, e.g. tetrachloroisoindolinone, isoindoline, dioxazine, benzimidazolone and quinophthalone pigments.
The pigments can be used in the formulations individually or in admixture.
Depending upon the intended use, the pigments are added to the formulations in the amounts customary in the art, for example in an amount of from 0.1 to 60 % by weight, from 0.1 to 30 % by weight or from 10 to 30 % by weight, based on the total mass.

The formulations may also, for example, comprise organic dyes of an extremely wide variety of classes. Examples are azo dyes, methine dyes, anthraquinone dyes and metal complex dyes. Customary concentrations are, for example, from 0.1 to 20 %, especially from 1 to 5 %, based on the total mass.

Depending upon the formulation used, it is also possible to use as stabilisers compounds that neutralise acids, especially amines. Suitable systems are described, for example, in JP-A 11-199610. Examples are pyridine and derivatives thereof, N-alkyl- or N,N-dialkylanilines, pyrazine derivatives, pyrrole derivatives.

The invention relates also to a method as described above wherein the composition comprises, in addition to the photolatent component (d), other additives (h), sensitiser compounds (f) or/and dyes or pigments (g).

The invention relates also to a method as described in claim 1 wherein the composition comprises as further additive (e) at least one light stabiliser or/and at least one UV absorber compound.

The compositions used in the method according to the invention can be used for a variety of coating purposes, for example as a printing ink, such as a screen-printing ink, flexographic printing ink or offset printing ink, as a clearcoat, as a colorcoat, as a whitecoat, as a powder coating or as a paint, especially for metal or plastics.

Of special interest is the use of compositions in the preparation of decorative paints for a wide variety of substrates, especially metal, e.g. for coatings on vehicles, for example motor cars, or vehicle components, for example motor car components, railway components or aircraft components. Further examples are bicylce frames, motorbike frames, motorbike tanks. The compositions can likewise be used in automotive primary finishes and repair finishes and for finishing motor car bodywork, plastics components for motor cars and motor car accessories. The process according to the invention is also suitable for coating furniture, in particular plastic furniture. The compositions in the method according to the invention can also be used, for example, in a multi-layer structure in a filler, a basecoat or a clearcoat. Use in pigmented topcoats is also possible.

The compositions to be cured by the method according to the invention are preferably surface coatings.

A surface coating or paint is a liquid, paste-form or powder-form pigmented coating material which, when applied to a substrate, yields an opaque coating having protective, decorative or/and specific technical properties. An unpigmented coating is termed a clearcoat. In the context of the present Application, the term "coating" includes both pigmented and unpigmented coating materials. Depending upon the nature of the organic binder, coatings may comprise solvent and/or water or may be solventless or water-free. They may also comprise fillers and other additives in addition to the pigments. Powder coatings are solventless. Any kinds of coating are suitable as coatings in the method according to the invention, for example powder coatings, high-solids coatings, effect coatings, high-gloss coatings, silk-finish coatings, matt-finish coatings, spray coatings, dip-coatings, pour-coatings. Corresponding raw materials and compositions are known to the person skilled in the art and are described, for example, in "Lehrbuch der Lacktechnologie", Vincentz Verlag, 1998.

Suitable light stabilisers for coatings are, for example, those mentioned above. Examples are also described in "Lichtschutzmittel für Lacke", Vincentz Verlag, 1996.

In coatings, use is frequently made of mixtures of a prepolymer with poly-unsaturated monomers that also contain a mono-unsaturated monomer. The prepolymer is an especially important factor in respect of the properties of the coating film, and by varying the prepolymer the person skilled in the art can influence the properties of the cured film. The poly-unsaturated monomer acts as crosslinking agent, which renders the coating film insoluble. The mono-unsaturated monomer acts as reactive diluent, which assists in reducing viscosity without the need to use a solvent.
Unsaturated polyester resins are used mostly in two-component systems together with a mono-unsaturated monomer, preferably with styrene.

The method according to the invention can also be used, for example, for curing radiation-curable powder coating formulations. The powder coatings can be based, for example, on solid resins and monomers containing reactive double bonds, for example maleates, vinyl ethers, acrylates, acrylamides and mixtures thereof. A free-radical-UV-curable powder coating can be formulated by mixing unsaturated polyester resins with solid acrylamides (e.g. methacrylamidoglycolate methyl ester) and a free-radical photoinitiator, as described, for example, in the presentation "Radiation Curing of Powder Coating", Conference Proceedings, Radtech Europe 1993 by M. Wittig and Th. Gohmann. Free-radical-UV-curable powder coatings can likewise be formulated by mixing unsaturated polyester resins with solid acrylates, methacrylates or vinyl ethers and a photoinitiator (or photoinitiator mixture). The powder coatings may also comprise binders, such as are described e.g. in DE 4 228 514 and EP 636 669. The UV-curable powder coatings can also comprise white or coloured pigments. For example, rutile titanium dioxide, especially, can be used in concentrations of up to about 50 % by weight in order to obtain a cured powder coating having good hiding power. The method normally comprises spraying the powder electrostatically or tribostatically onto the substrate, for example metal or wood, melting the powder by heating and, after a smooth film has been formed, radiation-curing the coating. A particular advantage of radiation-curable powder coatings over corresponding thermally curable powder coatings is that the flow time after the powder particles have melted can be prolonged as desired in order to ensure the formation of a smooth high-gloss coating. Unlike thermally curable systems, radiation-curable powder coatings can be so formulated that they melt at relatively low temperatures without the undesirable effect of their useful life being shortened. For that reason they are also suitable as coatings for heat-sensitive substrates, for example wood or plastics.
In addition to the photoinitiators, the powder coating formulations may also comprise UV absorbers. Appropriate examples are listed above under points 1 to 8.
In the method according to the invention it is also possible, for example, for combinations of thermally curable and UV-curable powder coatings to be used and cured by the application of different plasmas using different plasma gases.

The method according to the invention can likewise be used in the curing of composite materials or in the production of printing plates.

The method according to the invention is also of interest in the curing of mouldings made of composite materials. The composite material consists of a self-supporting matrix material, for example woven glass fibers, or alternatively, for example, plant fibers [see K.-P. Mieck, T. Reussmann in Kunststoffe 85 (1995), 366-370], which is impregnated with the photocuring formulation. Mouldings of composite materials so produced achieve a high degree of mechanical stability and resistance. It is also possible to cure, for example, moulding, impregnating and coating materials, such as are described e.g. in EP 7086. Such materials are, for example, thin-layer resins, on which high demands are made in terms of curing activity and resistance to yellowing, and fiber-reinforced moulding materials, such as planar or longitudinally or transversely corrugated light panels. Articles produced from such resins are, for example: boats; chipboard or plywood panels coated on both sides with glass-fiber-reinforced plastics; pipes; sports equipment; roof coverings; containers. Further examples of moulding, impregnating and coating materials are UP resin thin layers for glass-fiber-containing moulding materials (GRP), for example corrugated panels. The thin layer is produced on a support (for example a film) prior to production of the laminate. The photocurable compositions can also be used for casting-resins or for the potting of articles, for example electronic components. A further advantage is that the composite material can be removed from the plasma in a partially cured, plastic state and subjected to shaping, after which the full cure is effected.

The process according to the invention can also be employed for curing of coil coats. A coil coat is a thin band of metal, or a polymer foil, that is coated with the wanted coating, e.g. a laquer. After coating the substrate, i.e. the metal foil, curing is effected by the process according to the invention. The coil coat can then, for example, be applied to a automotive part e.g. by deep-drawing. Such caotings are for example described in the following publications of 7. Automotive Circle International Conference, 12./13.03.2003 in Frankfurt, tci-Technik&Kommunikations Verlags GmbH, Berlin: A-Schnell, Lackierprozesse mit Coil Coating Stählen [Coating processes with coil coat steels]; Dr. P. Schubach, Innovative Korrosionsschutzkonzepte mit bandbeschichtetem Material [Innovative concepts for corrosion inhibition with coil coat material]; Dr. V. Berger, Verkürzte Automobillackierkonzepte auf Basis von vorlackierten Substraten [Shortened concepts for varnishing automobiles based on pre-laquered substrates]; Dr. I Rogner, Vorgefülltes Stahlfeinblech - der nächste Schritt zum Einsatz bandlackierter Karrosseriebleche [Prefilled fine steel - the next step for employing coil coated car bodies].

The invention relates also to a method of producing mouldings from composite materials, wherein a support is impregnated with a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
   a mixture of components (a) and (b), or
   a mixture of components (a) and (c); and
(d) at least one photolatent compound that is activatable by plasma discharge;
   and is introduced into a mould;
   wherein the curing is carried out in a plasma discharge chamber and, optionally, thermal aftertreatment is carried out.

The method according to the invention can be used, for example, in the curing of coatings of glass fiber optical conductors (optical fibers).

Also of interest are the methods according to the invention wherein the composition is a printing ink.

Such printing inks are known to the person skilled in the art, are widely used in the art and are described in the literature. They are, for example, pigmented printing inks and printing inks coloured with dyes.
A printing ink is, for example, a liquid or paste-form dispersion that comprises colorants (pigments or dyes), binders and optionally solvents and/or optionally water and additives. Suitable pigments and dyes are generally known and widely described in the art, as are the printing ink formulations customary in the art.
In the method of the invention suitable printing inks are both solvent-based systems and water-based or solventless systems, for example radiation-curable systems.
The printing inks may also comprise, for example, alkyd systems that dry oxidatively.
A suitable aqueous printing ink composition comprises e.g. a pigment or combination of pigments, a dispersant and a binder. Suitable dispersants include, for example, the customary dispersants known to the person skilled in the art.
The printing ink compositions may also comprise as additional component e.g. an agent having a water-retaining action (humectant), preservatives, antioxidants, degassing agents/antifoams, agents for regulating the viscosity, flow improvers, anti-settling agents, gloss improvers, glidants, adhesion promoters, anti-skin agents, matting agents, emulsifiers, stabilisers, hydrophobic agents, light protection additives, solubilisers, thickeners, buffers, foam-suppressants, substances that inhibit the growth of fungi and/or bacteria, handle improvers and antistatics.

Suitable substrates for the application of the compositions to be cured are, for example, inorganic and organic substrates of all kinds, such as e.g. wood, textiles, paper, ceramics, glass, plastics, such as polyesters, polyethylene terephthalate, polyolefins or cellulose acetate, especially in the form of films, and also metals, such as Al, Cu, Ni, Fe, Zn, Mg and Co, and metal alloys, and GaAs, Si or SiO₂, to which e.g. a protective layer is to be applied. Metal and plastics, especially metal, are preferred.
In the process according to the invention the substrate to be coated preferably is not glass. The surface to be coated may likewise be a basecoat, that is to say the substrate is coated with a basecoat, to which the formulation to be cured in accordance with the method of the invention is applied.
It is also possible to apply a plurality of layers, for example a filler, a colouring basecoat and a clearcoat, and to cure all the coatings together by means of the method of the invention.

The inorganic or organic substrate to be treated can be in any solid form. The substrate is preferably in the form of a powder, a fiber, a film or, especially preferred, a three-dimensional workpiece.
The method according to the invention is suitable especially for the curing of coatings on three-dimensional substrates, more especially those of which the geometry does not allow uniform irradiation by means of UV lamps. In contrast to conventional curing by irradiation with lamps, when curing is carried out using the method according to the invention the coatings are adequately cured even in overshadowed areas of such geometries.

The inorganic or organic substrate is preferably a thermoplastic, elastomeric, inherently crosslinked or crosslinked polymer, a metal oxide or a metal.

Examples of thermoplastic, elastomeric, inherently crosslinked or crosslinked polymers are listed below.
1. Polymers of mono- and di-olefins, for example polypropylene, polyisobutylene, polybutene-1, poly-4-methylpentene-1, polyisoprene or polybutadiene and also polymerisates of cyclo-olefins, for example of cyclopentene or norbornene; and also polyethylene (which may optionally be crosslinked), for example high density polyethylene (HDPE), high density polyethylene of high molecular weight (HDPE-HMW), high density polyethylene of ultra-high molecular weight (HDPE-UHMW), medium density polyethylene (MDPE), low density polyethylene (LDPE), and linear low density polyethylene (LLDPE), (VLDPE) and (ULDPE). Polyolefins, that is to say polymers of mono-olefins, as mentioned by way of example in the preceding paragraph, especially polyethylene and polypropylene, can be prepared by various processes, especially by the following methods:
   a) by free-radical polymerisation (usually at high pressure and high temperature);
   b) by means of a catalyst, the catalyst usually containing one or more metals of group IVb, Vb, VIb or VIII. Those metals generally have one or more ligands, such as oxides, halides, alcoholates, esters, ethers, amines, alkyls, alkenyls and/or aryls, which may be either π- or σ-coordinated. Such metal complexes may be free or fixed to carriers, for example to activated magnesium chloride, titanium(III) chloride, aluminium oxide or silicon oxide. Such catalysts may be soluble or insoluble in the polymerisation medium. The catalysts can be active as such in the polymerisation or further activators may be used, for example metal alkyls, metal hydrides, metal alkyl halides, metal alkyl oxides or metal alkyl oxanes, the metals being elements of group(s) la, IIa and/or IIIa. The activators may have been modified, for example, with further ester, ether, amine or silyl ether groups. Such catalyst systems are usually referred to as Phillips, Standard Oil Indiana, Ziegler (-Natta), TNZ (DuPont), metallocene or Single Site Catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, for example ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/- alkyl acrylate copolymers, ethylene/alkyl methacrylate copolymers, ethylene/vinyl acetate copolymers and copolymers thereof with carbon monoxide, or ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropylene-ethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, for example polyamides.
4. Hydrocarbon resins (for example C₅-C₉) including hydrogenated modifications thereof (for example tackifier resins) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate and methacrylate, styrene/maleic anhydride, styrene/acrylonitrile/methyl acrylate; high-impact-strength mixtures consisting of styrene copolymers and another polymer, for example a polyacrylate, a diene polymer or an ethylene/propylene/diene terpolymer; and also block copolymers of styrene, for example styrene/butadiene/styrene, styrene/isoprene/styrene, styrene/ethylene-butylene/styrene or styrene/ethylene-propylene/- styrene.
7. Graft copolymers of styrene or α-methylstyrene, for example styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned under 6), such as those known, for example, as so-called ABS, MBS, ASA or AES polymers.
8. Halogen-containing polymers, for example polychloroprene, chlorinated rubber, chlorinated and brominated copolymer of isobutylene/isoprene (halobutyl rubber), chlorinated or chlorosulfonated polyethylene, copolymers of ethylene and chlorinated ethylene, epichlorohydrin homo- and co-polymers, especially polymers of halogen-containing vinyl compounds, for example polyvinyl chloride, polyvinylidene chloride, polyvinyl fluoride, polyvinylidene fluoride; and copolymers thereof, such as vinyl chloride/vinylidene chloride, vinyl chloride/vinyl acetate or vinylidene chloride/vinyl acetate.
9. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
10. Copolymers of the monomers mentioned under 9) with one another or with other unsaturated monomers, for example acrylonitrile/butadiene copolymers, acrylonitrile/alkyl acrylate copolymers, acrylonitrile/alkoxyalkyl acrylate copolymers, acrylonitrile/vinyl halide copolymers or acrylonitrile/alkyl methacrylate/butadiene terpolymers.
11. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Point 1.
12. Homo- and co-polymers of cyclic ethers, such as polyalkylene glycols, polyethylene oxide, polypropylene oxide or copolymers thereof with bisglycidyl ethers.
13. Polyacetals, such as polyoxymethylene, and also those polyoxymethylenes which contain comonomers, for example ethylene oxide; polyacetals modified with thermoplastic polyurethanes, acrylates or MBS.
14. Polyphenylene oxides and sulfides and mixtures thereof with styrene polymers or polyamides.
15. Polyurethanes derived from polyethers, polyesters and polybutadienes having terminal hydroxyl groups on the one hand and aliphatic or aromatic polyisocyanates on the other hand, and their initial products.
16. Polyamides and copolyamides derived from diamines and dicarboxylic acids and/or from aminocarboxylic acids or the corresponding lactams, such as polyamide 4, polyamide 6, polyamide 6/6, 6/10, 6/9, 6/12, 4/6, 12/12, polyamide 11, polyamide 12, aromatic polyamides derived from m-xylene, diamine and adipic acid; polyamides prepared from hexamethylenediamine and iso- and/or tere-phthalic acid and optionally an elastomer as modifier, for example poly-2,4,4-trimethylhexamethylene terephthalamide or poly-m-phenylene isophthalamide. Block copolymers of the above-mentioned polyamides with polyolefins, olefin copolymers, ionomers or chemically bonded or grafted elastomers; or with polyethers, for example with polyethylene glycol, polypropylene glycol or polytetramethylene glycol. Also polyamides or copolyamides modified with EPDM or ABS; and polyamides condensed during processing ("RIM polyamide systems").
17. Polyureas, polyimides, polyamide imides, polyether imides, polyester imides, polyhydantoins and polybenzimidazoles.
18. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, and also block polyether esters derived from polyethers with hydroxyl terminal groups; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, urea or melamine on the other hand, such as phenol-formaldehyde, urea-formaldehyde and melamine-formaldehyde resins.
22. Drying and non-drying alkyd resins.
23. Unsaturated polyester resins derived from copolyesters of saturated and unsaturated dicarboxylic acids with polyhydric alcohols, and from vinyl compounds as crosslinking agents, and also the halogen-containing, difficultly combustible modifications thereof.
24. Crosslinkable acrylic resins derived from substituted acrylic acid esters, e.g. from epoxy acrylates, urethane acrylates or polyester acrylates.
25. Alkyd resins, polyester resins and acrylate resins that are crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of bisphenol A diglycidyl ethers, bisphenol F diglycidyl ethers, that are crosslinked using customary hardeners, e.g. anhydrides or amines with or without accelerators.
27. Natural polymers, such as cellulose, natural rubber, gelatin, or polymer-homologously chemically modified derivatives thereof, such as cellulose acetates, propionates and butyrates, and the cellulose ethers, such as methyl cellulose; and also colophonium resins and derivatives.
28. Mixtures (polyblends) of the afore-mentioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
Within the context of the present invention, paper is also to be understood as being an inherently crosslinked polymer, especially in cardboard form, which can additionally be coated with e.g. Teflon®. Such substrates are, for example, commercially available.
The thermoplastic, crosslinked or inherently crosslinked plastics is preferably a polyolefin, polyamide, polyacrylate, polycarbonate, polystyrene or an acrylic/melamine, alkyd or polyurethane coating.
Special preference is given to polycarbonate, polyethylene, polypropylene, polyamide and polyimide. The plastics can be in the form of films, injection-moulded articles, extruded workpieces, fibers, felts or woven materials.

Inorganic substrates that come into consideration are especially metal oxides and metals, especially metals. They may be silicates and semi-metals or metal oxides, which are preferably in the form of powders having average particle diameters of from 10 nm to 2000 µm. They may be compact or porous particles. Examples of oxides and silicates are SiO₂, TiO₂, ZrO₂, MgO, NiO, WO₃, Al₂O₃, La₂O₃, silica gels, clays and zeolites. Preferred inorganic substrates, in addition to the metals, are silica gels, aluminium oxide, titanium oxide and mixtures thereof.

The substrates can be coated by applying a liquid composition, a solution or a suspension to the substrate. The choice of solvent and its concentration are governed chiefly by the nature of the composition and the coating method. The solvent should be inert, that is to say it should not enter into any chemical reaction with the components, and it should be capable of being removed again on drying after the coating operation. Suitable solvents include, for example, ketones, ethers and esters, such as methyl ethyl ketone, isobutyl methyl ketone, cyclopentanone, cyclohexanone, N-methylpyrrolidone, dioxane, tetrahydrofuran, 2-methoxyethanol, 2-ethoxyethanol, 1-methoxy-2-propanol, 1,2-dimethoxyethane, ethyl acetate, n-butyl acetate and ethyl 3-ethoxypropionate.
The formulation is applied uniformly to a substrate by means of known coating methods, for example by spin-coating, dipping, knife coating, curtain pouring, brush application or spraying, especially e.g. by electrostatic spraying and reverse-roll coating, and also by electrophoretic deposition. It is also possible to apply the photosensitive layer to a temporary flexible support and then coat the final substrate by transferring the layer *via* lamination.

The amount applied (layer thickness) is dependent upon the desired field of application. The person skilled in the art will be familiar with the layer thicknesses suitable for the field of application in question, for example in the field of printing inks or paints. The range of layer thicknesses generally includes values of from 1 to 100 µm, e.g. from 5 to 80 µm, especially from 10 to 60 µm, depending upon the field of application.

The method according to the invention is of special interest for metal coating, for example in the coating of sheets and tubes, cans or bottle closures, vehicle components or entire vehicles, especially motor cars.

The invention relates to a coating obtainable by the method described above.

Possible ways of obtaining plasmas under vacuum conditions have been described frequently in the literature. The electrical energy can be coupled in by inductive or capacitive means. It may be direct current or alternating current; the frequency of the alternating current may vary from a few kHz up into the MHz range. A power supply in the microwave range (GHz) is also possible.

The generation of low-temperature plasmas is known and is described, for example, by A. T. Bell, "Fundamentals of Plasma Chemistry" in "Technology and Application of Plasma Chemistry", edited by J. R. Holahan and A. T. Bell, Wiley, New York (1974) or by H. Suhr, Plasma Chem. Plasma Process 3(1),1, (1983).

As primary plasma gases it is possible to use, for example, N₂, He, Ar, Ne, Kr or Xe singly or in admixture. In addition, it is also possible, for example, to add metals and metal halides for doping purposes.
Preferably N₂, He and Ar are employed, as well as mixtures of N₂ and He, or N₂ and Ar. Further, mixtures of more than two gases can be used. It is also possible to first introduce one specific gas and introduce another one lateron. For example, first Ar is employed and after the activation of the plasma mixed with N₂.

The curing chamber is advantageously a chamber, for example of steel, that is provided with a plurality of inlets and outlets in order that both the generation of a vacuum and the introduction of the gas or gases, respectively, required to generate the plasma can be effected. The chamber is equipped with a magnetic device or suitable electrodes with the aid of which the excitation of a plasma is effected. Suitable apparatus is known in the art and is commercially available (for example from Roth & Rau Oberflächentechnik AG, Germany). The chamber may have further inlets and outlets, for example to allow irradiation with IR lamps. The more, the chamber can be provided with metallized (e.g. with aluminium) walls. The chamber is configured especially for the treatment of three-dimensional workpieces, and the coupling-in of microwaves can be matched to the respective actual geometries of the substrate to be coated. The coated substrate can also for example be brought into (conductive) contact with the chamber or can be inserted with an isolation. Further a potential could be applied to influence the conductivity in the chamber.
The pressure can be controlled by the gas inlet, further by special shutters that are part of the chamber.

The coating is cured by the plasma generated in the chamber. For that purpose, *inter alia* the wavelength spectrum generated (emitted) by the plasma discharge of the particular gas or gas mixture used comes into effect. Such wavelengths are, for example, wavelengths of from 50 to 850 nm, for example from 50 to 700 nm, preferably from 150 to 700 nm, especially from 200 to 600 nm.

Treatment in the plasma chamber can optionally be followed by a thermal step. It is also possible to subject the coated substrate to a thermal treatment prior to treatment in the plasma chamber, as well as to carry out both thermal pretreatment and thermal after-treatment. Simultaneous plasma treatment and heat treatment of the coating being cured is also a possibility. The thermal treatment is carried out, for example, by convection (circulating air drying) and/or especially by irradiation with IR lamps. Further, the heat treatment can, for example, be carried out using microwave irradiation. The temperatures are generally governed by the particular binder system used and are, for example, from room temperature to 150°C, e.g. from 25 to 150°C or from 50 to 150°C. In the case of powder coatings the temperatures can also be higher, for example up to 250°C.

The curing of coatings by means of plasma has a decisive advantage over conventional curing using ultraviolet radiators. When an irregularly shaped three-dimensional article is cured in the plasma chamber, all areas are reached by the radiation energy, whereas in the case of irradiation with light any overshadowed areas are irradiated inadequately or are not irradiated at all and therefore undergo irregular curing. For example, the method according to the invention can thus also be used, for example, for the curing of large coated areas, for example the entire bodywork of a vehicle.

The following Examples illustrate the invention further. As in the remainder of the description and in the patent claims, parts or percentages relate to weight unless otherwise indicated. Where reference is made to alkyl or alkoxy radicals having more than three carbon atoms without any indication of their isomeric form, the respective n-isomers are intended.

The following Examples are carried out in a plasma chamber having a volume of about 50 litres. The chamber is equipped with a microwave antenna and gas lances for the introduction of process gases. The chamber can be evacuated to pressures of about 10⁻⁴ mbar by means of a two-stage pump system. The variable process parameters are in each case the gases used (N₂, He, Ar, Ne...) and the ratio of mixtures thereof. Other variable process parameters are the processing time, the microwave power supplied and the process pressure in the chamber as a function of the volumetric flow of gas supplied [sccm] and the power of the evacuation. The position of the coated substrate in the chamber relative to the microwave antenna is also of significance.

### Example 1

A radiation-curable formulation is prepared by mixing together the following components:

| | |
|---|---|
| 89.0 parts | 75 % epoxy acrylate in hexanediol diacrylate (^{®}Ebecryl 604; UCB, Belgium) |
| 10.0 parts | polyethylene glycol 400 diacrylate (^{®}Sartomer SR 344; Sartomer) |
| 1.0 part | silicone diacrylate (^{®}Ebecryl 350, UCB, Belgium) |
| 2.0 parts | phenyl 1-hydroxycyclohexyl-ketone (^{®}Irgacure 184, Ciba Spezialitätenchemie, Switzerland) |

In a vacuum apparatus having a volume of about 50 litres and equipped with an ECR plasma source RR 2509 (Roth & Rau Oberflächentechnik AG, Germany), an angled aluminium sheet which has been coated with the formulation described above is installed on a substrate holder.
After the receptacle of the apparatus has been evacuated to a base pressure of about 10⁻⁵ mbar, (depending upon the nature of the plasma excitation) argon or nitrogen is admitted into the receptacle by way of a mass flow controller up to a working pressure region of 0.01 mbar for a microwave plasma or of about 0.003 mbar for an ECR plasma and the plasma is ignited. For generating the plasmas, a power of 400 to 600 Watt is supplied. After an exposure time of 90 seconds, the plasma treatment is discontinued and air is admitted to the receptacle. The coated sheet is removed. The coating layer applied is cured.

### Example 2

In a vacuum apparatus having a volume of about 50 litres and equipped with a HF parallel plate plasma arrangement, an angled aluminium sheet coated with the formulation according to Example 1 is installed on the lower plate of the arrangement which is configured as a substrate holder. After the receptacle of the apparatus has been evacuated to a base pressure of about 10⁻⁵ mbar, argon or nitrogen is admitted into the receptacle by way of a mass flow controller up to a working pressure region of 0.01 mbar and the gas discharge is generated and the HF plasma ignited by applying a voltage across a parallel plate electrode system consisting of the substrate support itself and a counter-electrode. For generating the plasma, a power of about 10 to 200 Watt is supplied. After an exposure time of 90 seconds, the plasma treatment is discontinued and air is admitted to the receptacle. The coated sheet is removed. The coating layer applied is cured.

### Example 3

The following radiation-curable formulation is applied as described in Example 1 and cured in the plasma:

| | |
|---|---|
| 60.0 parts | bisphenol A epoxy resin (^{®}Araldit GY 250, Vantico), |
| 24.0 parts | trimethylolpropane triglycidyl ether (^{®}Grinolit V51-31, Emschemie), |
| 16.0 parts | C_{12/14}alkyl glycidyl ether (^{®}Grinolit Epoxid 8, Emschemie) |

The formulation is heated to 50°C and uniformly mixed by stirring for 20 minutes in the presence of glass beads as aid. 1.5 % (4-isobutylphenyl)-*p*-tolyl-iodonium hexafluorophosphate is added and dissolved in the formulation by stirring.

### Example 4

The following radiation-curable formulation is applied as described in Example 1 and cured in the plasma:

| | |
|---|---|
| 40.9 parts | Araldite^{®} CY 179 (cycloaliphatic diepoxide, Vantico) |
| 5.0 parts | Tone^{®} 0301 (polycaprolactonetriol, chain-transfer reagent, UCC) |
| 2.0 parts | dipropylene glycol |

1.5 % 4-octyloxyphenylphenyliodonium hexafluoroantimonate is incorporated into this formulation.

### Example 5

1.3 parts by weight of the urethane acrylate described below (5.1) are mixed with 1 part by weight of the malonate ester described below (5.2). 2.5 % of the photolatent base 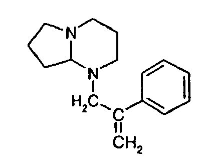 and 0.5 % Quantacure^{®}ITX are added to the resulting resin mixture.

### 5.1 Preparation of the urethane acrylate on the basis of isophorone diisocyanate and 4-hydroxybutyl acrylate.

The reaction is carried out under a nitrogen atmosphere; all commercial chemicals used are used without further purification.
1566.8 g (13.78 mol of NCO) of isophorone diisocyanate, 2.3 g of dibutyltin dilaurate, 2.3 g of 2,5-di-tert-butyl-p-cresol and 802.8 g of butyl acetate are introduced into a three-necked flask having a condenser and dropwise addition device. Dry nitrogen is bubbled through the reaction mixture and the temperature is slowly raised to 60°C. 1987 g (13.78 mol) of 4-hydroxybutyl acrylate are added, the temperature of the reaction solution slowly rising to 80°C. The temperature is maintained at 80°C and the dropwise addition device is rinsed with butyl acetate (86.6 g). The reaction is monitored by titration of the residual isocyanate and is terminated when the isocyanate content is less than 0.2 %, based on the solid. A reaction product having the following physical properties is obtained:
residue: 4-hydroxybutyl acrylate: < 0.002 % based on the solid (HPLC analysis),
colour: << Gardner 1,
viscosity: 43 cPa s (20°C),
solid: 79.3 % (1 hour at 140°C),
GPC data (polystyrene standard), Mₙ 778, M_{w} 796, d=1.02.

### 5.2 Preparation of the malonate polyester

The reaction is carried out under a nitrogen atmosphere; all commercial chemicals used are used without further purification.
In a reaction vessel having a stirrer and a condenser, 1045 g of 1,5-pentanediol, 1377.4 g of diethyl malonate and 242.1 g of xylene are cautiously heated at reflux. The maximum temperature of the reaction mixture is 196°C whereas the temperature at the condenser head is maintained at 79°C. 862 g of ethanol, corresponding to a conversion of 97.7 %, are distilled off in that manner. Xylene is then removed *in vacuo* at a temperature of 200°C. The resulting polymer has a solids content of 98.6 %, a viscosity of 2710 mmPa s and an acid number of 0.3 mg of KOH/g, based on the solid. Mₙ is 1838, M_{w} is 3186, the colour is 175 on the APHA scale (method of the American Public Health Association; "Hazen colour number"; ISO 6271).

The coating is applied to angled coil-coat aluminium so that a dry layer thickness of 30 µm is obtained. The coating is flashed off for 5 minutes at room temperature and then cured in the plasma chamber. The curing is carried out under a N₂/Ar atmosphere having a gas amount ratio of 160/40 sccm; the microwave power corresponds to 800 W for 90 s. The distance between the sample and the microwave antenna is 150 mm. A well cured, tack-free coating is obtained.

### Example 6

A powder coating formulation is prepared by mixing together the following components:

| | |
|---|---|
| 579.2 parts | of an amorphous resin, containing methacrylic and acrylic double bonds (Uvecoat 3000, UCB Chemicals) |
| 58.8 parts | of a flow improver (Resiflow PV 5, Woerlee) |
| 29.4 parts | of a degassing agent (Woerlee Add 902, Woerlee) |
| 12.0 parts | 2-hydroxy-1-[4-(2-hydroxyethoxy)phenyl]-2-methyl-1-propanone as photoinitiator (Irgacure 2959, Ciba Spezialitätenchemie) |

After extrusion and grinding, the powder coating is applied by spray-application to angled coil-coat aluminium sheets. Melting is carried out in a circulating air oven for 5 minutes at 150°C. Curing is effected in the plasma chamber under a N₂/Ar atmosphere having a gas amount ratio of 160/40 sccm; the microwave power corresponds to 800 W for 90 s. The distance between the sample and the microwave antenna is 150 mm. A well cured, tack-free coating is obtained. The degree of final cure is determined with the aid of König pendulum hardness (DIN 53157). The higher the pendulum hardness value, the harder is the coating. The cured powder coating has a pendulum hardness of 180 s.

### Example 7

A photocurable formulation is prepared by mixing together the following components:

| | |
|---|---|
| 44.5 parts | of an aliphatic urethane acrylate (Ebecryl 284; 88 parts aliphatic urethane acrylate/ 12 parts hexanediol diacrylate; Bayer AG) |
| 32.2 parts | of an aliphatic urethane tri/tetra-acrylate (Roskydal UA VP LS 2308; Bayer AG) |
| 50.0 parts | isopropanol |
| 1.5 parts | of a flow improver (Byk 306; Byk Chemie) |

2.7 % 1-hydroxy-cyclohexyl-phenylketone (Irgacure 184, Ciba Spezialitätenchemie), 0.5 % bis(2,4,6-trimethylbenzoyl) phenylphosphine oxide (Irgacure 819, Ciba Spezialitätenchemie), 1.5 % Tinuvin 400 (=mixture of 2-[4-[(2-hydroxy-3-dodecyloxypropyl)oxy]-2-hydroxyphenyl]-4,6-bis(2,4-dimethylphenyl)-1,3,5-triazine and 2-[4-[(2-hydroxy-3-tridecyloxypropyl)oxy]-2-hydroxyphenyl]-4,6-bis(2,4-dimethylphenyl)-1,3,5-triazine, Ciba Spezialitätenchemie) and 1 % Tinuvin 292 (=mixture of bis(1,2,2,6,6-pentamethyl-4-piperidinyl) sebacate and 1-(methyl)-8-(1,2,2,6,6-pentamethyl-4-piperidinyl) sebacate, Ciba Spezialitätenchemie) (based on solid) are added to the formulation given in the Table and stirred at 40°C on a water bath. A coil-coat aluminium is formed into an upside down U shape. The coating is applied with the aid of spray-application so that a resulting dry layer thickness of 30 µm is obtained. The coating on the three-dimensional substrate is flashed off for 5 minutes at room temperature, then for 10 minutes at 80°C in a circulating air oven and is then cured in the plasma chamber. Curing is carried out under a N₂/He atmosphere having a gas amount ratio of 135/65 sccm; the microwave power corresponds to 500 W for 90 s. The distance between the sample and the microwave antenna is 150 mm. A well cured, tack-free coating is obtained. The degree of full-cure is determined with the aid of König pendulum hardness (DIN 53157). The higher the pendulum hardness value, the harder is the coating. The lefthand side of the U-shaped sheet has a pendulum hardness of 67 s, the right-hand side a pendulum hardness of 91 s. The upper side of the U-shaped sheet achieves a pendulum hardness of 126 s.

### Example 8

### Components A and B are prepared by mixing together the following constituents:

### Component A

| | |
|---|---|
| 11.38 parts | of a hydroxyl-group-containing polyacrylate; 70 % in butyl acetate (Desmophen A 870, Bayer AG) |
| 21.23 parts | polyester polyol, 75 % in butyl acetate (Desmophen VP LS 2089, Bayer AG) |
| 0.55 part | of a flow improver (Byk 306, Byk Chemie) |
| 32.03 parts | methanol |

The following photoinitiators and light stabilisers are stirred into component A:

| | |
|---|---|
| 0.17 part | bis(2,4,6-trimethylbenzoyl) phenylphosphine oxide (Irgacure 819, Ciba Spezialitätenchemie) |
| 1.52 parts | 1-hydroxy-cyclohexyl-phenylketone (Irgacure 184, Ciba Spezialitätenchemie) |
| 0.85 part | Tinuvin 400 (=mixture of 2-[4-[(2-hydroxy-3-dodecyloxypropyl)oxy]-2-hydroxyphenyl]-4,6-bis(2,4-dimethylphenyl)-1,3,5-triazine and 2-[4-[(2-hydroxy-3-tridecyloxypropyl)oxy]-2-hydroxyphenyl]-4,6-bis(2,4-dimethylphenyl)-1,3,5-triazine, Ciba Spezialitätenchemie) |
| 0.56 part | Tinuvin 292 (=mixture of bis(1,2,2,6,6-pentamethyl-4-piperidinyl) sebacate and 1-(methyl)-8-(1,2,2,6,6-pentamethyl-4-piperidinyl) sebacate, Ciba Spezialitätenchemie) |

Then Component B

| | |
|---|---|
| 32.09 parts | of an isocyanate-group-containing urethane acrylate (Roskydal UA VP LS 2337, Bayer AG) |

is added and homogeneously distributed.
The coating is applied with a 100 µm slotted knife to a planar coil-coat aluminium, so that a dry layer thickness of 30 µm is obtained. The coating is flashed off for 5 minutes at room temperature, then thermally crosslinked for 15 minutes at 120°C in a circulating air oven and then cured in the plasma chamber. Curing is carried out under a N₂/Ar atmosphere having a gas amount ratio of 160/40 sccm; the microwave power corresponds to 800 W for 90 s. The distance between the sample and the microwave antenna is 150 mm. A well cured, tack-free coating is obtained. The degree of full-cure is determined with the aid of König pendulum hardness (DIN 53157). The higher the pendulum hardness value, the harder is the coating. A value of 118 s is obtained.

### Example 9

A photocurable formulation is prepared by mixing together the following components:

| | |
|---|---|
| 60.0 parts | of a polyester acrylate (Ebecryl 830; UCB Chemicals Belgium) |
| 15.0 parts | hexanediol diacrylate (UCB Chemicals Belgium) |
| 15.0 parts | trimethylolpropane triacrylate (UCB Chemicals Belgium) |
| 9.0 parts | titanium dioxide (Kronos 2310, Kronos Chemicals) |
| 1.0 part | of a copper phthalocyanine (Irgalit Blau BSP, Ciba Specialty Chemicals) |

3 % Irgacure 2020 (= mixture of 20 parts bis(2,4,6-trimethylbenzoyl)-phenylphosphine oxide and 80 parts 1-benzoyl-1-hydroxy-1-methyl-ethane; Ciba Specialty Chemicals) are added to the resulting formulation as photoinitiator.

The coating is applied to angled coil-coat aluminium so that a dry layer thickness of 30 µm is obtained. The coating is flashed off for 5 minutes at room temperature and then cured in the plasma chamber. Curing is carried out under a N₂/Ar atmosphere having a gas amount ratio of 160/40 sccm; the microwave power corresponds to 800 W for 90 s. The distance between the sample and the microwave antenna is 150 mm. A well cured, tack-free coating is obtained.

### Example 10

A photocurable formulation is prepared by mixing together the following components:

| | |
|---|---|
| 98.5 parts | of an amorphous resin having methacrylic and acrylic double bonds (Uvecoat 3000, UCB Chemicals) |
| 1.0 part | flow improver (Resiflow PV 5, Woerlee) |
| 0.5 part | degassing agent (Woerlee Add 902, Woerlee) |
| 1.5 parts | 2-hydroxy-1-[4-(2-hydroxyethoxy)phenyl]-2-methyl-1-propanone (Irgacure 2959, Ciba Specialty Chemicals) |
| 1.5 parts | bis(2,4,6-trimethylbenzoyl)-phenylphosphine oxide (Irgacure 819; Ciba Specialty Chemicals) |
| 0.5 part | carbon black (Spezialschwarz 250, Degussa) |

After extrusion and grinding, the powder coating is applied by spray-application to angled coil-coat aluminium sheets. Melting is carried out in a circulating air oven for 5 minutes at 150°C. Curing is effected in the plasma chamber under a N₂/Ar atmosphere having a gas amount ratio of 160/40 sccm; the microwave power corresponds to 800 W for 90 s. The distance between the sample and the microwave antenna is 150 mm. A well cured, tack-free coating is obtained. The degree of final cure is determined with the aid of König pendulum hardness (DIN 53157). The higher the pendulum hardness value, the harder is the coating. A value of 195 s is obtained.

## Claims

1. A method of curing
a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
a mixture of components (a) and (b), or
a mixture of components (a) and (c); and
(d) at least one photolatent compound that is activatable by plasma discharge;
wherein
the composition is applied to a three-dimensional substrate and
the curing is carried out in a plasma discharge chamber.

2. A method of curing
a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
a mixture of components (a) and (b), or
a mixture of components (a) and (c);
(d) at least one photolatent compound that is activatable by plasma discharge; and
(e) at least one light stabiliser compound or UV absorber compound;
wherein
the curing is carried out in a plasma discharge chamber.

3. A method according to either claim 1 or claim 2, wherein component (d) in the composition is a free-radical photoinitiator, a photolatent acid or a photolatent base.

4. A method according to either claim 1 or claim 2, wherein component (d) in the composition is at least one compound selected from the group of benzophenones, benzophenone derivatives, acetophenone, acetophenone derivatives, halomethylbenzophenones, halomethylarylsulfones, dialkoxyacetophenones, anthracene, anthracene derivatives, thioxanthone, thioxanthone derivatives, 3-ketocoumarin, 3-ketocoumarin derivatives, anthraquinone, anthraquinone derivatives, α-hydroxy- or α-amino-acetophenone derivatives, α-sulfonylacetophenone derivatives, 4-aroyl-1,3-dioxolanes, benzoin alkyl ethers and benzilketals, phenyl glyoxalates and derivatives thereof, dimeric phenyl glyoxalates, peresters, monoacylphosphine oxides, bisacylphosphine oxides, trisacylphosphine oxides, halomethyltriazines, titanocenes, borate compounds, O-acyloxime compounds, camphorquinone derivatives, iodonium salts, sulfonium salts, iron aryl complexes, oximesulfonic acid esters and photolatent amines.

5. A method according to either claim 1 or claim 2, wherein component (d) in the composition is at least one compound of formula I, II, III or/and IV 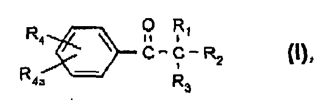 wherein
**R₁** is C₁-C₁₂alkyl or C₁-C₁₂alkoxy;
**R₂** is phenyl, OR₅ or NR₇R₈;
**R₃** has one of the definitions given for R₁ or is C₃-C₁₂alkenyl, phenyl-C₁-C₆alkyl or C₁-C₆alkylphenyl-C₁-C₆alkyl;
or R₁ and R₃, together with the carbon atom to which they are bonded, form a cyclohexyl ring;
R₂ being phenyl when R₁ and R₃ are both alkoxy;
**R₄** and **R₄ₐ** are each independently of the other hydrogen, C₁-C₁₂alkyl, C₁-C₁₂hydroxyalkyl, OR₅, SR₆, NR₇R₈, halogen, 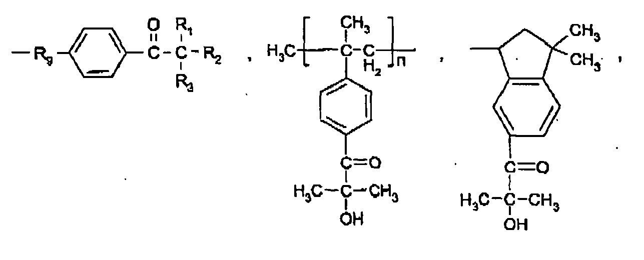 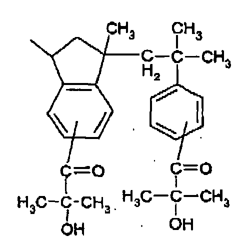 or a monovalent linear or branched siloxane radical;
**n** is a number from 1 to 10;
**R₅** and **R₆** are each independently of the other hydrogen, C₁-C₁₂alkyl, C₁-C₁₂alkenyl, phenyl, benzyl, Si(CH₃)₃ or -[CₐH₂ₐX]_{b}-R₁₀;
**R₇** and **R₈** are each independently of the other hydrogen, C₁-C₁₂alkyl or C₂-C₅hydroxyalkyl, or R₇ and R₈, together with the N atom to which they are bonded, form a 5- or 6-membered ring, which may also contain O atoms or a NR₁₁ group;
**R₉** is a single bond, O, S, NR₁₁, -CH₂CH₂- or 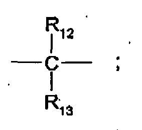
**a** and **b** are each independently of the other a number from 1 to 12;
**X** is S, O or NR₁₁;
**R₁₀** is hydrogen, C₁-C₁₂alkyl or 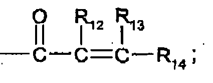
**R₁₁** is hydrogen, phenyl, phenyl-C₁-C₄alkyl, C₁-C₁₂alkyl or C₂-C₅hydroxyalkyl; and
**R₁₂, R₁₃** and **R₁₄** are each independently of the others hydrogen or methyl; 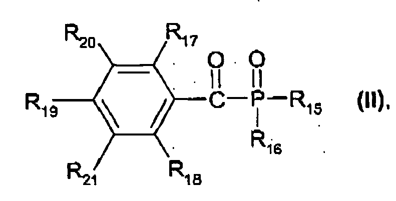 wherein
**R₁₅** and **R₁₆** are each independently of the other C₁-C₁₂alkyl, C₁-C₁₂alkoxy; phenyl which is unsubstituted or substituted by one or more OR₂₂, SR₂₃, NR₂₄R₂₅, C₁-C₁₂alkyl or halogen substituents; or R₁₅ and R₁₆ are biphenylyl, naphthyl, phenyl-C₁-C₄alkyl or 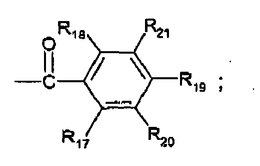
**R₁₇** and **R₁₈** are each independently of the other C₁-C₁₂alkyl, C₁-C₁₂alkoxy, CF₃ or halogen:
**R₁₉**, **R₂₀** and **R₂₁** are each independently of the others hydrogen, C₁-C₁₂alkyl, C₁-C₁₂alkoxy, CF₃ or halogen;
**R₂₂**, **R₂₃**, **R₂₄** and **R₂₅** are each independently of the others hydrogen, C₁-C₁₂alkyl, C₂-C₁₂-alkenyl, C₃-C₈cycloalkyl, phenyl, benzyl, or C₂-C₂₀alkyl which is interrupted by O atoms and is unsubstituted or substituted by OH or/and SH; or R₂₄ and R₂₅, together with the N atom to which they are bonded, form a 5- or 6-membered ring, which may also contain O or S atoms or an NR₂₆ group; and
**R₂₆** is hydrogen, phenyl, phenyl-C₁-C₄alkyl, C₁-C₁₂alkoxy, G₁-C₁₂alkyl or C₁-C₁₂hydroxyalkyl; 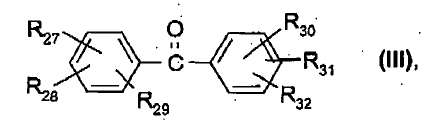 wherein
**R₂₇, R₂₈, R₂₉, R₃₀, R₃₁** and **R₃₂** are each independently of the others hydrogen, C₁-C₄alkyl, phenyl, naphthyl, -OR₃₅, -SR₃₅, -(CO)O(C₁-C₄alkyl), halogen, NR₃₃R₃₄ or a monovalent linear or branched siloxane radical, or R₂₉ and R₃₀, each in the o-position to the carbonyl group, together form a S atom; and
**R₃₃** and **R₃₄** are each independently of the other hydrogen, C₁-C₄alkyl, C₂-C₆hydroxyalkyl, or R₃₃ and R₃₄, together with the N atom to which they are bonded, form a 5- or 6-membered ring, which may also contain O atoms or a NR₁₁ group; and
**R₃₅** is C₁-C₁₂alkyl, C₂-C₆hydroxyalkyl or phenyl; 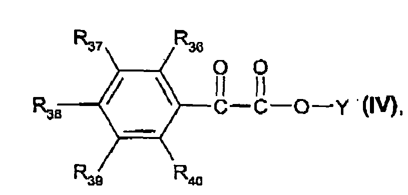 wherein
**R₃₆**, **R₃₇**, **R₃₈**, **R₃₉** and **R₄₀** are each independently of the others hydrogen, C₁-C₁₂alkyl unsubstituted or substituted by OH, C₁-C₄alkoxy, phenyl, naphthyl, halogen, CN and/or by -OCOR₄₁, or C₂-C₁₂alkyl which is interrupted by one or more O atoms, or R₃₆, R₃₇, R₃₈, R₃₉ and R₄₀ are OR₄₂, SR₄₃, NR₄₄R₄₅, halogen, a monovalent linear or branched siloxane radical, or phenyl unsubstituted or substituted by one or two C₁-C₄alkyl or/and one or two C₁-C₄-alkoxy substituents, it being possible for the substituents OR₄₂, SR₄₃, NR₄₄R₄₅ to form 5- or 6-membered rings by way of the radicals R₄₂, R₄₃, R₄₄ and/or R₄₅ with further substituents on the phenyl ring or with one of the carbon atoms of the phenyl ring;
**R₄₁** is C₁-C₈alkyl, or phenyl unsubstituted or substituted by from one to three C₁-C₄alky and/or one to three C₁-C₄alkoxy substituents;
**R₄₂** and **R₄₃** are each independently of the other hydrogen, C₁-C₁₂alkyl unsubstituted or substituted by OH, C₁-C₄alkoxy, phenyl, phenoxy or/and by -OCOR₄₁, or C₂-C₁₂alkyl which is interrupted by one or more O atoms, or R₄₂ and R₄₃ are phenyl unsubstituted or substituted by C₁-C₄alkoxy, phenyl or/and by C₁-C₄alkyl, or R₄₂ and R₄₃ are C₃-C₆alkenyl, cyclopentyl, cyclohexyl or naphthyl;
**R₄₄** and **R₄₅** are each independently of the other hydrogen, C₁-C₁₂alkyl unsubstituted or substituted by OH, C₁-C₄alkoxy or/and by phenyl, or C₁-C₁₂alkyl which is interrupted by one or more O atoms, or R₄₄ and R₄₅ are phenyl, -COR₄₁ or SO₂R₄₆, or R₄₄ and R₄₅, together with the nitrogen atom to which they are bonded, form a 5-, 6- or 7-membered ring, which may also be interrupted by -O- or -NR₄₇-;
**R₄₆** is C₁-C₁₂alkyl, phenyl or 4-methylphenyl;
**R₄₇** is hydrogen, C₁-C₈alkyl unsubstituted or substituted by OH or by C₁-C₄alkoxy, or is phenyl unsubstituted or substituted by OH, C₁-C₄alkyl or by C₁-C₄alkoxy;
**Y** is 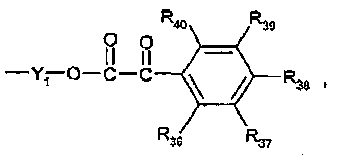 C₁-C₂₀alkyl, phenyl, naphthyl, phenyl-C₁-C₄alkyl or a monovalent linear or branched siloxane radical;
**Y₁** is C₁-C₁₂alkylene, C₄-C₈alkenylene, C₄-C₈alkynylene, cyclohexylene, C₄-C₄₀alkylene interrupted by one or more -O- -S- or -NR₄₈-, or is phenylene or Y₁ is a group 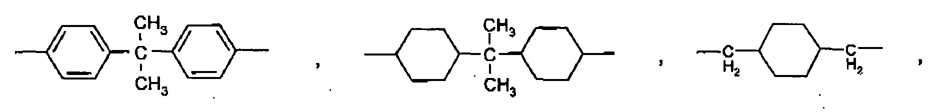 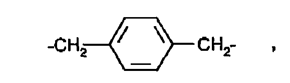 -CH₂CH(OH)CH₂O-Y₂OCH₂CH(OH)CH₂- , -CH₂CH(OH)CH₂- , 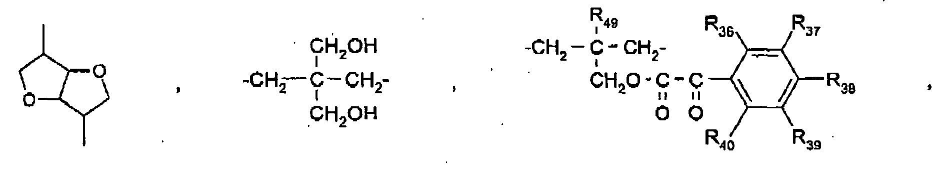 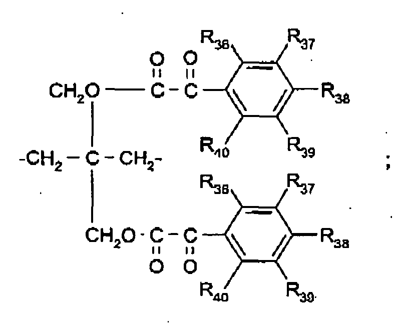 or a divalent linear or branched siloxane radical;
**Y₂** has the same definitions as Y₁ with the exception of the formula
-CH₂CH(OH)CH₂O-Y₂-OCH₂CH(OH)CH₂-;
**R₄₈** is hydrogen, C₁-C₁₂alkyl or phenyl; and
**R₄₉** is hydrogen, CH₂OH or C₁-C₄alkyl.

6. A method according to claim 4, wherein component (d) in the composition is at least one compound of formula I or/and II, especially a mixture of a compound of formula I and a compound of formula II.

7. A method according to either claim 1 or claim 2, wherein component (d) in the composition is at least one compound of formula V, VI, VII or/and VIIa 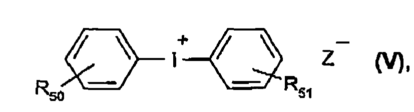 wherein
**R₅₀** and **R₅₁** are each independently of the other hydrogen, C₁-C₂₀alkyl, C₁-C₂₀alkoxy, OH-substituted C₁-C₂₀alkoxy, halogen, C₂-C₁₂alkenyl, cycloalkyl, especially methyl, isopropyl or isobutyl; and
**Z** is an anion, especially PF₆, SbF₆, AsF₆, BF₄, (C₆F₅)₄B, Cl, Br, HSO₄, CF₃-SO₃, F-SO₃, 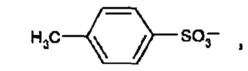 CH₃-SO₃, ClO₄, PO₄, NO₃, SO₄, CH₃-SO₄, 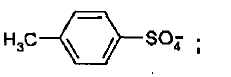 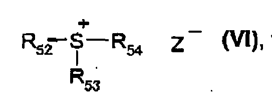 wherein
**R₅₂, R₅₃** and **R₅₄** are each independently of the others unsubstituted phenyl, or phenyl substituted by -S-phenyl or by 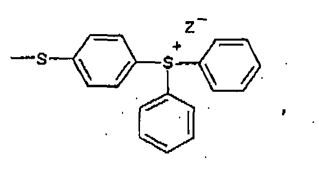
**Z** is as defined above; 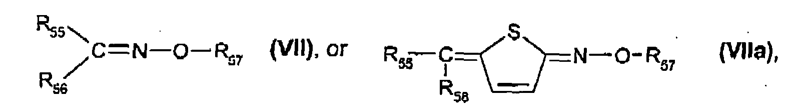 wherein
**R₅₅** is 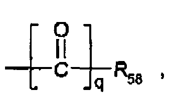 (CO)O-C₁-C₄alkyl, CN or C₁-C₁₂haloalkyl;
**R₅₆** has one of the definitions given for R₅₅ or is 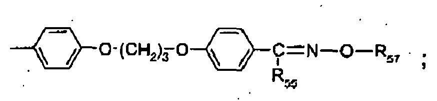
**R₅₇** is C₁-C₁₈alkylsulfonyl, C₁-C₁₀haloalkylsulfonyl, camphorylsulfonyl, phenyl-C₁-C₃alkylsulfonyl, C₃-C₃₀cycloalkylsulfonyl, phenylsulfonyl, naphthylsulfonyl, anthracylsulfonyl or phenanthrylsulfonyl, the groups cycloalkyl, phenyl, naphthyl, anthracyl and phenanthryl of the radicals C₃-C₃₀cycloalkylsuifonyl, phenyl-C₁-C₃alkylsulfonyl, phenylsulfonyl, naphthylsulfonyl, anthracylsulfonyl and phenanthrylsulfonyl being unsubstituted or substituted by one or more halogen, C₁-C₄haloalkyl, CN, NO₂, C₁-C₁₆alkyl, phenyl, C₁-C₄alkylthio, C₁-C₄alkoxy, phenoxy, C₁-C₄alkyl-O(CO)-, C₁-C₄alkyl-(CO)O-, R₆₇OSO₂- and/or -NR₆₀R₆₁ substituents; or
R₅₇ is C₂-C₆haloalkanoyl, halobenzoyl, 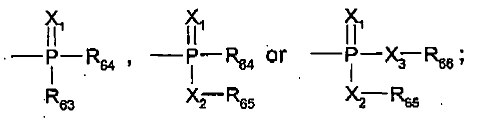
**X₁, X₂** and **X₃** are each independently of the others O or S;
q is 0 or 2; and
**R₅₈** is C₁-C₁₂alkyl, cyclohexyl, camphoryl, unsubstituted phenyl, or phenyl substituted by one or more halogen, C₁-C₁₂alkyl, OR₅₉, SR₅₉ or NR₆₀R₆₁ substituents;
**R₅₉** is C₁-C₁₂alkyl, phenyl, phenyl-C₁-C₄alkyl or C₁-C₁₂hydroxyalkyl;
**R₆₀** and **R₆₁** are each independently of the other hydrogen, C₁-C₄alkyl, C₂-C₆hydroxyalkyl, or R₆₀ and R₆₁, together with the N atom to which they are bonded, form a 5- or 6-membered ring, which may also contain O atoms or an NR₆₂ group;
**R₆₂** is hydrogen, phenyl, phenyl-C₁-C₄alkyl, C₁-C₁₂alkyl or C₂-C₅hydroxyalkyl;
**R₆₃, R₆₄, R₆₅** and **R₆₆** are each independently of the others C₁-C₆alkyl, C₁-C₆haloalkyl; or phenyl unsubstituted or substituted by C₁-C₄alkyl or by halogen; and
**R₆₇** is hydrogen, C₁-C₄alkyl, phenyl or tolyl.

8. A method according to either claim 1 or claim 2, wherein component (d) in the composition is at least one compound of formula VIII 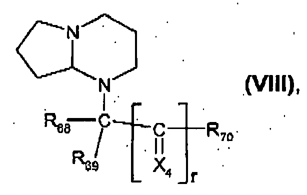 wherein
**r** is 0 or 1;
**X₄** is CH₂ or O;
**R₆₈** and **R₆₉** are each independently of the other hydrogen or C₁-C₂₀alkyl; and
**R₇₀** is unsubstituted or C₁-C₁₂alkyl- or C₁-C₁₂alkoxy-substituted phenyl, naphthyl or biphenylyl.

9. A method according to either claim 1 or claim 2, wherein the composition comprises, in addition to the photolatent component (d), other additives (h), sensitiser compounds (f) or/and dyes or pigments (g).

10. A method according to claim 1, wherein the composition comprises at least one light stabiliser or/and at least one UV absorber compound.

11. A method according to either claim 1 or claim 2, wherein the composition is a surface coating.

12. A method according to either claim 1 or claim 2; wherein the composition is a printing ink.

13. A method according to either claim 1 or claim 2, wherein the composition comprises as polymerisable component solely free-radical-polymerisable compounds (a).

14. A method according to claim 13, wherein the free-radical-polymerisable compound comprises at least one mono-, di-, tri- or tetra-functional acrylate monomer and/or at least one mono-, di-, tri- or tetra-functional acrylate-functional oligomer.

15. A method according to either claim 1 or claim 2, wherein the composition comprises as polymerisable component solely cationically polymerisable or crosslinkable compounds (b).

16. A method according to either claim 1 or claim 2, wherein the composition comprises as polymerisable component a mixture of at least one free-radical-polymerisable compound (a) and at least one cationically polymerisable compound (b).

17. A coated substrate which is coated on at least one surface by means of the method according to either claim 1 or claim 2.

18. A coating obtainable by a method according to either claim 1 or claim 2.

19. A method of producing mouldings from composite materials, wherein a support is impregnated with a composition comprising
(a) at least one free-radical-polymerisable compound or
(b) at least one compound that, under the action of an acid, is able to enter into a polymerisation, polycondensation or polyaddition reaction, or
(c) at least one compound that, under the action of a base, is able to enter into a polymerisation, polycondensation or polyaddition reaction, or
a mixture of components (a) and (b), or
a mixture of components (a) and (c); and
(d) at least one photolatent compound that is activatable by plasma discharge;
and is introduced into a mould;
wherein the curing is carried out in a plasma discharge chamber and, optionally, thermal aftertreatment is carried out.

## Patentansprüche

1. Verfahren zum Härten
einer Zusammensetzung, umfassend
(a) mindestens eine radikalisch polymerisierbare Verbindung oder
(b) mindestens eine Verbindung, die unter der Einwirkung einer Säure in eine Polymerisations-, Polykondensations- oder Polyadditionsreaktion eintreten kann, oder
(c) mindestens eine Verbindung, die unter der Einwirkung einer Base in eine Polymerisations-, Polykondensations- oder Polyadditionsreaktion eintreten kann, oder
eine Mischung von Komponenten (a) und (b) oder eine Mischung von Komponenten (a) und (c); und
(d) mindestens eine photolatente Verbindung, die durch Plasmaentladung aktivierbar ist;
bei dem man
die Zusammensetzung auf ein dreidimsionales Substrat aufbringt und
die Härtung in einer Plasmaentladungskammer durchführt.

2. Verfahren zum Härten
einer Zusammensetzung, umfassend
(a) mindestens eine radikalisch polymerisierbare Verbindung oder
(b) mindestens eine Verbindung, die unter der Einwirkung einer Säure in eine Polymerisations-, Polykondensations- oder Polyadditionsreaktion eintreten kann, oder
(c) mindestens eine Verbindung, die unter der Einwirkung einer Base in eine Polymerisations-, Polykondensations- oder Polyadditionsreaktion eintreten kann, oder
eine Mischung von Komponenten (a) und (b) oder eine Mischung von Komponenten (a) und (c);
(d) mindestens eine photolatente Verbindung, die durch Plasmaentladung aktivierbar ist; und
(e) mindestens eine Lichtschutzmittelverbindung oder UV-Absorber-Verbindung;
bei dem man
die Härtung in einer Plasmaentladungskammer durchführt.

3. Verfahren nach Anspruch 1 oder Anspruch 2, bei dem es sich bei Komponente (d) in der Zusammensetzung um einen radikalischen Photoinitiator, eine photolatente Säure oder eine photolatente Base handelt.

4. Verfahren nach Anspruch 1 oder Anspruch 2, bei dem es sich bei Komponente (d) in der Zusammensetzung um mindestens eine Verbindung aus der Gruppe bestehend aus Benzophenonen, Benzophenonderivaten, Acetophenon, Acetophenonderivaten, Halogenmethylbenzophenonen, Halogenmethylarylsulfonen, Dialkoxyacetophenonen, Anthracen, Anthracenderivaten, Thioxanthon, Thioxanthonderivaten, 3-Ketocumarin, 3-Ketocumarinderivaten, Anthrachinon, Anthrachinonderivaten, α-Hydroxy- oder α-Aminoacetophenonderivaten, α-Sulfonylacetophenonderivaten, 4-Aroyl-1,3-dioxolanen, Benzoinalkylethern und Benzilketalen, Phenylglyoxalaten und Derivaten davon, dimeren Phenylglyoxalaten, Perstern, Monoacylphosphinoxiden, Bisacylphosphinoxiden, Trisacylphosphinoxiden, Halogenmethyltriazinen, Titanocenen, Boratverbindungen, O-Acyloximverbindungen, Campherchinonderivaten, Iodoniumsalzen, Sulfoniumsalzen, Eisen-Aryl-Komplexen, Oximsulfonsäureestern und photolatenten Aminen handelt.

5. Verfahren nach Anspruch 1 oder Anspruch 2, bei dem es sich bei Komponente (d) in der Zusammensetzung um mindestens eine Verbindung der Formel I, II, III oder/und IV 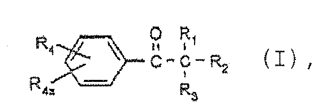 worin
R₁ für C₁-C₁₂-Alkyl oder C₁-C₁₂-Alkoxy steht;
R₂ für Phenyl, OR₅ oder NR₇R₈ steht;
R₃ eine der für R₁ angegebenen Bedeutungen besitzt oder für C₃-C₁₂-Alkenyl, Phenyl-C₁-C₆-alkyl oder C₁-C₆-Alkylphenyl-C₁-C₆-alkyl steht;
oder R₁ und R₃ zusammen mit dem Kohlenstoffatom, an das sie gebunden sind, einen Cyclohexylring bilden;
wobei R₂ für Phenyl steht, wenn R₁ und R₃ beide für Alkoxy stehen;
R₄ und R₄ₐ jeweils unabhängig voneinander für Wasserstoff, C₁-C₁₂-Alkyl, C₁-C₁₂-Hydroxyalkyl, OR₅, SR₆, NR₇R₈, Halogen, 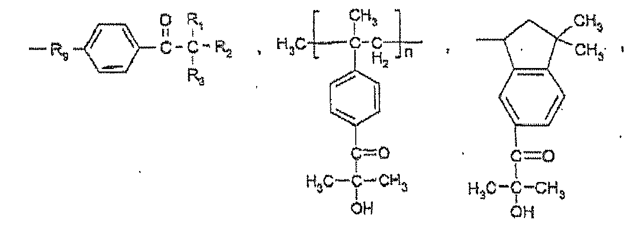 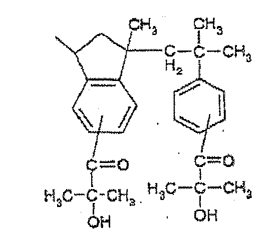 oder einen einwertigen linearen
oder verzweigten Siloxanrest stehen;
n für eine Zahl von 1 bis 10 steht;
R₅ und R₆ jeweils unabhängig voneinander für Wasserstoff, C₁-C₁₂-Alkyl, C₁-C₁₂-Alkenyl, Phenyl, Benzyl, Si(CH₃)₃ oder -[CₐH₂ₐX]_{b}-R₁₀ stehen;
R₇ und R₈ jeweils unabhängig voneinander für Wasserstoff, C₁-C₁₂-Alkyl oder C₂-C₅-Hydroxyalkyl stehen oder R₇ und R₈ zusammen mit dem N-Atom, an das sie gebunden sind, einen 5- oder 6-gliedrigen Ring bilden, der auch O-Atome oder eine NR₁₁-Gruppe enthalten kann;
R₉ für eine Einfachbindung, 0, S, NR₁₁, -CH₂CH₂- oder 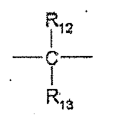 steht;
a und b jeweils unabhängig voneinander für eine Zahl von 1 bis 12 stehen;
X für S, O oder NR₁₁ steht;
R₁₀ für Wasserstoff, C₁-C₁₂-Alkyl oder 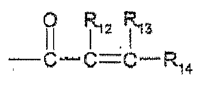 steht;
R₁₁ für Wasserstoff, Phenyl, Phenyl-C₁-C₄-alkyl, C₁-C₁₂-Alkyl oder C₂-C₅-Hydroxyalkyl steht und
R₁₂, R₁₃ und R₁₄ jeweils unabhängig voneinander für Wasserstoff oder Methyl stehen; 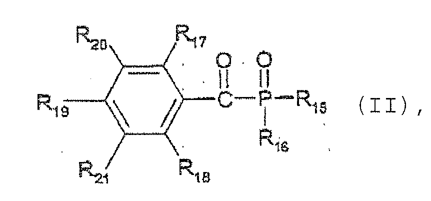 worin
R₁₅ und R₁₆ jeweils unabhängig voneinander für C₁-C₁₂-Alkyl, C₁-C₁₂-Alkoxy; Phenyl, das gegebenenfalls durch einen oder mehrere OR₂₂-, SR₂₃-, NR₂₄R₂₅-, C₁-C₁₂-Alkyl- oder Halogensubstituenten substituiert ist; stehen oder R₁₅ und R₁₆ für Biphenylyl, Naphthyl, Phenyl-C₁-C₄-alkyl oder 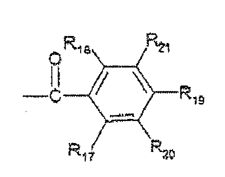 stehen;
R₁₇ und R₁₈ jeweils unabhängig voneinander für C₁-C₁₂-Alkyl, C₁-C₁₂-Alkoxy, CF₃ oder Halogen stehen; R₁₉, R₂₀ und R₂₁ jeweils unabhängig voneinander für Wasserstoff, C₁-C₁₂-Alkyl, C₁-C₁₂-Alkoxy, CF₃ oder Halogen stehen;
R₂₂, R₂₃, R₂₄ und R₂₅ jeweils unabhängig voneinander für Wasserstoff, C₁-C₁₂-Alkyl, C₂-C₁₂-Alkenyl, C₃-C₈-Cycloalkyl, Phenyl, Benzyl oder C₂-C₂₀-Alkyl, das durch O-Atome unterbrochen und gegebenenfalls durch OH oder/und SH substituiert ist, stehen oder R₂₄ und R₂₅ zusammen mit dem N-Atom, an das sie gebunden sind, einen 5- oder 6-gliedrigen Ring bilden, der auch 0- oder S-Atome oder eine NR₂₆-Gruppe enthalten kann; und
R₂₆ für Wasserstoff, Phenyl, Phenyl-C₁-C₄-alkyl, C₁-C₁₂-Alkoxy, C₁-C₁₂-Alkyl oder C₁-C₁₂-Hydroxyalkyl steht; 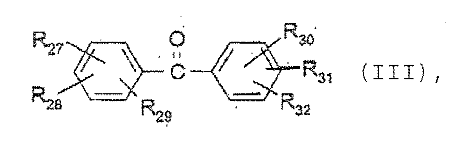 worin
R₂₇, R₂₈, R₂₉, R₃₀, R₃₁ und R₃₂ jeweils unabhängig voneinander für Wasserstoff, C₁-C₄-Alkyl, Phenyl, Naphthyl, -OR₃₅, -SR₃₅, - (CO) 0 (C₁-C₄-Alkyl), Halogen, NR₃₃R₃₄ oder einen einwertigen linearen oder verzweigten Siloxanrest stehen oder R₂₉ und R₃₀, jeweils in der o-Position zur Carbonylgruppe, zusammen ein S-Atom bilden und
R₃₃ und R₃₄ jeweils unabhängig voneinander für Wasserstoff, C₁-C₄-Alkyl, C₂-C₆-Hydroxyalkyl stehen oder R₃₃ und R₃₄ zusammen mit dem N-Atom, an das sie gebunden sind, einen 5- oder 6-gliedrigen Ring bilden, der auch O-Atome oder eine NR₁₁-Gruppe enthalten kann; und
R₃₅ für C₁-C₁₂-Alkyl, C₂-C₆-Hydroxyalkyl oder Phenyl steht; 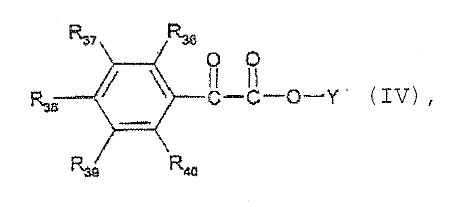 worin
R₃₆, R₃₇, R₃₈, R₃₉ und R₄₀ jeweils unabhängig voneinander für Wasserstoff, C₁-C₁₂-Alkyl, das gegebenenfalls durch OH, C₁-C₄-Alkoxy, Phenyl, Naphthyl, Halogen, CN und/oder -OCOR₄₁ substituiert ist, oder C₂-C₁₂-Alkyl, das durch ein oder mehrere O-Atome unterbrochen ist, stehen oder R₃₆, R₃₇, R₃₈, R₃₉ und R₄₀ für OR₄₂, SR₄₃, NR₄₄R₄₅, Halogen, einen einwertigen linearen oder verzweigten Siloxanrest oder Phenyl, das gegebenenfalls durch einen oder zwei C₁-C₄-Alkyl- oder/und einen oder zwei C₁-C₄-Alkoxysubstituenten substituiert ist, stehen, wobei die Substituenten OR₄₂, SR₄₃ und NR₄₄R₄₅ über die Reste R₄₂, R₄₃, R₄₄ und/oder R₄₅ mit weiteren Substituenten am Phenylring oder mit einem der Kohlenstoffatome des Phenylrings 5- oder 6-gliedrige Ringe bilden können;
R₄₁ für C₁-C₈-Alkyl oder Phenyl, das gegebenenfalls durch einen bis drei C₁-C₄-Alkyl- und/oder einen bis drei C₁-C₄-Alkoxysubstituenten substituiert ist, steht;
R₄₂ und R₄₃ jeweils unabhängig voneinander für Wasserstoff, C₁-C₁₂-Alkyl, das gegebenenfalls durch OH, C₁-C₄-Alkoxy, Phenyl, Phenoxy oder/und -OCOR₄₁ substituiert ist, oder C₂-C₁₂-Alkyl, das durch ein oder mehrere O-Atome unterbrochen ist, stehen oder R₄₂ und R₄₃ für Phenyl, das gegebenenfalls durch C₁-C₄-Alkoxy, Phenyl oder/und C₁-C₄-Alkyl substituiert ist, stehen oder R₄₂ und R₄₃ für C₃-C₆-Alkenyl, Cyclopentyl, Cyclohexyl oder Naphthyl stehen;
R₄₄ und R₄₅ jeweils unabhängig voneinander für Wasserstoff, C₁-C₁₂-Alkyl, das gegebenenfalls durch OH, C₁-C₄-Alkoxy oder/und Phenyl substituiert ist, oder C₂-C₁₂-Alkyl, das durch ein oder mehrere O-Atome unterbrochen ist, stehen oder R₄₄ und R₄₅ für Phenyl, -COR₄₁ oder SO₂R₄₆ stehen oder R₄₄ und R₄₅ zusammen mit dem Stickstoffatom, an das sie gebunden sind, einen 5-, 6- oder 7-gliedrigen Ring bilden, der auch durch -O- oder -NR₄₇- unterbrochen sein kann;
R₄₆ für C₁-C₁₂-Alkyl, Phenyl oder 4-Methylphenyl steht;
R₄₇ für Wasserstoff, C₁-C₈-Alkyl, das gegebenenfalls durch OH oder C₁-C₄-Alkoxy substituiert ist, oder Phenyl, das gegebenenfalls durch OH, C₁-C₄-Alkyl oder C₁-C₄-Alkoxy substituiert ist, steht;
Y für 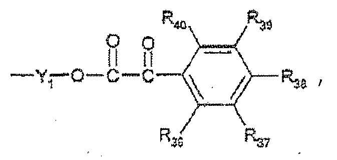 C₁-C₂₀-Alkyl, Phenyl, Naphthyl, Phenyl-C₁-C₄-alkyl oder einen einwertigen linearen oder verzweigten Siloxanrest steht;
Y₁ für C₁-C₁₂-Alkylen, C₄-C₈-Alkenylen, C₄-C₈-Alkinylen, Cyclohexylen, C₄-C₄₀-Alkylen, das duch ein oder mehrere -O-, -S- oder -NR₄₈- unterbrochen ist, oder Phenylen steht oder Y₁ für eine Gruppe 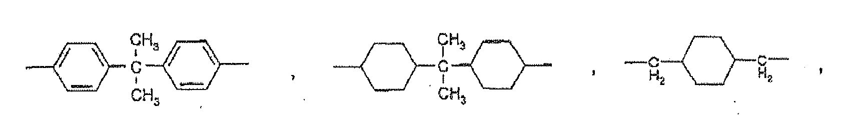 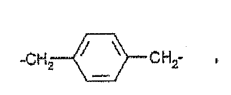 -CH₂CH(OH)CH₂O-Y₂-OCH₂CH(OH)CH₂- , -CH₂CH(OH)CH₂- , 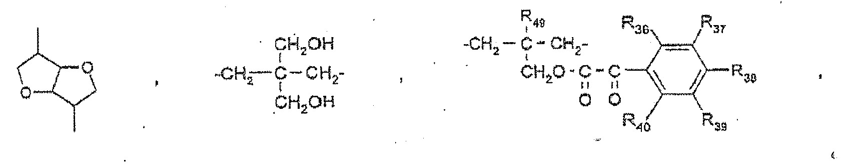 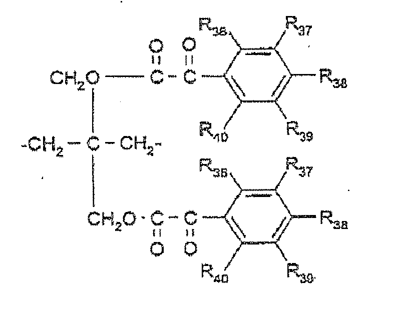
oder einen zweiwertigen linearen oder verzweigten Siloxanrest steht;
Y₂ die gleichen Bedeutungen wie Y₁ besitzt, mit Ausnahme der Formel
-CH₂CH(OH)CH₂O-Y₂-OCH₂CH(OH)CH₂-;
R₄₈ für Wasserstoff, C₁-C₁₂-Alkyl oder Phenyl steht und
R₄₉ für Wasserstoff, CH₂OH oder C₁-C₄-Alkyl steht; handelt.

6. Verfahren nach Anspruch 4, bei dem es sich bei Komponente (d) in der Zusammensetzung um mindestens eine Verbindung der Formel I oder/und II und insbesondere eine Mischung einer Verbindung der Formel I und einer Verbindung der Formel II handelt.

7. Verfahren nach Anspruch 1 oder Anspruch 2, bei dem es sich bei Komponente (d) in der Zusammensetzung um mindestens eine Verbindung der Formel V, VI, VII oder/und VIIa 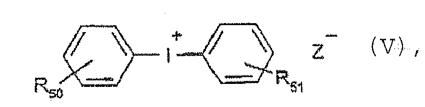 worin
R₅₀ und R₅₁ jeweils unabhängig voneinander für Wasserstoff, C₁-C₂₀-Alkyl, C₁-C₂₀-Alkoxy, OHsubstituiertes C₁-C₂₀-Alkoxy, Halogen, C₂-C₁₂-Alkenyl, Cycloalkyl, insbesondere Methyl, Isopropyl oder Isobutyl, stehen und
Z für ein Anion, insbesondere PF₆, SbF₆, AsF₆, BF₄, (C₆F₅)₄B, Cl, Br, HSO₄, CF₃-SO₃, F-SO₃, 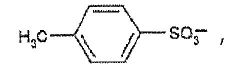 CH₃-SO₃, ClO₄, PO₄, NO₃, SO₄, CH₃-SO₄, 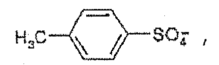 steht; 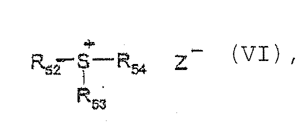 worin
R₅₂, R₅₃ und R₅₄ jeweils unabhängig voneinander für unsubstituiertes Phenyl oder Phenyl, das durch -S-Phenyl oder 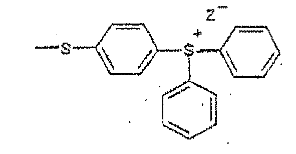 substituiert ist, stehen,
Z die oben angegebene Bedeutung besitzt; 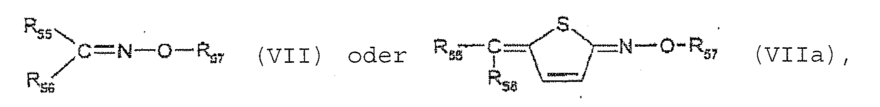 worin
R₅₅ für 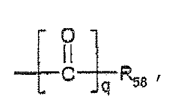 (CO)O-C₁-C₄-Alkyl, CN oder C₁-C₁₂-Halogenalkyl steht;
R₅₆ eine der für R₅₅ angegebenen Bedeutungen besitzt oder für 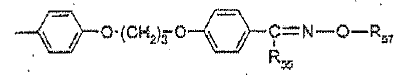 steht;
R₅₇ für C₁-C₁₈-Alkylsulfonyl, C₁-C₁₀-Halogenalkylsulfonyl, Campherylsulfonyl, Phenyl-C₁-C₃-alkylsulfonyl, C₃-C₃₀-Cycloalkylsulfonyl, Phenylsulfonyl, Naphthylsulfonyl, Anthracylsulfonyl oder Phenanthrylsulfonyl, wobei die Cycloalkyl-, Phenyl-, Naphthyl-, Anthracyl- und Phenanthrylgruppen der C₃-C₃₀-Cycloalkylsulfonyl-, Phenyl-C₁-C₃-alkylsulfonyl-, Phenylsulfonyl-, Naphthylsulfonyl-, Anthracylsulfonyl- und Phenanthrylsulfonylreste gegebenenfalls durch einen oder mehrere Halogen-, C₁-C₄-Halogenalkyl-, CN-, NO₂-, C₁-C₁₆-Alkyl-, Phenyl-, C₁-C₄-Alkylthio-, C₁-C₄-Alkoxy-, Phenoxy-, C₁-C₄-Alkyl-O(CO)-, C₁-C₄-Alkyl-(CO)O-, R₆₇OSO₂- und/oder -NR₆₀R₆₁-Substituenten substituiert sind, steht oder R₅₇ für C₂-C₆-Halogenalkanoyl, Halogenbenzoyl, 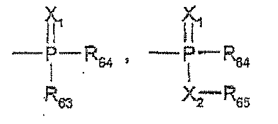 oder 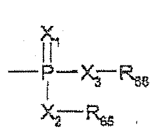 steht;
X₁, X₂ und X₃ jeweils unabhängig voneinander für 0 oder S stehen;
q für 0 der 2 steht und
R₅₈ für C₁-C₁₂-Alkyl, Cyclohexyl, Campheryl, unsubstituiertes Phenyl oder Phenyl, das durch einen oder mehrere Halogen-, C₁-C₁₂-Alkyl-, OR₅₉-, SR₅₉- oder NR₆₀R₆₁-Substituenten substituiert ist, steht;
R₅₉ für C₁-C₁₂-Alkyl, Phenyl, Phenyl-C₁-C₄-alkyl oder C₁-C₁₂-Hydroxyalkyl steht;
R₆₀ und R₆₁ jeweils unabhängig voneinander für Wasserstoff, C₁-C₄-Alkyl, C₂-C₆-Hydroxyalkyl stehen oder R₆₀ und R₆₁ zusammen mit dem N-Atom, an das sie gebunden sind, einen 5- oder 6-gliedrigen Ring bilden, der auch O-Atome oder eine NR₆₂-Gruppe enthalten kann;
R₆₂ für Wasserstoff, Phenyl, Phenyl-C₁-C₄-alkyl, C₁-C₁₂-Alkyl oder C₂-C₅-Hydroxyalkyl steht;
R₆₃, R₆₄, R₆₅ und R₆₆ jeweils unabhängig voneinander für C₁-C₆-Alkyl, C₁-C₆-Halogenalkyl oder Phenyl, das gegebenenfalls durch C₁-C₄-Alkyl oder Halogen substituiert ist, stehen und
R₆₇ für Wasserstoff, C₁-C₄-Alkyl, Phenyl oder Tolyl steht;
handelt.

8. Verfahren nach Anspruch 1 oder Anspruch 2, bei dem es sich bei Komponente (d) in der Zusammensetzung um mindestens eine Verbindung der Formel VIII 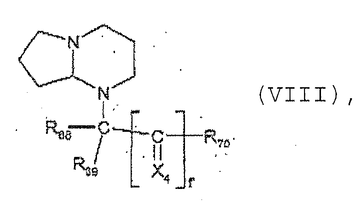 worin
r für 0 oder 1 steht;
X₄ für CH₂ oder O steht;
R₆₈ und R₆₉ jeweils unabhängig voneinander für Wasserstoff oder C₁-C₂₀-Alkyl stehen und
R₇₀ für gegebenenfalls C₁-C₁₂-alkyl- oder C₁-C₁₂-alkoxysubstituiertes Phenyl, Naphthyl oder Biphenylyl steht;
handelt.

9. Verfahren nach Anspruch 1 oder Anspruch 2, bei dem die Zusammensetzung neben der photolatenten Komponente (d) weitere Additive (h), Sensibilisatorverbindungen (f) oder/und Farbstoffe oder Pigmente (g) umfaßt.

10. Verfahren nach Anspruch 1, bei dem die Zusammensetzung mindestens ein Lichtschutzmittel oder/und mindestens eine UV-Absorberverbindung umfaßt.

11. Verfahren nach Anspruch 1 oder Anspruch 2, bei dem es sich bei der Zusammensetzung um eine Oberflächenbeschichtung handelt.

12. Verfahren nach Anspruch 1 oder Anspruch 2, bei dem es sich bei der Zusammensetzung um eine Druckfarbe handelt.

13. Verfahren nach Anspruch 1 oder Anspruch 2, bei dem die Zusammensetzung als polymerisierbare Komponente ausschließlich radikalisch polymerisierbare Verbindungen (a) umfaßt.

14. Verfahren nach Anspruch 13, bei dem die radikalisch polymerisierbare Verbindung mindestens ein mono-, di-, tri- oder tetrafunktionelles Acrylatmonomer und/oder mindestens ein mono-, di-, tri- oder tetrafunktionelles acrylatfunktionelles Oligomer umfaßt.

15. Verfahren nach Anspruch 1 oder Anspruch 2, bei dem die Zusammensetzung als polymerisierbare Komponente ausschließlich kationisch polymerisierbare oder vernetzbare Verbindungen (b) umfaßt.

16. Verfahren nach Anspruch 1 oder Anspruch 2, bei dem die Zusammensetzung als polymerisierbare Komponente eine Mischung von mindestens einer radikalisch polymerisierbaren Verbindung (a) und mindestens einer kationisch polymerisierbaren Verbindung (b) umfaßt.

17. Beschichtetes Substrat, das nach dem Verfahren nach Anspruch 1 oder Anspruch 2 auf mindestens einer Oberfläche beschichtet worden ist.

18. Beschichtung, die nach einem Verfahren nach Anspruch 1 oder Anspruch 2 erhältlich ist.

19. Verfahren zur Herstellung von Formkörpern aus Verbundwerkstoffen, bei dem man einen Träger mit einer Zusammensetzung, umfassend
(a) mindestens eine radikalisch polymerisierbare Verbindung oder
(b) mindestens eine Verbindung, die unter der Einwirkung einer Säure in eine Polymerisations-, Polykondensations- oder Polyadditionsreaktion eintreten kann, oder
(c) mindestens eine Verbindung, die unter der Einwirkung einer Base in eine Polymerisations-, Polykondensations- oder Polyadditionsreaktion eintreten kann, oder
eine Mischung von Komponenten (a) und (b) oder eine Mischung von Komponenten (a) und (c); und
(d) mindestens eine photolatente Verbindung, die durch Plasmaentladung aktivierbar ist;
imprägniert und in eine Form einbringt;
wobei man die Härtung in einer Plasmaentladungskammer durchführt und gegebenenfalls eine thermische Nachbehandlung duchführt.

## Revendications

1. Procédé de durcissement d'une composition comprenant
(a) au moins un composé polymérisable par radicaux libres, ou
(b) au moins un composé qui, sous l'action d'un acide, est capable de réagir selon une réaction de polymérisation, polycondensation ou polyaddition, ou
(c) au moins un composé qui, sous l'action d'une base, est capable de réagir selon une réaction de polymérisation, polycondensation ou polyaddition, ou
un mélange de composants (a) et (b), ou
un mélange de composants (a) et (c) ; et
(d) au moins un composé photolatent qui est activable par décharge plasma ;
la composition étant appliquée sur un substrat tridimensionnel et
le durcissement étant réalisé dans une chambre de décharge plasma.

2. Procédé de durcissement d'une composition comprenant
(a) au moins un composé polymérisable par radicaux libres, ou
(b) au moins un composé qui, sous l'action d'un acide, est capable de réagir selon une réaction de polymérisation, polycondensation ou polyaddition, ou
(c) au moins un composé qui, sous l'action d'une base, est capable de réagir selon une réaction de polymérisation, polycondensation ou polyaddition, ou un mélange de composants (a) et (b), ou
un mélange de composants (a) et (c) ;
(d) au moins un composé photolatent qui est activable par décharge plasma ; et
(e) au moins un composé photostabilisateur ou un composé absorbeur UV ;
le durcissement étant réalisé dans une chambre de décharge plasma.

3. Procédé selon la revendication 1 ou la revendication 2, dans lequel le composant (d) de la composition est un photoinitiateur à radicaux libres, un acide photolatent ou une base photolatente.

4. Procédé selon la revendication 1 ou la revendication 2, dans lequel le composant (d) de la composition est au moins un composé choisi dans le groupe des benzophénones, des dérivés de benzophénone, de l'acétophénone, des dérivés d'acétophénone, des halogénométhylbenzophénones, des halogénométhylarylsulfones, des dialcoxyacétophénones, de l'anthracène, des dérivés d'anthracène, de la thioxanthone, des dérivés de thioxanthone, de la 3-cétocoumarine, des dérivés de 3-cétocoumarine, de l'anthraquinone, des dérivés d'anthraquinone, des dérivés d'α-hydroxy- ou α-amino-acétophénone, des dérivés d'α-sulfonylacétophénone, des 4-aroyl-1,3-dioxolanes, des éthers alkyliques de benzoïne et des benzylcétals, des glyoxalates de phényle et leurs dérivés, des glyoxalates de phényle dimères, des peresters, des oxydes de monoacylphosphine, des oxydes de bisacylphosphine, des oxydes de trisacylphosphine, des halogénométhyltriazines, des titanocènes, des composés de borates, des composés d'O-acyloxime, des dérivés de camphorquinone, des sels d'iodonium, des sels de sulfonium, des complexes aryliques de fer, des esters de l'acide oximesulfonique et des amines photolatentes.

5. Procédé selon la revendication 1 ou la revendication 2, dans lequel le composant (d) de la composition est au moins un composé de formule I, II, III et/ou IV 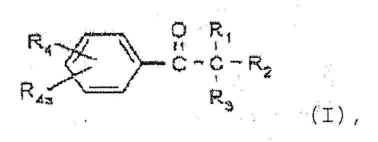 dans laquelle
R₁ est un alkyle en C₁-C₁₂ ou un alcoxy en C₁-C₁₂ ;
R₂ est un phényle, OR₅ ou NR₇R₈ ;
R₃ a une des définitions données pour R₁ ou est un alcényle en C₃-C₁₂, un phénylalkyle en C₁-C₆ ou un alkyle en C₁-C₆-phényl-alkyle en C₁-C₆ ;
ou R₁ et R₃ forment ensemble avec l'atome de carbone auquel ils sont reliés un cycle cyclohexyle ;
R₂ étant un phényle lorsque R₁ et R₃ sont tous les deux un alcoxy ;
R₄ et R₄ₐ sont chacun indépendamment l'un de l'autre l'hydrogène, un alkyle en C₁-C₁₂, un hydroxyalkyle en C₁-C₁₂, OR₅, SR₆, NR₇R₈, un halogène, 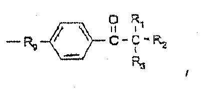 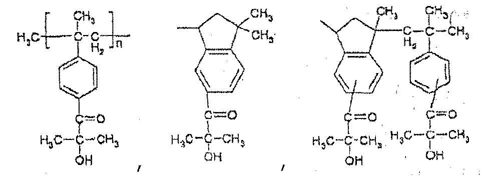 ou un radical siloxane monovalent linéaire ou ramifié ;
n est un nombre de 1 à 10 ;
R₅ et R₆ sont chacun indépendamment l'un de l'autre l'hydrogène, un alkyle en C₁-C₁₂, un alcényle en C₁-C₁₂, un phényle, un benzyle, si(CH₃)₃ ou -[CₐH₂ₐX]_{b}-R₁₀ ;
R₇ et R₈ sont chacun indépendamment l'un de l'autre l'hydrogène, un alkyle en C₁-C₁₂ ou un hydroxyalkyle en C₂-C₅, ou R₇ et R₈ forment ensemble avec l'atome N auquel ils sont reliés un cycle à 5 ou 6 éléments, qui peut également contenir des atomes O ou un groupe NR₁₁ ;
R₉ est une simple liaison, O, S, NR₁₁, -CH₂CH₂- ou 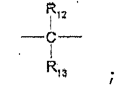
a et b sont chacun indépendamment l'un de l'autre un nombre de 1 à 12 ;
X est S, O ou NR₁₁ ;
R₁₀ est l'hydrogène, un alkyle en C₁-C₁₂ ou 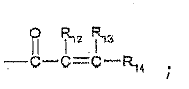
R₁₁ est l'hydrogène, un phényle, un phénylalkyle en C₁-C₄, un alkyle en C₁-C₁₂ ou un hydroxyalkyle en C₂-C₅ ; et R₁₂, R₁₃ et R₁₄ sont chacun indépendamment les uns des autres l'hydrogène ou un méthyle ; 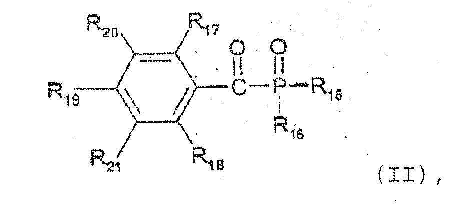 dans laquelle
R₁₅ et R₁₆ sont indépendamment l'un de l'autre un alkyle en C₁-C₁₂, un alcoxy en C₁-C₁₂ ; un phényle qui est non substitué ou substitué par un ou plusieurs substituants OR₂₂, SR₂₃, NR₂₄R₂₅, alkyle en C₁-C₁₂ ou halogène ; ou R₁₅ et R₁₆ sont un biphénylyle, un naphtyle, un phénylalkyle en C₁-C₄ ou 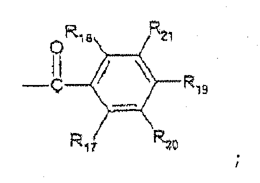
R₁₇ et R₁₈ sont chacun indépendamment l'un de l'autre un alkyle en C₁-C₁₂, un alcoxy en C₁-C₁₂, CF₃ ou un halogène ;
R₁₉, R₂₀ et R₂₁ sont chacun indépendamment les uns des autres l'hydrogène, un alkyle en C₁-C₁₂, un alcoxy en C₁-C₁₂, CF₃ ou un halogène ;
R₂₂, R₂₃, R₂₄ et R₂₅ sont chacun indépendamment les uns des autres l'hydrogène, un alkyle en C₁-C₁₂, un alcényle en C₂-C₁₂, un cycloalkyle en C₃-C₈, un phényle, un benzyle ou un alkyle en C₂-C₂₀ qui est interrompu par des atomes O et qui est non substitué ou substitué par OH et/ou SH ; ou R₂₄ et R₂₅ forment ensemble avec l'atome N auquel ils sont reliés un cycle à 5 ou 6 éléments, qui peut également contenir des atomes 0 ou S ou un groupe NR₂₆ ; et
R₂₆ est l'hydrogène, un phényle, un phénylalkyle en C₁-C₄, un alcoxy en C₁-C₁₂, un alkyle en C₁-C₁₂ ou un hydroxyalkyle en C₁-C₁₂ ; 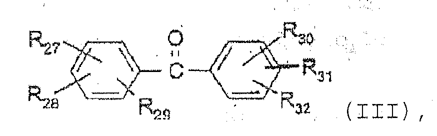 dans laquelle
R₂₇, R₂₈, R₂₉, R₃₀, R₃₁ et R₃₂ sont chacun indépendamment les uns des autres l'hydrogène, un alkyle en C₁-C₄, un phényle, un naphtyle, -OR₃₅, -SR₃₅, -(CO)O(alkyle en C₁-C₄), un halogène, NR₃₃R₃₄ ou un radical siloxane monovalent linéaire ou ramifié, ou R₂₉ et R₃₀, chacun en position o par rapport au groupe carbonyle, forment ensemble un atome S ; et
R₃₃ et R₃₄ sont chacun indépendamment l'un de l'autre l'hydrogène, un alkyle en C₁-C₄, un hydroxyalkyle en C₂-C₆, ou R₃₃ et R₃₄ forment ensemble avec l'atome N auquel ils sont reliés un cycle à 5 ou 6 éléments, qui peut également contenir des atomes O ou un groupe NR₁₁ ; et R₃₅ est un alkyle en C₁-C₁₂, un hydroxyalkyle en C₂-C₆ ou un phényle ; 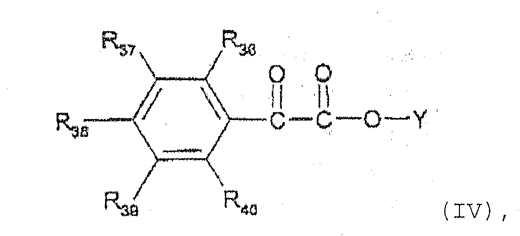 dans laquelle
R₃₆, R₃₇, R₃₈, R₃₉ et R₄₀ sont chacun indépendamment les uns des autres l'hydrogène, un alkyle en C₁-C₁₂ non substitué ou substitué par OH, un alcoxy en C₁-C₄, un phényle, un naphtyle, un halogène, CN et/ou par -OCOR₄₁, ou un alkyle en C₂-C₁₂ qui est interrompu par un ou plusieurs atomes O, ou R₃₆, R₃₇, R₃₈, R₃₉ et R₄₀ sont OR₄₂, SR₄₃, NR₄₄R₄₅, un halogène, un radical siloxane monovalent linéaire ou ramifié, ou un phényle non substitué ou substitué par un ou deux substituants alkyle en C₁-C₄ et/ou un ou deux substituants alcoxy en C₁-C₄, les substituants OR₄₂, SR₄₃, NR₄₄R₄₅ pouvant former des cycles à 5 ou 6 éléments par le biais des radicaux R₄₂, R₄₃, R₄₄ et/ou R₄₅ avec d'autres substituants sur le cycle phényle ou avec un des atomes de carbone du cycle phényle ;
R₄₁ est un alkyle en C₁-C₈ ou un phényle non substitué ou substitué par un à trois substituants alkyle en C₁-C₄ et/ou un à trois substituants alcoxy en C₁-C₄ ;
R₄₂ et R₄₃ sont chacun indépendamment l'un de l'autre l'hydrogène, un alkyle en C₁-C₁₂ non substitué ou substitué par OH, un alcoxy en C₁-C₄, un phényle, un phénoxy et/ou par -OCOR₄₁, ou un alkyle en C₂-C₁₂ qui est interrompu par un ou plusieurs atomes O, ou R₄₂ et R₄₃ sont un phényle non substitué ou substitué par un alcoxy en C₁-C₄, un phényle et/ou par un alkyle en C₁-C₄, ou R₄₂ et R₄₃ sont un alcényle en C₃-C₆, un cyclopentyle, un cyclohexyle ou un naphtyle ;
R₄₄ et R₄₅ sont chacun indépendamment l'un de l'autre l'hydrogène, un alkyle en C₁-C₁₂ non substitué ou substitué par OH, un alcoxy en C₁-C₄ et/ou par un phényle, ou un alkyle en C₂-C₁₂ qui est interrompu par un ou plusieurs atomes O, ou R₄₄ et R₄₅ sont un phényle, -COR₄₁ ou SO₂R₄₆, ou R₄₄ et R₄₅ forment ensemble avec l'atome d'azote auquel ils sont reliés un cycle à 5, 6 ou 7 éléments qui peut également être interrompu par - 0- ou -NR₄₇- ;
R₄₆ est un alkyle en C₁-C₁₂, un phényle ou un 4-méthylphényle ;
R₄₇ est l'hydrogène, un alkyle en C₁-C₈ non substitué ou substitué par OH ou par un alcoxy en C₁-C₄, ou est un phényle non substitué ou substitué par OH, un alkyle en C₁-C₄ ou par un alcoxy en C₁-C₄ ;
Y est 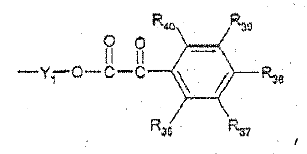 un alkyle en C₁-C₂₀, un phényle, un naphtyle, un phénylalkyle en C₁-C₄ ou un radical siloxane monovalent linéaire ou ramifié ;
Y₁ est un alkylène en C₁-C₁₂, un alcénylène en C₄-C₈, un alcynylène en C₁-C₈, un cyclohexylène, un alkylène en C₄-C₄₀ interrompu par un ou plusieurs -O-, -S- ou -NR₄₈-, ou est un phénylène, ou Y₁ est un groupe 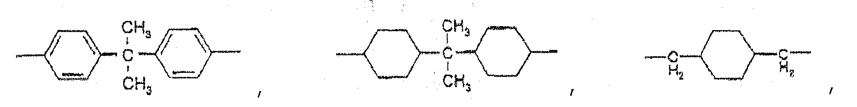 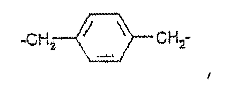 -OH₂CH(OH)OH₂O-Y₂-OCH₂CH(OH)CH₂-, -CH₂CH(OH)CH₂-, 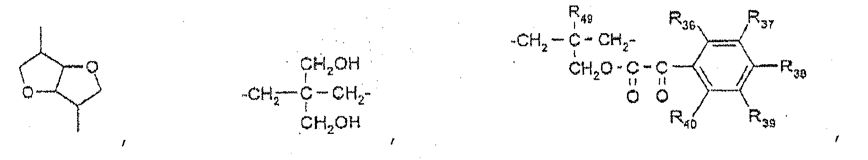 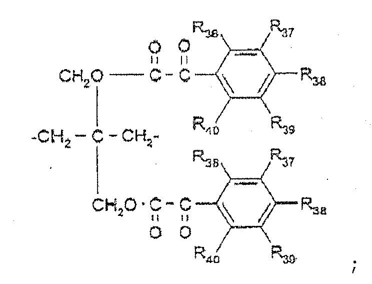 ou un radical siloxane bivalent linéaire ou ramifié ;
Y₂ a les mêmes définitions qu'Y₁, à l'exception de la formule
-CH₂CH(OH)CH₂O-Y₂-OCH₂CH(OH)CH₂- ;
R₄₈ est l'hydrogène, un alkyle en C₁-C₁₂ ou un phényle ; et
R₄₉ est l'hydrogène, CH₂OH ou un alkyle en C₁-C₄.

6. Procédé selon la revendication 4, dans lequel le composant (d) de la composition est au moins un composé de formule I et/ou II, notamment un mélange d'un composé de formule I et d'un composé de formule II.

7. Procédé selon la revendication 1 ou la revendication 2, dans lequel le composant (d) de la composition est au moins un composé de formule V, VI, VII et/ou VIIa 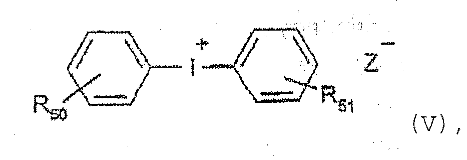 dans laquelle
R₅₀ et R₅₁ sont chacun indépendamment l'un de l'autre l'hydrogène, un alkyle en C₁-C₂₀, un alcoxy en C₁-C₂₀, un alcoxy en C₁-C₂₀ substitué par OH, un halogène, un alcényle en C₂-C₁₂, un cycloalkyle, notamment un méthyle, un isopropyle ou un isobutyle ; et
Z est un anion, notamment PF₆, SbF₆, AsF₆, BF₄, (C₆F₅)₄B, Cl, Br, HSO₄, CF₃-SO₃, F-SO₃, 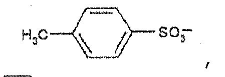 CH₃-SO₃, ClO₄, PO₄, NO₃, SO₄, CH₃-SO₄, 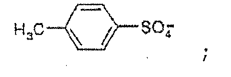 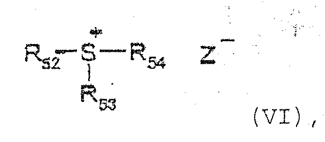 dans laquelle
R₅₂, R₅₃ et R₅₄ sont chacun indépendamment les uns des autres un phényle non substitué ou un phényle substitué par un -S-phényle ou par 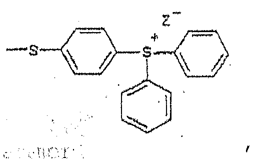
Z est tel que défini précédemment ; 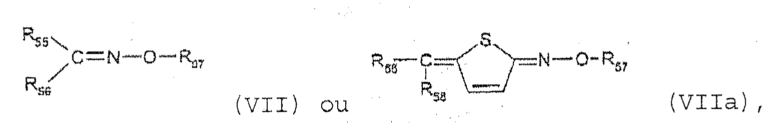 dans lesquelles
R₅₅ est 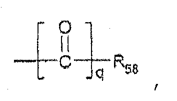 (CO)O-alkyle en C₁-C₄, CN ou halogénoalkyle en C₁-C₁₂ ;
R₅₆ a une des définitions données pour R₅₅ ou est 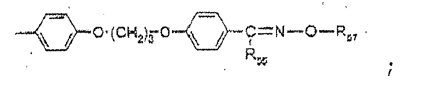
R₅₇ est un alkylsulfonyle en C₁-C₁₈, un halogénoalkylsulfonyle en C₁-C₁₀, un camphorylsulfonyle, un phénylalkylsulfonyle en C₁-C₃, un cycloalkylsulfonyle en C₃-C₃₀, un phénylsulfonyle, un naphtylsulfonyle, un anthracylsulfonyle ou un phénanthrylsulfonyle, les groupes cycloalkyle, phényle, naphtyle, anthracyle et phénanthryle des radicaux cycloalkylsulfonyle en C₃-C₃₀, phénylalkylsulfonyle en C₁-C₃, phénylsulfonyle, naphtylsulfonyle, anthracylsulfonyle et phénanthrylsulfonyle étant non substitués ou substitués par un ou plusieurs substituants halogène, halogénoalkyle en C₁-C₄, CN, NO₂, alkyle en C₁-C₁₆, phényle, alkylthio en C₁-C₄, alcoxy en C₁-C₄, phénoxy, alkyle en C₁-C₄-O(CO)-, alkyle en C₁-C₄-(CO)O-, R₆₇OSO₂- et/ou -NR₆₀R₆₁ ; ou
R₅₇ est un halogénoalcanoyle en C₂-C₆, un halogénobenzoyle, 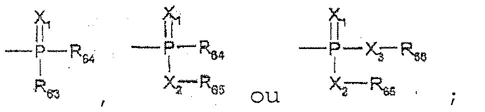
X₁, X₂ et X₃ sont chacun indépendamment les uns des autres O ou S ;
q est 0 ou 2 ; et
R₅₈ est un alkyle en C₁-C₁₂, un cyclohexyle, un camphoryle, un phényle non substitué ou un phényle substitué par un ou plusieurs substituants halogène, alkyle en C₁-C₁₂, OR₅₉, SR₅₉ ou NR₆₀R₆₁ ;
R₅₉ est un alkyle en C₁-C₁₂, un phényle, un phénylalkyle en C₁-C₄ ou un hydroxyalkyle en C₁-C₁₂ ;
R₆₀ et R₆₁ sont chacun indépendamment l'un de l'autre l'hydrogène, un alkyle en C₁-C₄, un hydroxyalkyle en C₂-C₆, ou R₆₀ et R₆₁ forment ensemble avec l'atome N auquel ils sont reliés un cycle à 5 ou 6 éléments, qui peut également contenir des atomes O ou un groupe NR₆₂ ;
R₆₂ est l'hydrogène, un phényle, un phénylalkyle en C₁-C₄, un alkyle en C₁-C₁₂ ou un hydroxyalkyle en C₂-C₅ ; R₆₃, R₆₄, R₆₅ et R₆₆ sont chacun indépendamment les uns des autres un alkyle en C₁-C₆, un halogénoalkyle en C₁-C₆ ; ou un phényle non substitué ou substitué par un alkyle en C₁-C₄ ou par un halogène ; et
R₆₇ est l'hydrogène, un alkyle en C₁-C₄, un phényle ou un tolyle.

8. Procédé selon la revendication 1 ou la revendication 2, dans lequel le composant (d) de la composition est au moins un composé de formule VIII 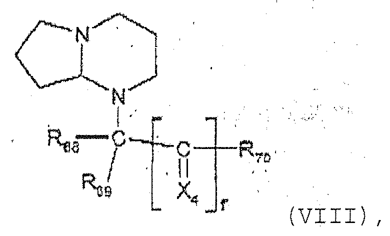 dans laquelle
r est 0 ou 1 ;
X₄ est CH₂ ou O ;
R₆₈ et R₆₉ sont chacun indépendamment l'un de l'autre l'hydrogène ou un alkyle en C₁-C₂₀ ; et
R₇₀ est un phényle, naphtyle ou biphénylyle non substitué ou substitué par un alkyle en C₁-C₁₂ ou un alcoxy en C₁-C₁₂.

9. Procédé selon la revendication 1 ou la revendication 2, dans lequel la composition comprend, en plus du composant photolatent (d), d'autres additifs (h), des composés sensibilisateurs (f) et/ou des colorants ou des pigments (g).

10. Procédé selon la revendication 1, dans lequel la composition comprend au moins un photostabilisateur et/ou au moins un composé absorbeur UV.

11. Procédé selon la revendication 1 ou la revendication 2, dans lequel la composition est un revêtement de surface.

12. Procédé selon la revendication 1 ou la revendication 2, dans lequel la composition est une encre d'impression.

13. Procédé selon la revendication 1 ou la revendication 2, dans lequel la composition comprend en tant que composant polymérisable uniquement des composés polymérisables par radicaux libres (a).

14. Procédé selon la revendication 13, dans lequel le composé polymérisable par radicaux libres comprend au moins un monomère d'acrylate mono-, di-, tri- ou tétra-fonctionnel et/ou au moins un oligomère à fonction acrylate mono-, di-, tri- ou tétra-fonctionnel.

15. Procédé selon la revendication 1 ou la revendication 2, dans lequel la composition comprend en tant que composant polymérisable uniquement des composés réticulables ou polymérisables par voie cationique (b).

16. Procédé selon la revendication 1 ou la revendication 2, dans lequel la composition comprend en tant que composant polymérisable un mélange d'au moins un composé polymérisable par radicaux libres (a) et d'au moins un composé polymérisable par voie cationique (b).

17. Substrat revêtu, qui est revêtu sur au moins une surface par le procédé selon la revendication 1 ou la revendication 2.

18. Revêtement pouvant être obtenu par un procédé selon la revendication 1 ou la revendication 2.

19. Procédé de fabrication de moulages à partir de matériaux composites, selon lequel un support est imprégné avec une composition comprenant
(a) au moins un composé polymérisable par radicaux libres, ou
(b) au moins un composé qui, sous l'action d'un acide, est capable de réagir selon une réaction de polymérisation, polycondensation ou polyaddition, ou
(c) au moins un composé qui, sous l'action d'une base, est capable de réagir selon une réaction de polymérisation, polycondensation ou polyaddition, ou
un mélange de composants (a) et (b), ou
un mélange de composants (a) et (c) ; et
(d) au moins un composé photolatent qui est activable par décharge plasma ;
et est introduit dans un moule ;
le durcissement étant réalisé dans une chambre de décharge plasma et un traitement thermique ultérieur étant éventuellement réalisé.
